# EUROPÄISCHE PATENTANMELDUNG

(11) **EP 0 708 150 A1**
(43) Veröffentlichungstag der Anmeldung: **24.04.1996**
(21) Anmeldenummer: 95810633.8
(22) Anmeldetag: 06.10.1995
(51) Int. Cl.: C09B 62/06, C09B 62/467

(54) **Faserreaktive Anthrachinonfarbstoffe, Verfahren zu deren Herstellung und deren Verwendung**

(30) Priorität: 14.10.1994 CH 3093/94
(71) Anmelder: CIBA-GEIGY AG, CH-4002 Basel (CH)
(72) Erfinder: Müller, Bernhard, Dr., D-79588 Efringen-Kirchen (DE)

(57) **Zusammenfassung**

Anthrachinonfarbstoffe der Formel 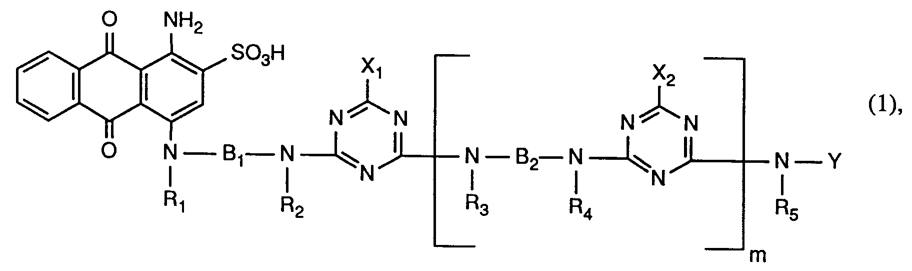 worin
R₁, R₂, R₃, R₄ und R₅ unabhängig voneinander Wasserstoff oder gegebenenfalls substituiertes C₁-C₁₂-Alkyl bedeuten,
X₁ und X₂ unabhängig voneinander Chlor oder Fluor sind,
B₁ ein gegebenenfalls durch Hydroxyl, Sulfo oder Sulfato substituierter und gegebenenfalls durch Sauerstoff unterbrochener C₂-C₁₂-Alkylenrest; oder
ein gegebenenfalls im Cyclohexylenring durch C₁-C₄-Alkyl substituierter Cyclohexylenrest, C₁-C₄-Alkylen-cyclohexylenrest, Cyclohexylen-C₁-C₄-alkylenrest, C₁-C₄-Alkylen-cyclohexylen-C₁-C₄-alkylenrest oder Cyclohexylen-methylen-cyclohexylenrest ist; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylenrest, Phenylen-C₁-C₄-alkylenrest oder C₁-C₄-Alkylen-phenylen-C₁-C₄-alkylenrest ist,
B₂ ein aromatisches Brückenglied ist,
Y Wasserstoff, gegebenenfalls substituiertes C₁-C₁₂-Alkyl oder ein Rest der Benzol- oder Naphthalinreihe ist, und
m die Zahl 0 oder 1 ist,
mit der Massgabe, dass, falls m die Zahl 0 ist, der Rest Y eine faserreaktive Gruppe der Formel 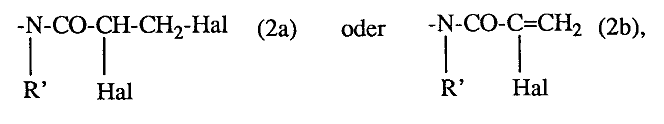 worin Hal Halogen und R' Wasserstoff oder C₁-C₄-Alkyl bedeutet, enthält, eignen sich besonders zum Färben oder Bedrucken von cellulosischen Fasermaterialien oder natürlichen oder synthetischen Polyamidfasermaterialien, bei hoher färberischer Ausbeute, und ergeben Färbungen und Drucke mit guten Echtheitseigenschaften.

## Beschreibung

Die vorliegende Erfindung betrifft neue faserreaktive Anthrachinonfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Anthrachinonfarbstoffe der Formel 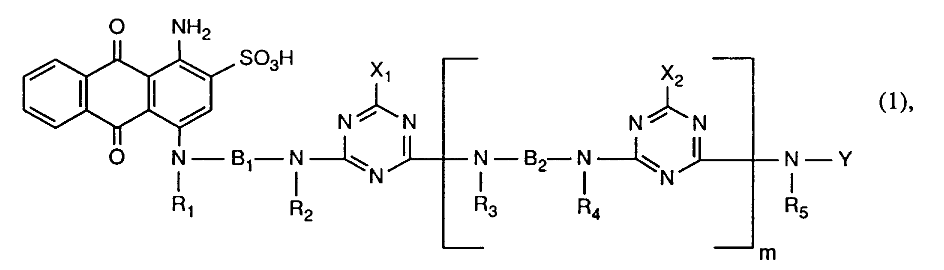
worin
R₁, R₂, R₃, R₄ und R₅ unabhängig voneinander Wasserstoff oder gegebenenfalls substituiertes C₁-C₁₂-Alkyl bedeuten,
X₁ und X₂ unabhängig voneinander Chlor oder Fluor sind,
B₁ ein gegebenenfalls durch Hydroxyl, Sulfo oder Sulfato substituierter und gegebenenfalls durch Sauerstoff unterbrochener C₂-C₁₂-Alkylenrest; oder
ein gegebenenfalls im Cyclohexylenring durch C₁-C₄-Alkyl substituierter Cyclohexylenrest, C₁-C₄-Alkylen-cyclohexylenrest, Cyclohexylen-C₁-C₄-alkylenrest, C₁-C₄-Alkylen-cyclohexylen-C₁-C₄-alkylenrest oder Cyclohexylen-methylen-cyclohexylenrest ist; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylenrest, Phenylen-C₁-C₄-alkylenrest oder C₁-C₄-Alkylen-phenylen-C₁-C₄-alkylenrest ist,
B₂ ein aromatisches Brückenglied ist,
Y Wasserstoff, gegebenenfalls substituiertes C₁-C₁₂-Alkyl oder ein Rest der Benzol- oder Naphthalinreihe ist, und
m die Zahl 0 oder 1 ist,
mit der Massgabe, dass, falls m die Zahl 0 ist, der Rest Y eine faserreaktive Gruppe der Formel 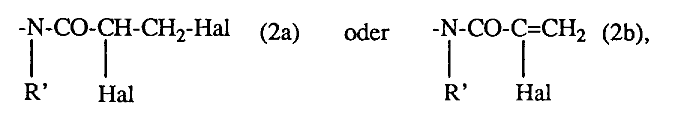 worin Hal Halogen und R' Wasserstoff oder C₁-C₄-Alkyl bedeutet, enthält.

Als C₁-C₁₂-Alkylreste kommen für R₁, R₂, R₃, R₄, R₅ und Y vorzugsweise C₁-C₁₀-Alkylreste, insbesondere C₁-C₈-Alkylreste, in Betracht. Die genannten Alkylreste können mit Ausnahme von Methyl z.B. durch Sauerstoff, vorzugsweise durch 1, 2 oder 3 Glieder -O-, insbesondere durch 1 oder 2 Glieder -O-, unterbrochen sein. Weiterhin können die genannten Alkylreste unsubstituiert oder beispielsweise durch Hydroxyl, Sulfo oder Sulfato, vorzugsweise durch Hydroxyl oder Sulfo, insbesondere durch Hydroxyl, substituiert sein. Der Rest Y kann in der Bedeutung als Alkyl weiterhin durch den Rest eines Anthrachinonfarbstoffes substituiert sein, wie z.B. durch einen Rest der 1,4-Diaminoanthrachinon-2-sulfonsäure, welcher über die in 4-Stellung enthaltene Aminogruppe gebunden ist.

Als C₂-C₁₂-Alkylenreste kommen für B₁ vorzugsweise C₂-C₁₀-Alkylenreste, insbesondere C₂-C₈-Alkylenreste, in Betracht. Von besonderem Interesse sind C₂-C₆-Alkylenreste. Die genannten Akylenreste können z.B. durch Sauerstoff, vorzugsweise durch 1, 2 oder 3 Glieder -O-, insbesondere durch 1 oder 2 Glieder -O-, unterbrochen sein. Weiterhin können die genannten Alkylenreste unsubstituiert oder durch Hydroxyl, Sulfo oder Sulfato, vorzugsweise durch Hydroxyl oder Sulfo, insbesondere durch Hydroxyl, substituiert sein. Vorzugsweise sind die genannten Alkylenreste unsubstituiert. Als Beispiele für solche Alkylenreste seien -(CH₂)₆-, -(CH₂)₂-O-(CH₂)₂-O-(CH₂)₂-, -(CH₂)₃-O-(CH₂)₄-O-(CH₂)₃-, -CH₂-CH₂-CH(C₂H₅)-, -(CH₂)₃-CH(CH₃)-CH₂- und insbesondere -(CH₂)₃- und -CH₂-C(CH₃)₂-CH₂- genannt.

Als Substituenten der für B₁ genannten Cyclohexylenreste kommen insbesondere Methyl oder Aethyl, vorzugsweise Methyl, in Betracht. Falls in solchen Brückengliedern B₁ der Cyclohexylenrest mit einem C₁-C₄-Alkylenrest verbunden ist, so handelt es sich bei diesem C₁-C₄-Alkylenrest vorzugsweise um einen Methylenrest.

Die für B₁ genannten C₁-C₄-Alkylen-phenylenreste, Phenylen-C₁-C₄-alkylenreste und C₁-C₄-Alkylen-phenylen-C₁-C₄-alkylenreste können in den Phenylenringen unsubstituiert oder beispielsweise durch C₁-C₄-Alkyl, wie Methyl, Äthyl, Propyl, Isopropyl, Butyl, sek.-Butyl, tert.-Butyl oder Isobutyl, insbesondere Methyl, C₁-C₄-Alkoxy, wie Methoxy, Äthoxy, Propoxy, Isopropoxy, Butoxy oder Isobutoxy, insbesondere Methoxy, C₂-C₄-Alkanoylamino, wie z.B. Acetylamino oder Propionylamino, Halogen, wie z.B. Fluor, Chlor oder Brom, insbesondere Chlor, Sulfo oder Carboxy substituiert sein, vorzugsweise sind sie unsubstituiert oder durch C₁-C₄-Alkyl, C₁-C₄-Alkoxy, Halogen oder Sulfo substituiert. Von besonderem Interesse sind die entsprechenden unsubstituierten Reste. Bei den in solchen Brückengliedern B₁ vorhandenen C₁-C₄-Alkylenresten handelt es sich vorzugsweise um Methylenreste. Von besonderer Bedeutung sind hierbei C₁-C₄-Alkylen-phenylen-C₁-C₄-alkylenreste, insbesondere Methylen-phenylen-methylenreste.

Als aromatisches Brückenglied B₂ kommen z.B. Phenylen oder Naphthylen in Betracht, welche unsubstituiert oder beispielsweise durch C₁-C₄-Alkyl, wie Methyl, Äthyl, Propyl, Isopropyl, Butyl, sek.-Butyl, tert.-Butyl oder Isobutyl, insbesondere Methyl, C₁-C₄-Alkoxy, wie Methoxy, Äthoxy, Propoxy, Isopropoxy, Butoxy oder Isobutoxy, insbesondere Methoxy, C₂-C₄-Alkanoylamino, wie z.B. Acetylamino oder Propionylamino, Halogen, wie z.B. Fluor, Chlor oder Brom, insbesondere Chlor, Sulfo oder Carboxy substituiert sein können. Vorzugsweise sind die Phenylen- und Naphthylenreste unsubstituiert oder durch C₁-C₄-Alkyl, C₁-C₄-Alkoxy, Halogen oder Sulfo substituiert. Von besonderem Interesse sind hierbei die Phenylenreste, insbesondere durch Sulfo substituierte Phenylenreste.

Die für Y genannten Phenyl- und Naphthylreste können unsubstituiert oder z.B. wie oben für B₂ angegeben substituiert sein. Weiterhin können die für Y genannten Phenyl- und Naphthylreste durch eine faserreaktive Gruppe substituiert sein.

Als Beispiele für solche faserreaktiven Gruppen seien die der Formeln

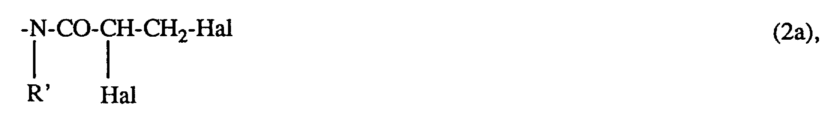

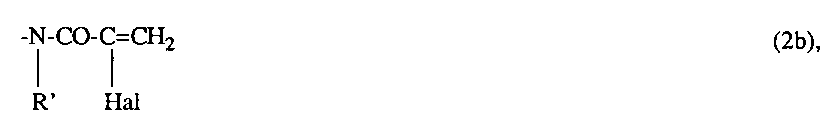

-SO₂-Z (2c),

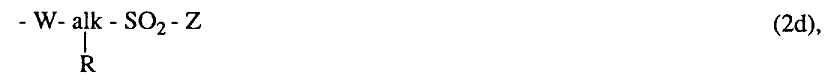

-W-alk-E-alk'-SO₂-Z (2e),

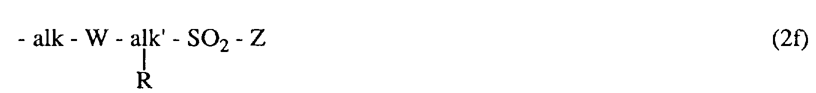

und 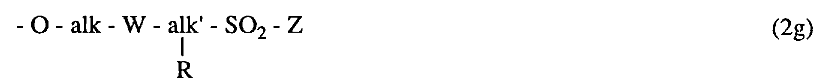 genannt, worin W eine Gruppe der Formel -SO₂-NR₆-, -CONR₆- oder -NR₆CO- ist,
R₆ Wasserstoff, unsubstituiertes oder durch Hydroxy, Sulfo, Sulfato, Carboxy oder Cyano substituiertes C₁-C₄-Alkyl,
R Wasserstoff, Hydroxy, Sulfo, Sulfato, Carboxy, Cyano, Halogen, C₁-C₄-Alkoxycarbonyl, C₁-C₄-Alkanoyloxy oder Carbamoyl ist,
R' Wasserstoff oder C₁-C₄-Alkyl bedeutet,
Z eine Gruppe der Formel -CH=CH₂ oder -CH₂-CH₂-U₁ und U₁ eine Abgangsgruppe ist,
Hal Halogen bedeutet,
E der Rest -O- oder -NR₇- und R₇ Wasserstoff oder C₁-C₄-Alkyl ist, und
alk und alk' unabhängig voneinander C₁-C₆-Alkylen bedeuten.

Geeignete Abgangsgruppen U₁ sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist U₁ eine Gruppe der Formel -Cl, -OSO₃H, -SSO₃H, -OCO-CH₃, -OCO-C₆H₅ oder -OPO₃H₂, insbesondere -Cl oder -OSO₃H, vorzugsweise -OSO₃H.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' für einen C₁-C₄-Alkylenrest und insbesondere bevorzugt für einen Äthylenrest.

R bedeutet bevorzugt Wasserstoff.

R' bedeutet bevorzugt Wasserstoff.

R₆ ist vorzugsweise Wasserstoff oder C₁-C₄-Alkyl, wie Methyl, Aethyl, Propyl, Isopropyl, Butyl, Isobutyl, sek.-Butyl oder tert.-Butyl. Besonders bevorzugt ist R₆ Wasserstoff.

E steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

Hal im Rest der Formeln (2a) und (2b) ist vorzugsweise Chlor oder insbesondere Brom.

Bevorzugt als Reaktivreste der Formeln (2a) bis (2g) sind solche, worin W eine Gruppe der Formel -CONH- oder -NHCO-, insbesondere eine Gruppe der Formel -CONH-, ist, R Wasserstoff, E der Rest -O- oder -NH-, Hal Chlor oder Brom und U₁ eine Gruppe der Formel -Cl, -OSO₃H, -SSO₃H, -OCO-CH₃, -OCO-C₆H₅ oder -OPO₃H₂, insbesondere eine Gruppe der Formel -Cl oder -OSO₃H, ist. R' ist bevorzugt Wasserstoff.

Besonders bevorzugt sind Reaktivreste der Formeln (2a) bis (2d), wobei für Hal, Z, W, R und R' die oben angegebenen Bedeutungen und Bevorzugungen gelten.

R₁, R₂, R₃ und R₄ sind bevorzugt Wasserstoff oder C₁-C₄-Alkyl, insbesondere Wasserstoff.

R₅ ist bevorzugt Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl, vorzugsweise Wasserstoff oder gegebenenfalls durch Hydroxyl substituiertes C₁-C₄-Alkyl und insbesondere Wasserstoff.

Besonders bevorzugt bedeuten R₁, R₂, R₃ und R₄ Wasserstoff oder C₁-C₄-Alkyl, insbesondere Wasserstoff, und R₅ bedeutet Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl, insbesondere Wasserstoff oder gegebenenfalls durch Hydroxyl substituiertes C₁-C₄-Alkyl und vorzugsweise Wasserstoff.

B₁ ist bevorzugt gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest, Cyclohexylen-methylenrest oder Cyclohexylen-methylen-cyclohexylenrest ist; oder
ein gegebenenfalls im Phenylenring durch C₁-C₄-Alkyl, C₁-C₄-Alkoxy, Halogen oder Sulfo substituierter Methylen-phenylen-methylenrest.

Besonders bevorzugt ist B₁ gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest oder Cyclohexylen-methylenrest; oder ein Methylen-phenylen-methylenrest.

Als Brückenglied B₁ sind die entsprechenden Alkylenreste von besonderem Interesse. Ganz besonders bevorzugt ist B₁ C₂-C₆-Alkylen, insbesondere ein Rest der Formel -(CH₂)₃- oder vorzugsweise ein Rest der Formel -CH₂-C(CH₃)₂-CH₂-.

B₂ ist bevorzugt gegebenenfalls durch C₁-C₄-Alkyl, C₁-C₄-Alkoxy, C₂-C₄-Alkanoylamino, Halogen, Carboxy oder Sulfo substituiertes Naphthylen oder vorzugsweise Phenylen.

Besonders bevorzugt ist B₂ gegebenenfalls durch C₁-C₄-Alkyl, C₁-C₄-Alkoxy, Halogen oder Sulfo substituiertes Phenylen, vorzugsweise durch Sulfo substituiertes Phenylen.

Bevorzugt sind als Anthrachinonfarbstoffe der Formel (1), worin m die Zahl 1 ist, solche, worin Y Wasserstoff, gegebenenfalls durch Hydroxyl, Sulfo oder Sulfato substituiertes und mit Ausnahme von Methyl gegebenenfalls durch Sauerstoff unterbrochenes C₁-C₁₂-Alkyl; oder
Y Phenyl oder Naphthyl ist, wobei die Phenyl- und Naphthylreste durch C₁-C₄-Alkyl, C₁-C₄-Alkoxy, C₂-C₄-Alkanoylamino, Halogen, Carboxy oder Sulfo oder eine der faserreaktiven Gruppen der Formeln (2a) bis (2g), insbesondere der Formeln (2a) bis (2d), substituiert sein können; oder
Y ein Anthrachinonrest der Formel 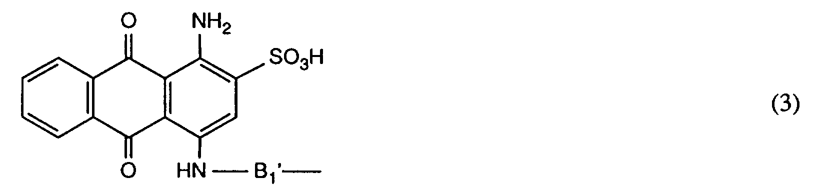 ist, wobei für B₁' die oben für B₁ angegebenen Bedeutungen und Bevorzugungen gelten.

Vorzugsweise bedeutet hierbei Y Wasserstoff, gegebenenfalls durch Hydroxyl, Sulfo oder Sulfato substituiertes und mit Ausnahme von Methyl gegebenenfalls durch Sauerstoff unterbrochenes C₁-C₈-Alkyl; oder
einen Anthrachinonrest der Formel (3); oder
durch Sulfo substituiertes Naphthyl; oder
Phenyl, welches durch C₁-C₄-Alkyl, C₁-C₄-Alkoxy, Halogen oder Sulfo oder einen faserreaktiven Rest der Formeln (2a), (2b), (2c) oder (2d) substituiert sein kann, wobei W eine Gruppe der Formel -CO-NH-, R Wasserstoff, R' vorzugsweise Wasserstoff und U₁ Sulfato oder Chlor ist. Von besonderem Interesse sind für Y die entsprechenden Phenylreste.

Besonders bevorzugt sind als Anthrachinonfarbstoffe der Formel (1), worin m die Zahl 1 ist, solche, worin
R₁, R₂, R₃ und R₄ Wasserstoff oder C₁-C₄-Alkyl, insbesondere Wasserstoff, sind,
R₅ Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl, insbesondere Wasserstoff oder gegebenenfalls durch Hydroxyl substituiertes und mit Ausnahme von Methyl gegebenenfalls durch Sauerstoff unterbrochenes C₁-C₈-Alkyl, vorzugsweise Wasserstoff, ist,
B₁ gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest, Cyclohexylen-methylenrest oder Cyclohexylen-methylen-cyclohexylenrest ist; oder
ein gegebenenfalls im Phenylenring durch C₁-C₄-Alkyl, C₁-C₄-Alkoxy, Halogen oder Sulfo substituierter Methylen-phenylen-methylenrest ist,
B₂ gegebenenfalls durch C₁-C₄-Alkyl, C₁-C₄-Alkoxy, Halogen oder Sulfo substituiertes Phenylen ist, und
Y Wasserstoff, gegebenenfalls durch Hydroxyl, Sulfo oder Sulfato substituiertes und mit Ausnahme von Methyl gegebenenfalls durch Sauerstoff unterbrochenes C₁-C₈-Alkyl; oder
ein Anthrachinonrest der Formel (3); oder
durch Sulfo substituiertes Naphthyl; oder
Phenyl ist, welches durch C₁-C₄-Alkyl, C₁-C₄-Alkoxy, Halogen oder Sulfo oder einen faserreaktiven Rest der Formeln (2a), (2b), (2c) oder (2d) substituiert sein kann, wobei W eine Gruppe der Formel -CO-NH-, R Wasserstoff und U₁ Sulfato oder Chlor ist. Von besonderem Interesse sind hierbei Anthrachinonfarbstoffe, worin B₁ C₂-C₆-Alkylen und
B₂ durch Sulfo substituiertes Phenylen ist. R' ist bevorzugt Wasserstoff.

Bevorzugt sind als Anthrachinonfarbstoffe der Formel (1), worin m die Zahl 0 ist, solche, worin
Y gegebenenfalls durch C₁-C₄-Alkyl, C₁-C₄-Alkoxy, C₂-C₄-Alkanoylamino, Halogen, Carboxy oder Sulfo substituiertes Phenyl oder Naphthyl ist, wobei die Phenyl- und Naphthylreste mindestens eine der faserreaktiven Gruppen der Formeln (2a) und (2b) enthalten.

Besonders bevorzugt sind als Anthrachinonfarbstoffe der Formel (1), worin m die Zahl 0 ist, solche, worin
R₁, R₂, R₃ und R₄ Wasserstoff oder C₁-C₄-Alkyl, insbesondere Wasserstoff, sind,
R₅ Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl, insbesondere Wasserstoff oder gegebenenfalls durch Hydroxyl substituiertes und mit Ausnahme von Methyl gegebenenfalls durch Sauerstoff unterbrochenes C₁-C₈-Alkyl, vorzugsweise Wasserstoff, ist,
B₁ gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest, Cyclohexylen-methylenrest oder Cyclohexylen-methylen-cyclohexylenrest ist; oder
ein gegebenenfalls im Phenylenring durch C₁-C₄-Alkyl, C₁-C₄-Alkoxy, Halogen oder Sulfo substituierter Methylen-phenylen-methylenrest ist,
B₂ gegebenenfalls durch C₁-C₄-Alkyl, C₁-C₄-Alkoxy, Halogen oder Sulfo substituiertes Phenylen ist, und
Y gegebenenfalls durch C₁-C₄-Alkyl, C₁-C₄-Alkoxy, Halogen oder Sulfo substituiertes Phenyl ist, wobei der Phenylrest mindestens eine der faserreaktiven Gruppen der Formeln (2a) und (2b) enthält. Von besonderem Interesse sind hierbei Anthrachinonfarbstoffe, worin B₁ C₂-C₆-Alkylen und B₂ durch Sulfo substituiertes Phenylen ist.

Gegenstand der vorliegenden Erfindung ist ferner ein Verfahren zur Herstellung von Anthrachinonfarbstoffen der Formel (1), welches dadurch gekennzeichnet ist, dass man Verbindungen der Formeln

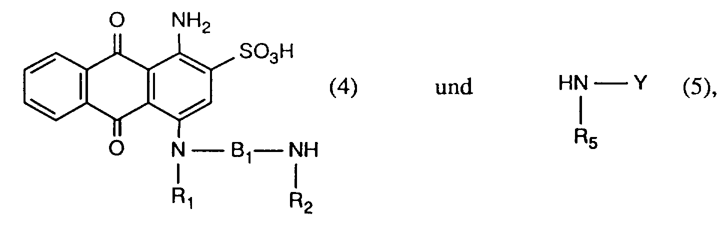

Cyanurfluorid oder Cyanurchlorid und gegebenenfalls eine Verbindung der Formel 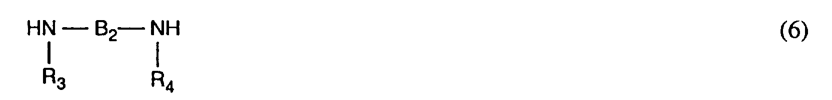 miteinander umsetzt und gegebenenfalls eine Umwandlungsreaktion anschliesst, wobei für R₁, R₂, R₃, R₄, R₅, B₁, B₂ und Y die oben angegebenen Bedeutungen und Bevorzugungen gelten.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

So wird z.B. zur Herstellung von Anthrachinonfarbstoffen der Formel (1), worin m die Zahl 0 ist, eine Verbindung der Formel (5) mit Cyanurfluorid oder Cyanurchlorid umgesetzt und das erhaltene Produkt anschliessend mit der Verbindung der Formel (4) kondensiert.

Eine Verfahrensvariante zur Herstellung von Anthrachinonfarbstoffen der Formel (1), worin m die Zahl 1 ist, besteht darin, dass man eine Verbindung der Formel (5) mit Cyanurfluorid oder Cyanurchlorid umsetzt, das erhaltene Produkt anschliessend mit der Verbindung der Formel (6) umsetzt, mit Cyanurfluorid oder Cyanurchlorid kondensiert und anschliessend das erhaltene Produkt mit der Verbindung der Formel (4) kondensiert.

Eine weitere Verfahrensvariante zur Herstellung von Anthrachinonfarbstoffen der Formel (1), worin m die Zahl 1 ist, besteht darin, dass man eine Verbindung der Formel (6) mit Cyanurfluorid oder Cyanurchlorid umsetzt und das erhaltene Produkt anschliessend mit der Verbindung der Formel (4) kondensiert. Das so erhaltene Produkt wird dann mit dem Kondensationsprodukt aus der Verbindung der Formel (5) und Cyanurfluorid oder Cyanurchlorid umgesetzt.

Ausserdem können als Umwandlungsreaktionen Eliminierungsreaktionen an die Synthese angeschlossen werden. Beispielsweise kann man Anthrachinonfarbstoffe der Formel (1), welche Sulfatoäthylsulfonylreste oder α,β-Dihalogenpropionylaminoreste enthalten, mit einer Base, wie z.B. Natriumhydroxid, behandeln, wobei die Sulfatoäthylsulfonylreste in Vinylsulfonylreste bzw. die α,β-Dihalogenpropionylaminoreste in α-Halogenacryloylaminoreste übergehen.

Grundsätzlich lassen sich die Anthrachinonfarbstoffe der Formel (1) herstellen, indem man von Vorprodukten oder Zwischenprodukten für Farbstoffe, die faserreaktive Reste enthalten, ausgeht, oder diese faserreaktiven Reste in hierfür geeignete Zwischenprodukte mit Farbstoffcharakter einführt.

Die Verbindungen der Formeln (4), (5) und (6) sind bekannt oder können in Analogie zu bekannten Verbindungen erhalten werden.

Die einzelnen Kondensationsreaktionen erfolgen z.B. gemäss an sich bekannter Verfahren, in der Regel in wässriger Lösung, bei einer Temperatur von beispielsweise 0 bis 50°C, insbesondere 0 bis 10°C, und einem pH-Wert von z.B. 4 bis 10.

Die erfindungsgemässen Farbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien, insbesondere von Wolle oder synthetischen Polyamidfasermaterialien, verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 17 Teilen 2-Aminobenzolsulfonsäure in 170 Teilen Wasser. Hierbei wird der pH durch Zugabe von Natronlauge konstant bei einem Wert von 4,5 gehalten. Nach beendeter Reaktion tropft man eine Lösung von 19 Teilen 2,4-Diaminobenzolsulfonsäure, mit Natronlauge neutral gelöst in 190 Teilen Wasser, zu, wobei der pH durch Zugabe von Natronlauge konstant bei einem Wert von 7 gehalten wird. Lässt sich dünnschichtchromatographisch kein Edukt mehr nachweisen, so wird die Lösung zu einer auf eine Temperatur von 0°C abgekühlten, mit 5 Teilen Dinatriumhydrogenphosphat gepufferten Anschlämmung von 19 Teilen Cyanurchlorid in 50 Teilen Wasser getropft, wobei der pH durch Zugabe von Natronlauge bis zur vollständigen Kondensation bei einem Wert von 7 gehalten wird.

Zu der so erhaltenen Lösung tropft man eine weitere Lösung von 38 Teilen 1-Amino-4-(3-aminopropyl)-anthrachinon-2-sulfonsäure, gelöst mit 4 Teilen Lithiumhydroxidmonohydrat in 380 Teilen Wasser, derart zu, dass der pH einen Wert von 10 nicht überschreitet. Anschliessend wird bis zum Ende der Reaktion der pH bei einem Wert von 9,5 gehalten. Nach Neutralisation wird entstandenes Kochsalz dialytisch entfernt und die Farbstofflösung im Vakuum eingedampft. Man erhält einen Farbstoff, der in Form der freien Säure der Verbindung der Formel 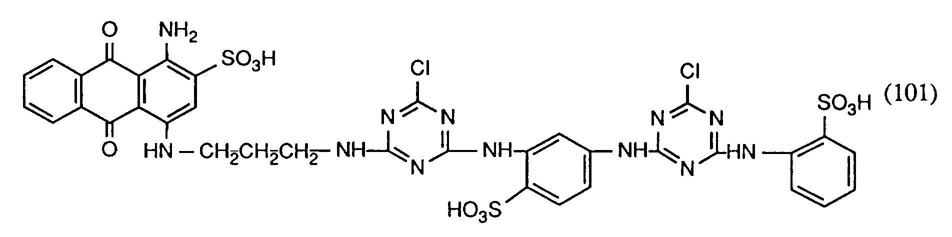 entspricht. Der Farbstoff der Formel (101) färbt Baumwolle und Wolle in blauen Farbtönen.

### Beispiel 2:

In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 19 Teilen 2,4-Diaminobenzolsulfonsäure in 190 Teilen Wasser. Hierbei wird der pH durch Zugabe von Natronlauge konstant bei einem Wert von 4,5 gehalten. Die erhaltene Lösung tropft man in eine Lösung von 38 Teilen 1-Amino-4-(3-aminopropyl)-anthrachinon-2-sulfonsäure, gelöst mit 4 Teilen Lithiumhydroxidmonohydrat in 380 Teilen Wasser, derart zu, dass der pH einen Wert von 10 nicht überschreitet. Anschliessend wird bis zum Ende der Reaktion der pH bei einem Wert von 9,5 gehalten (Lösung 1).

In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 17 Teilen 2-Aminobenzolsulfonsäure in 170 Teilen Wasser. Hierbei wird der pH durch Zugabe von Natronlauge konstant bei einem Wert von 4,5 gehalten. In diese Lösung wird die wie oben angegeben erhältliche Lösung 1 so zugetropft, dass der pH einen Wert von 7 nicht überschreitet. Der pH wird dann bis zum Ende der Reaktion bei einem Wert von 7 gehalten. Entstandenes Kochsalz wird dialytisch entfernt und die Farbstofflösung wird im Vakuum eingedampft. Man erhält einen Farbstoff, der in Form der freien Säure der Verbindung der Formel 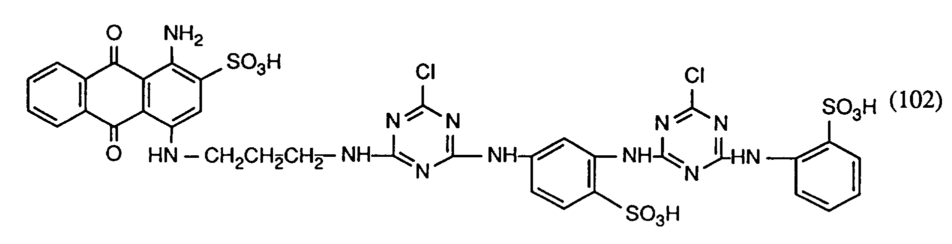 entspricht. Der Farbstoff der Formel (102) färbt Baumwolle und Wolle in blauen Farbtönen.

### Beispiele 3 bis 305:

Verfährt man wie in Beispiel 1 angegeben, oder verfährt man wie in Beispiel 2 angegeben, verwendet jedoch anstelle von 17 Teilen 2-Aminobenzolsulfonsäure eine äquimolare Menge eines Amins der Formel H-V₁, und
anstelle von 38 Teilen 1-Amino-4-(3-aminopropyl)-anthrachinon-2-sulfonsäure eine äquimolare Menge einer Anthrachinonverbindung der Formel 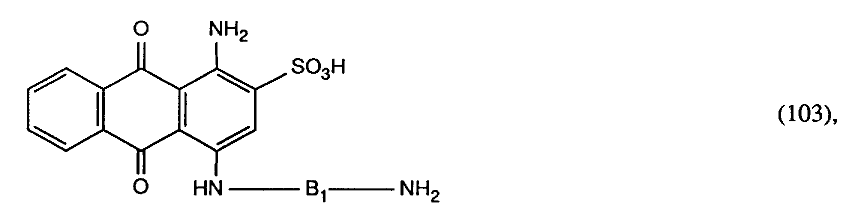 so erhält man die in der folgenden Tabelle 1 angegebenen Farbstoffe der allgemeinen Formel 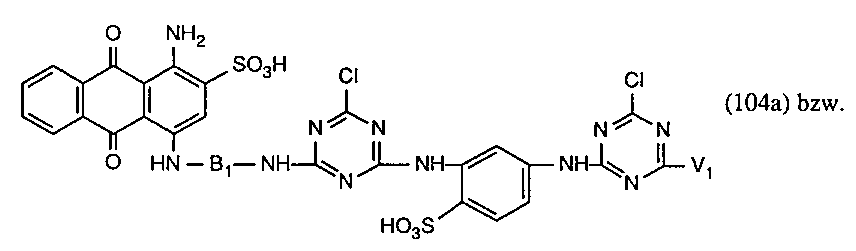 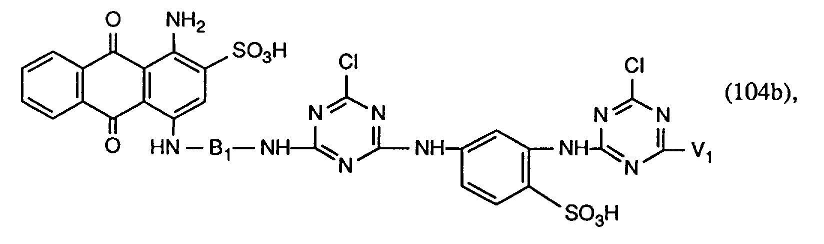 wobei B₁ und V₁ jeweils die in der folgenden Tabelle 1 angegebenen Bedeutungen haben. Die in Tabelle 1 angegebenen Farbstoffe färben Baumwolle und Wolle in blauen Farbtönen.

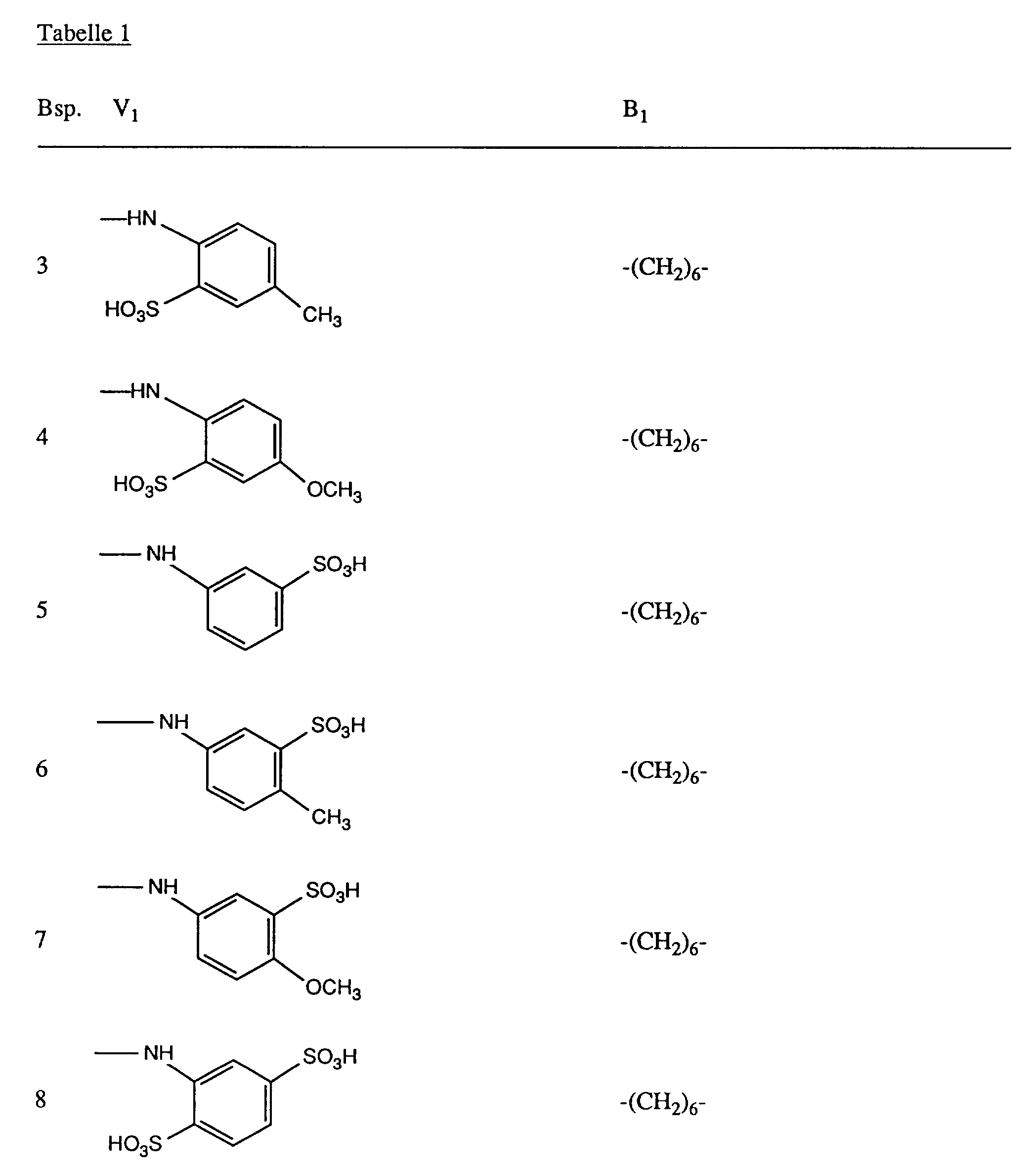

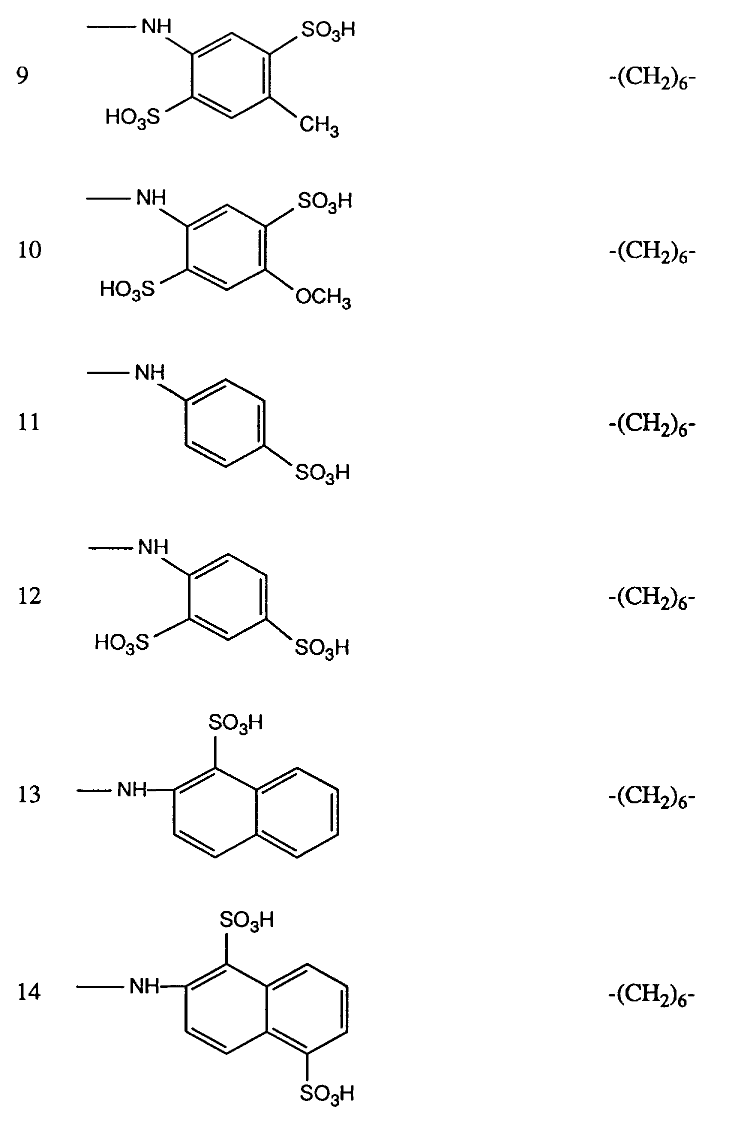

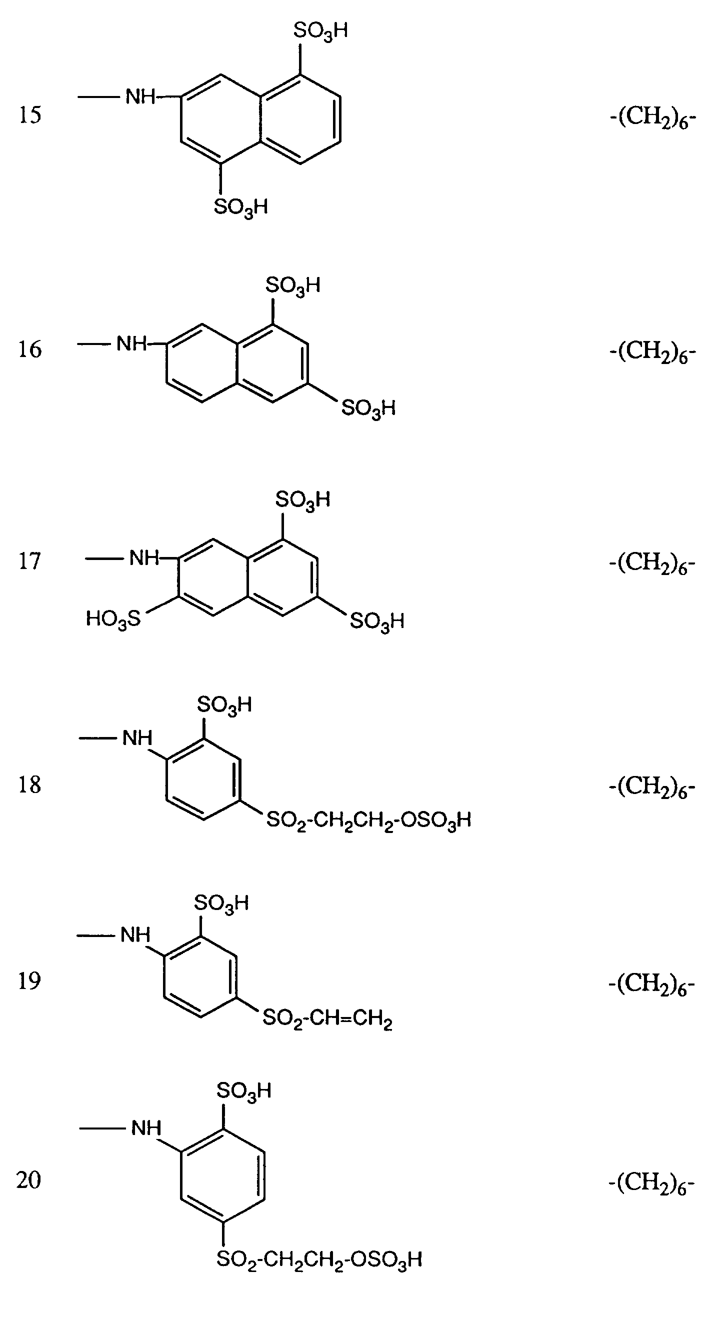

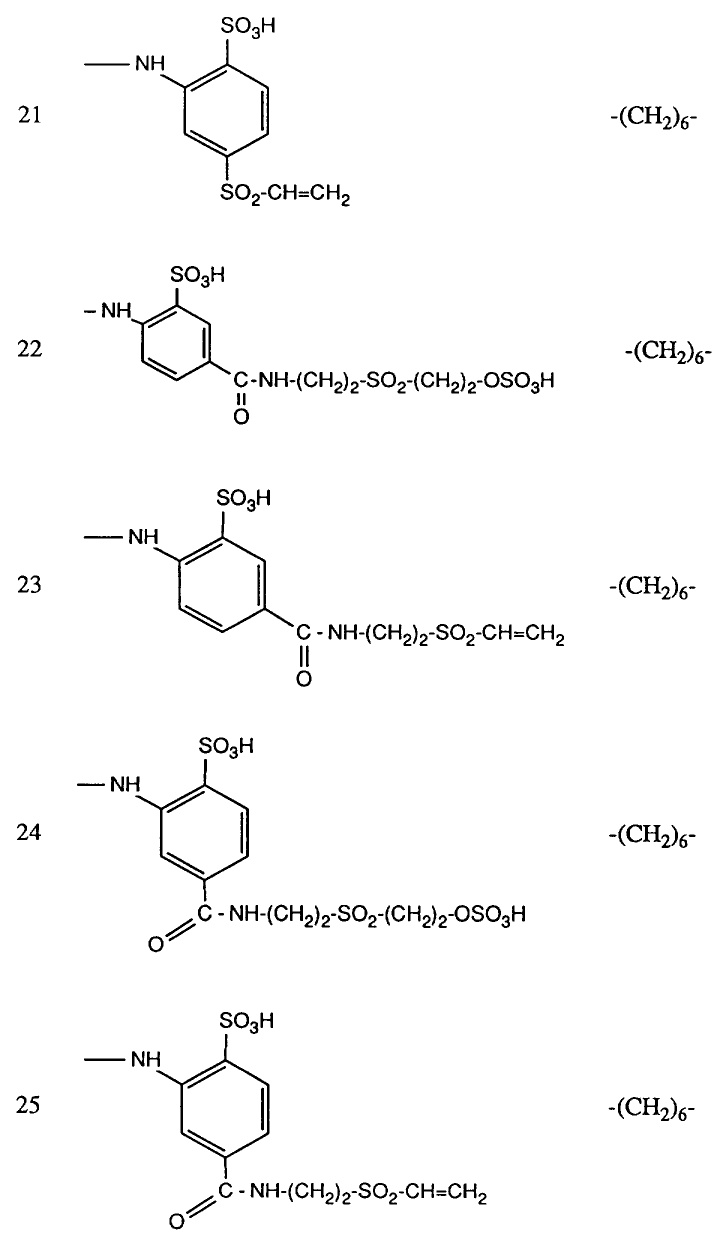

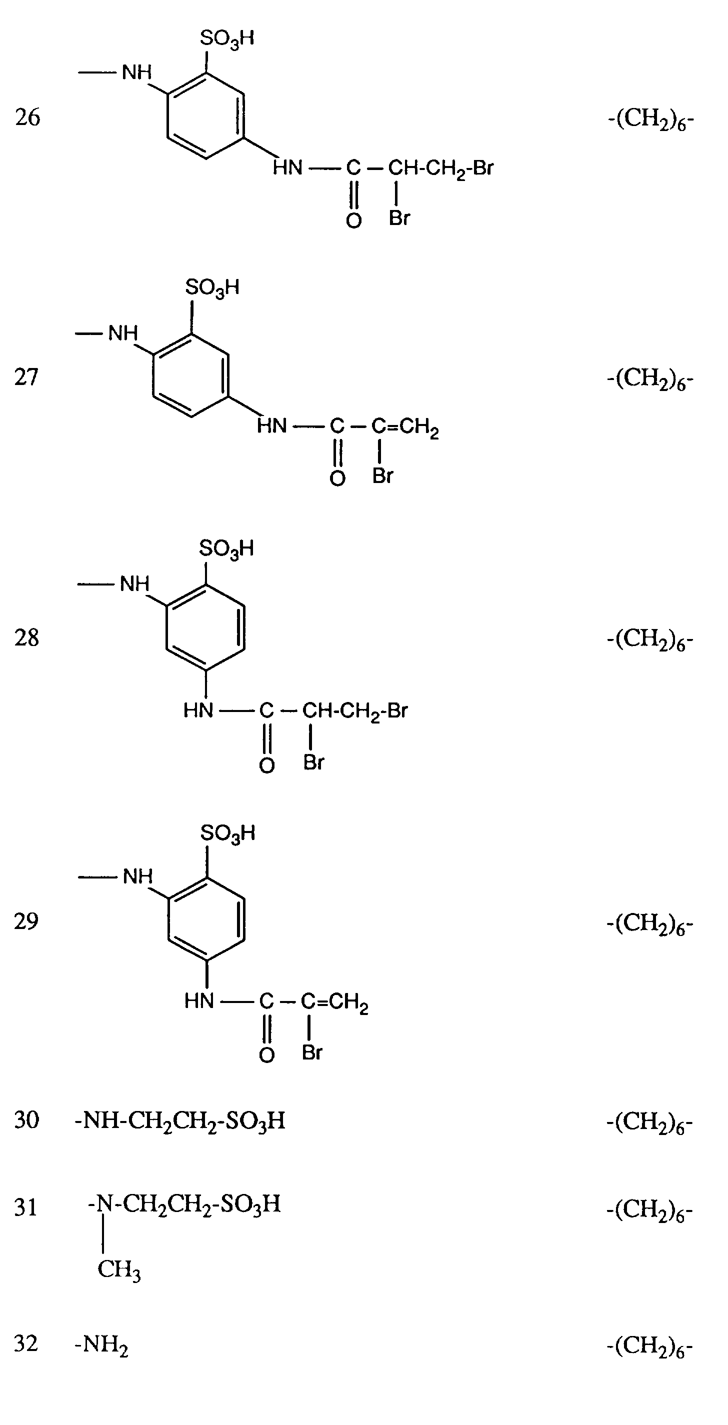

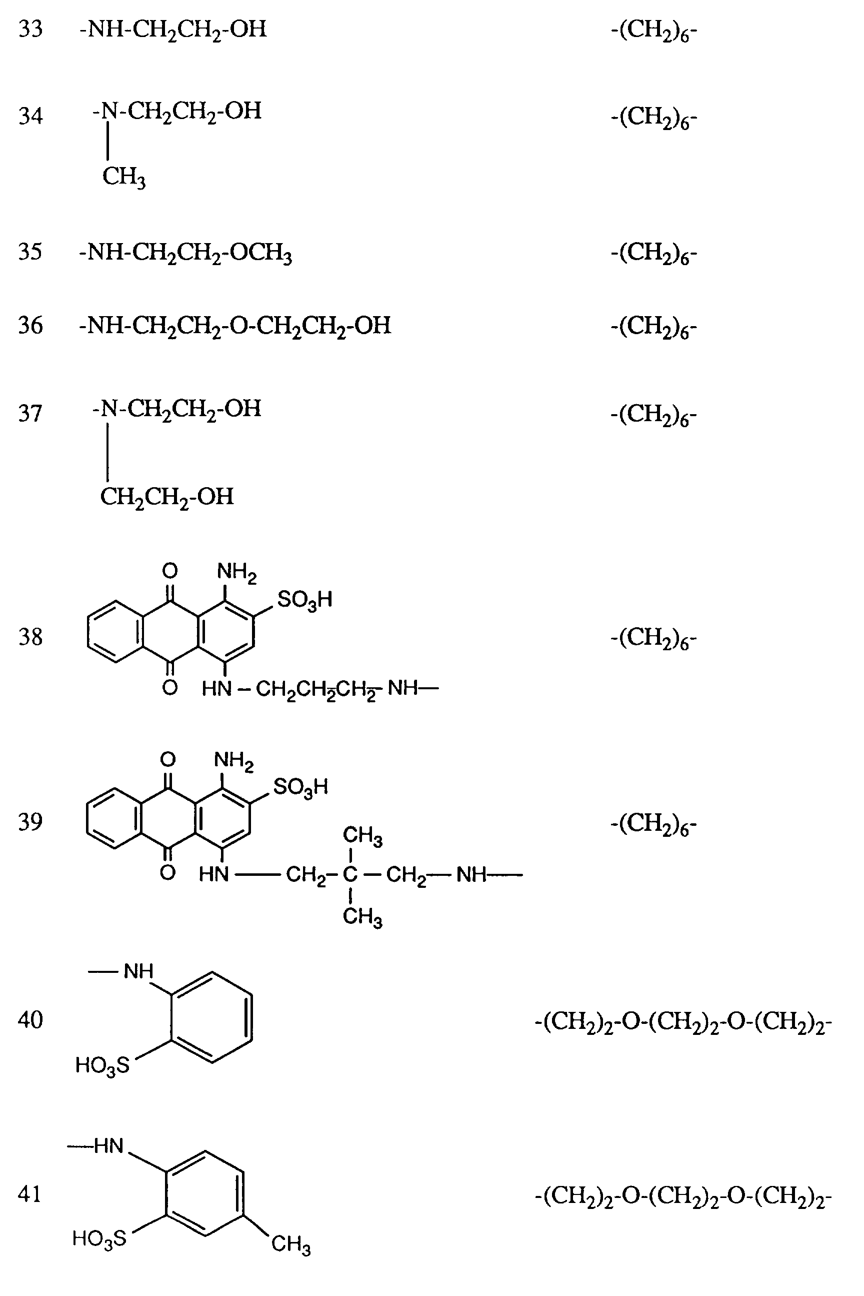

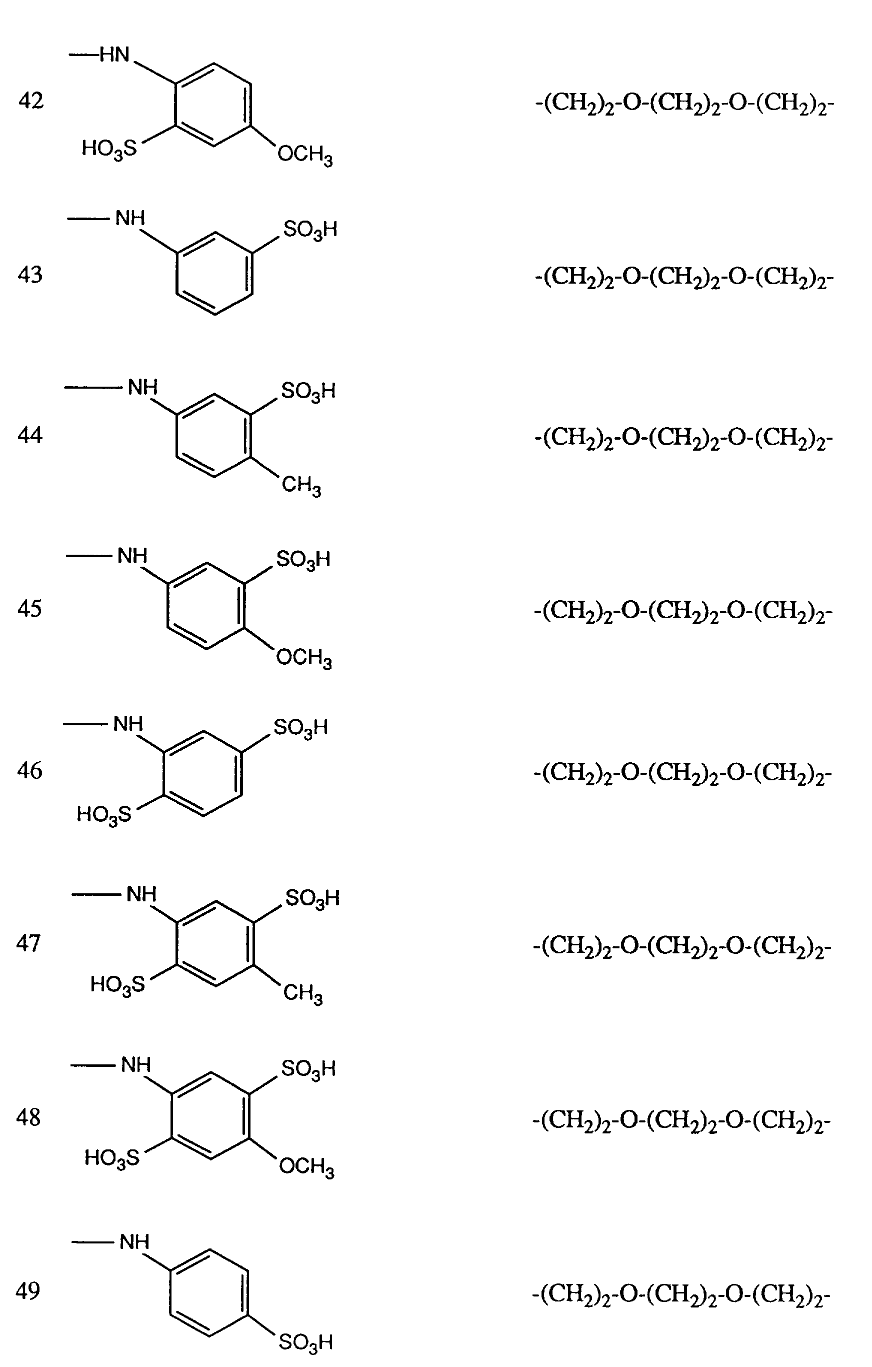

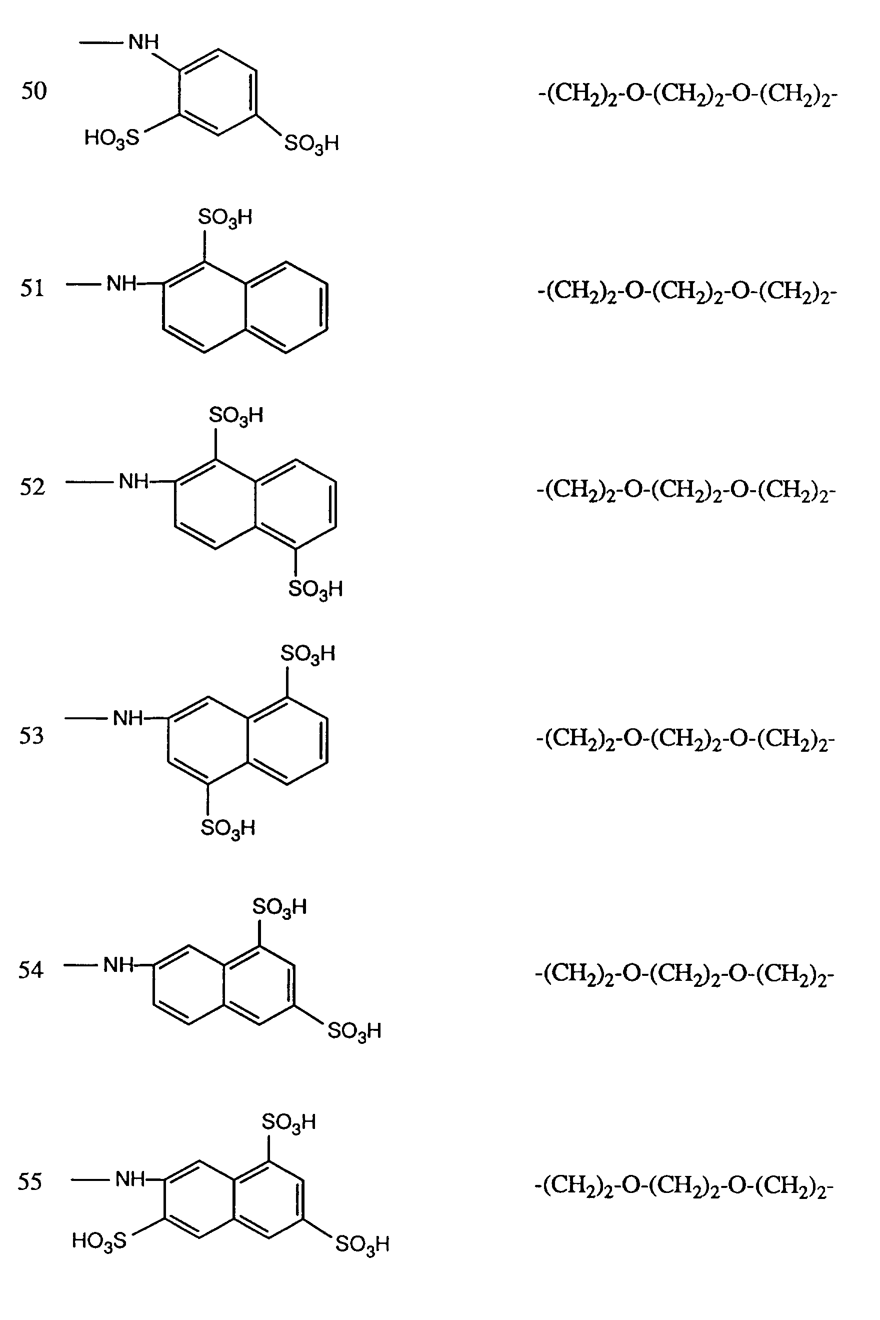

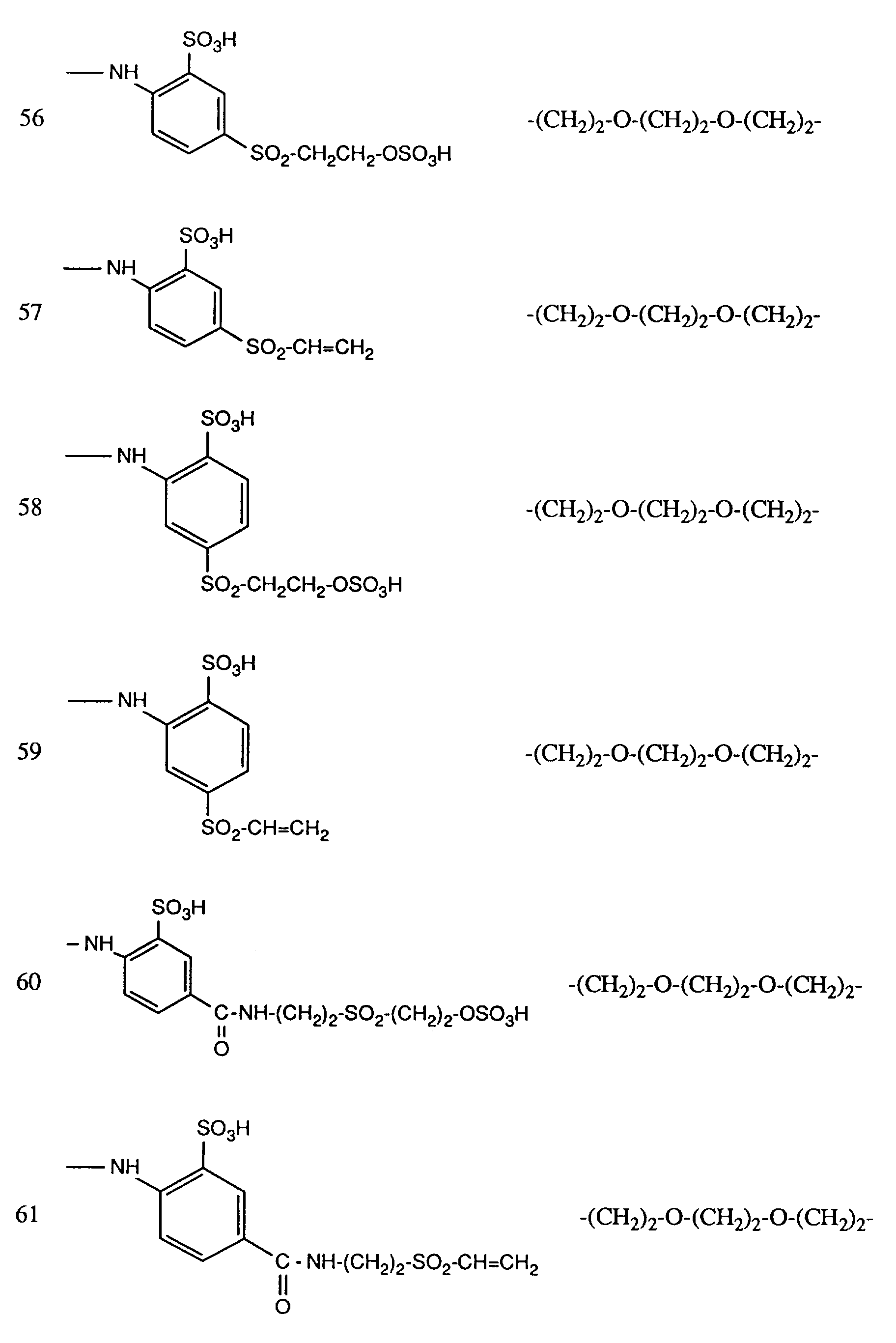

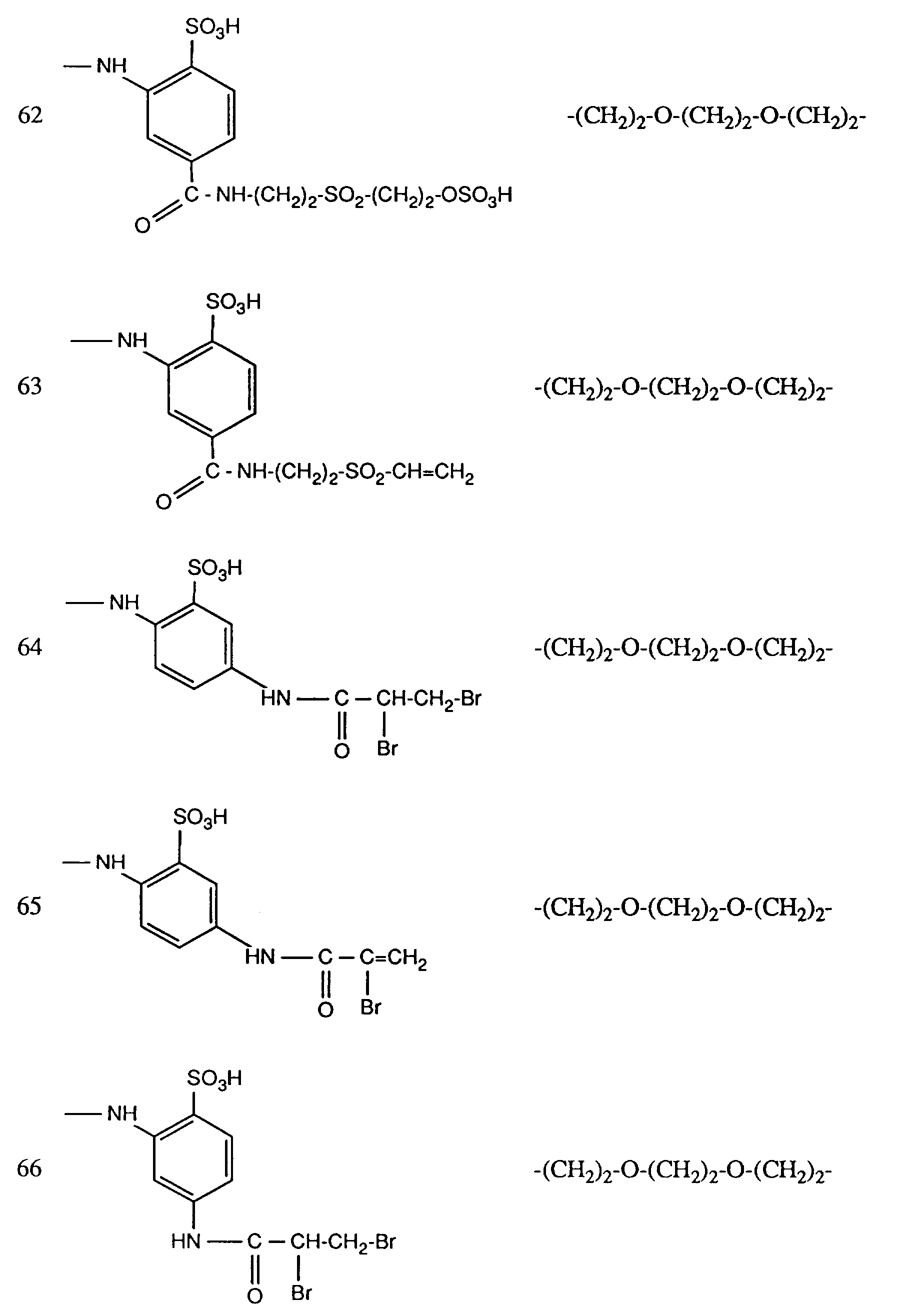

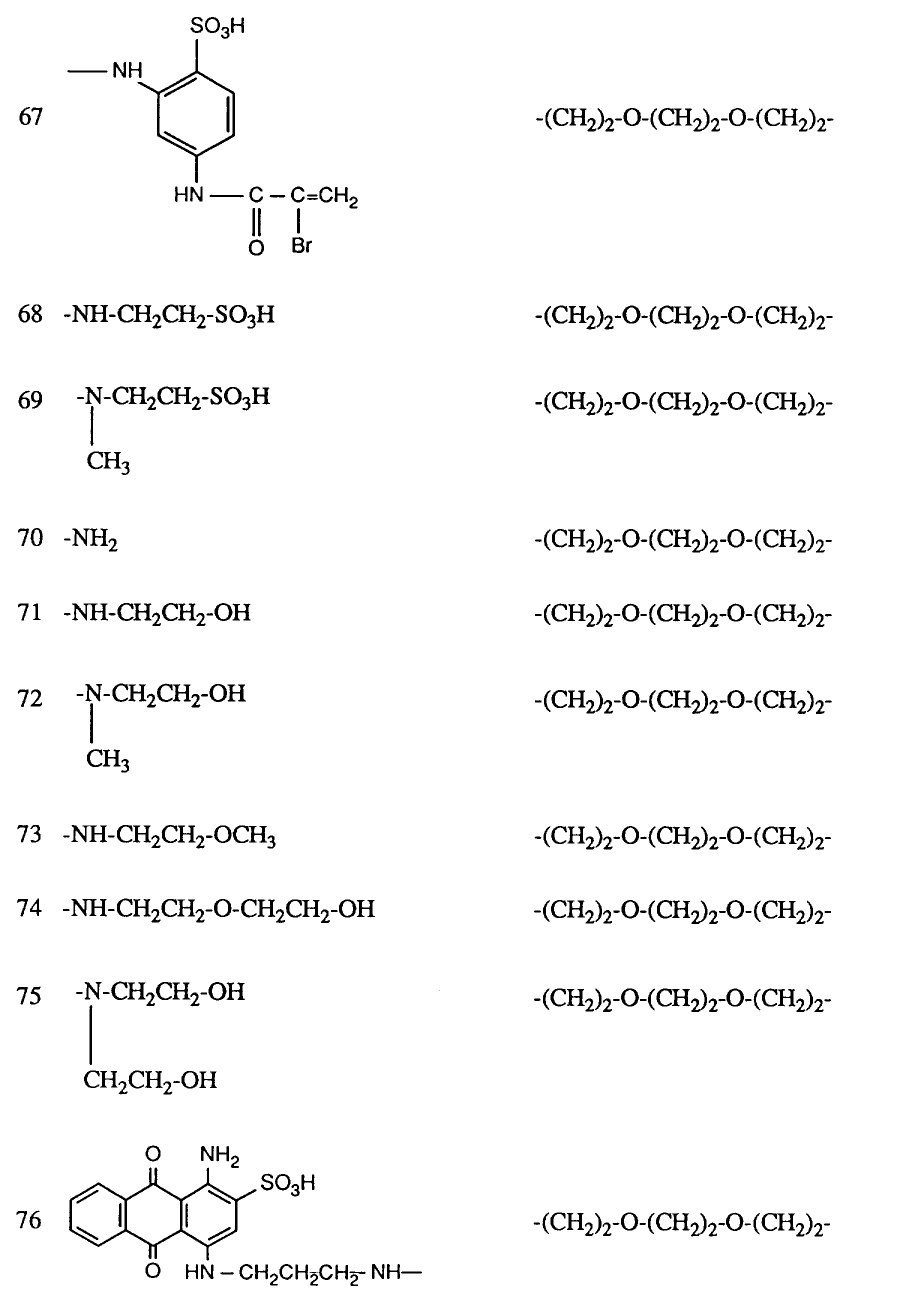

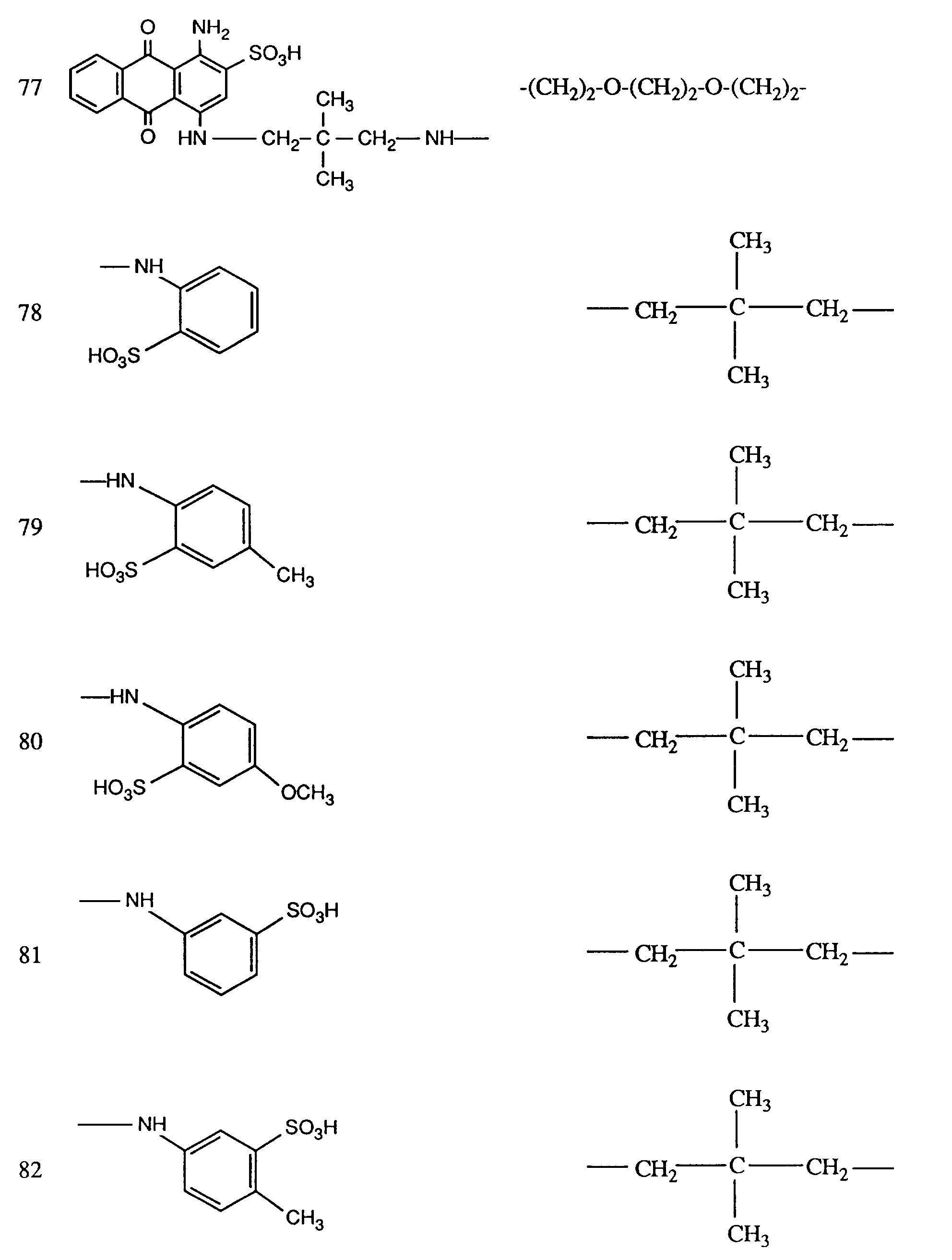

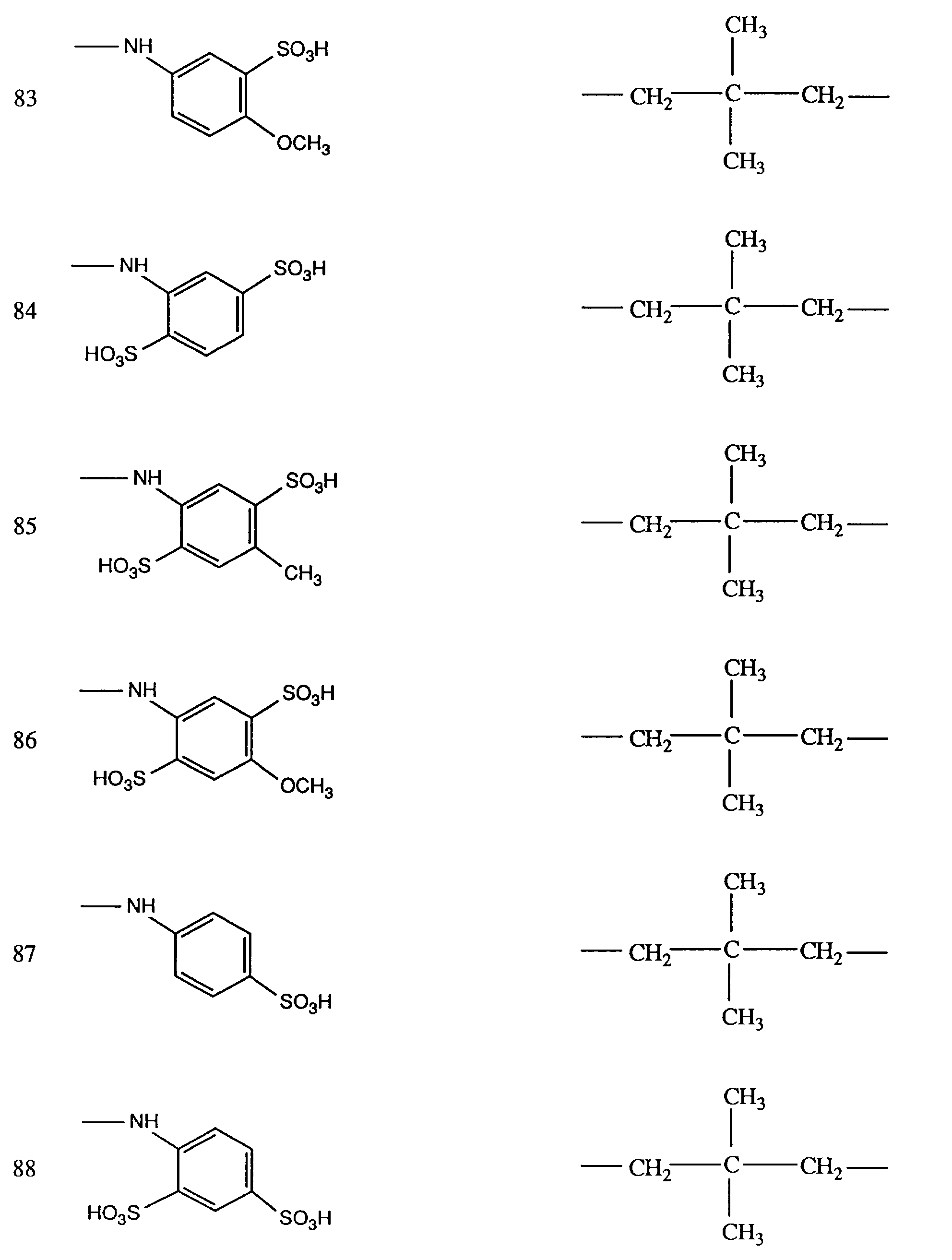

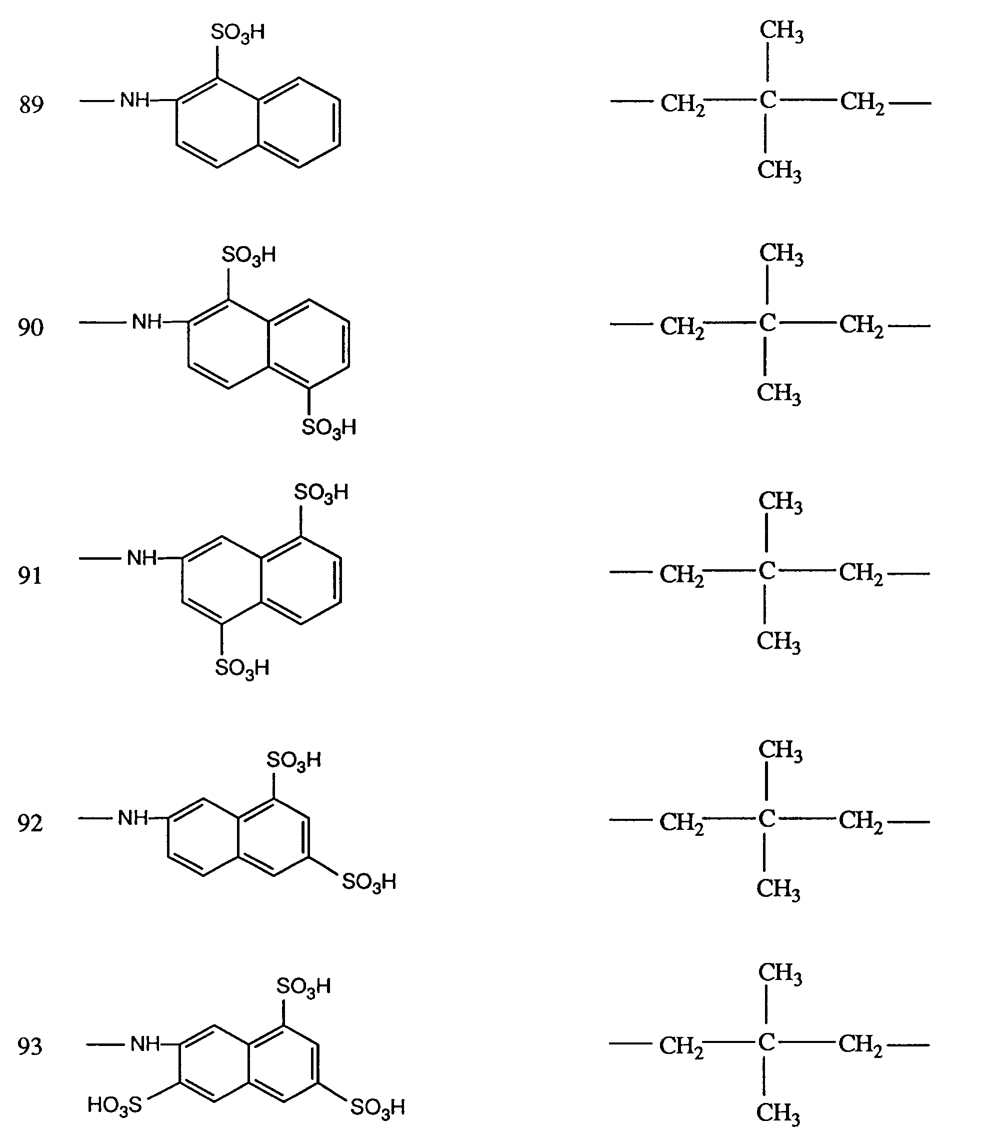

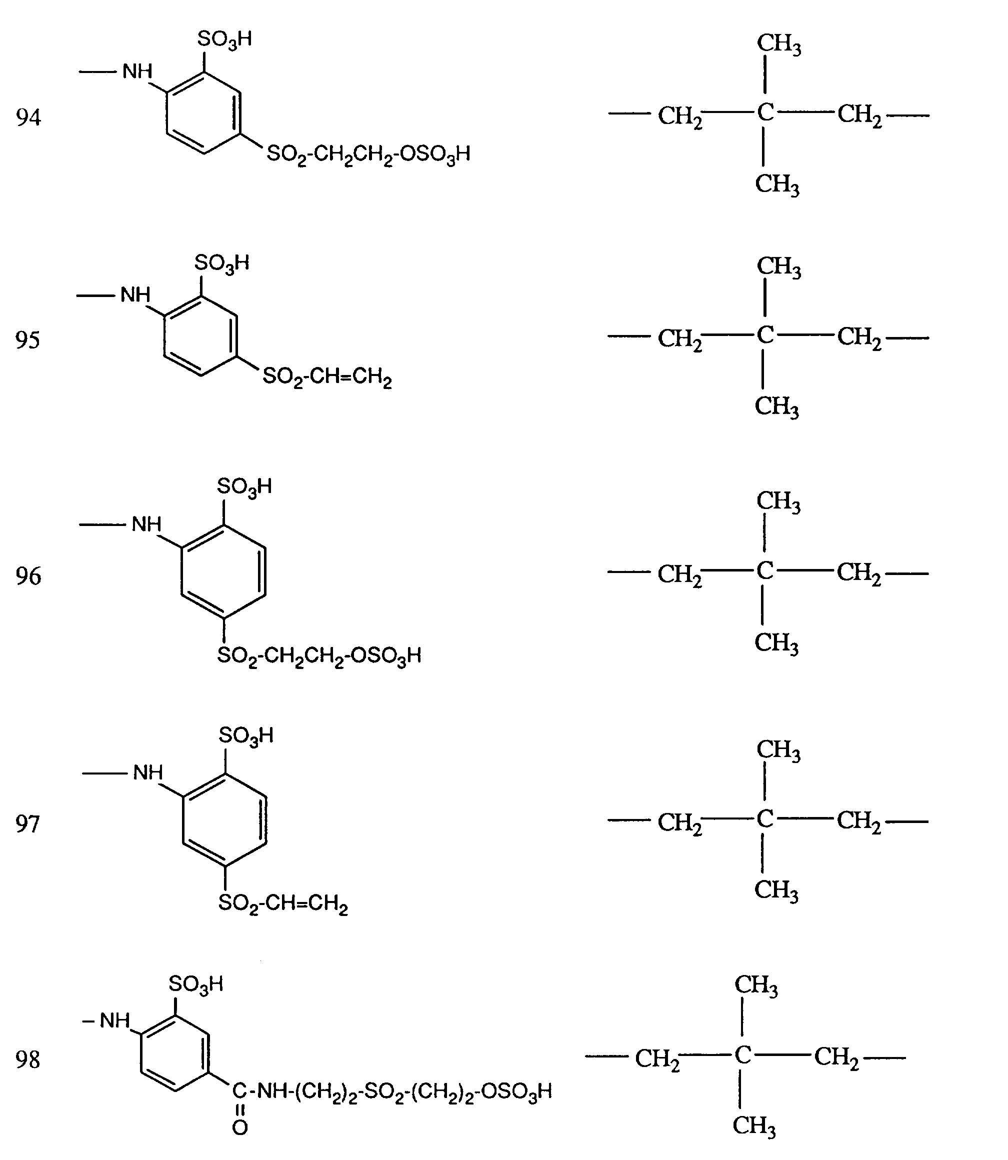

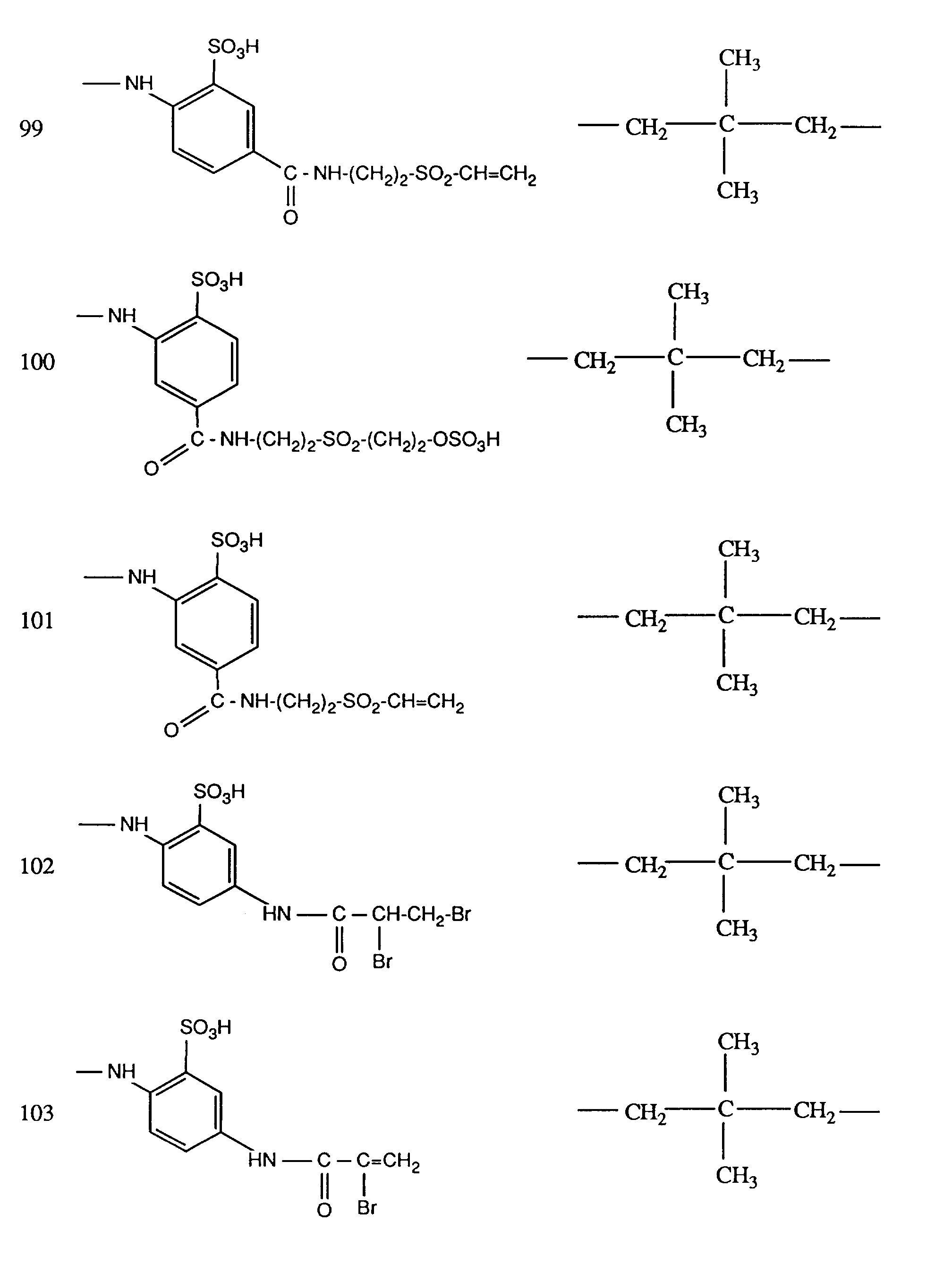

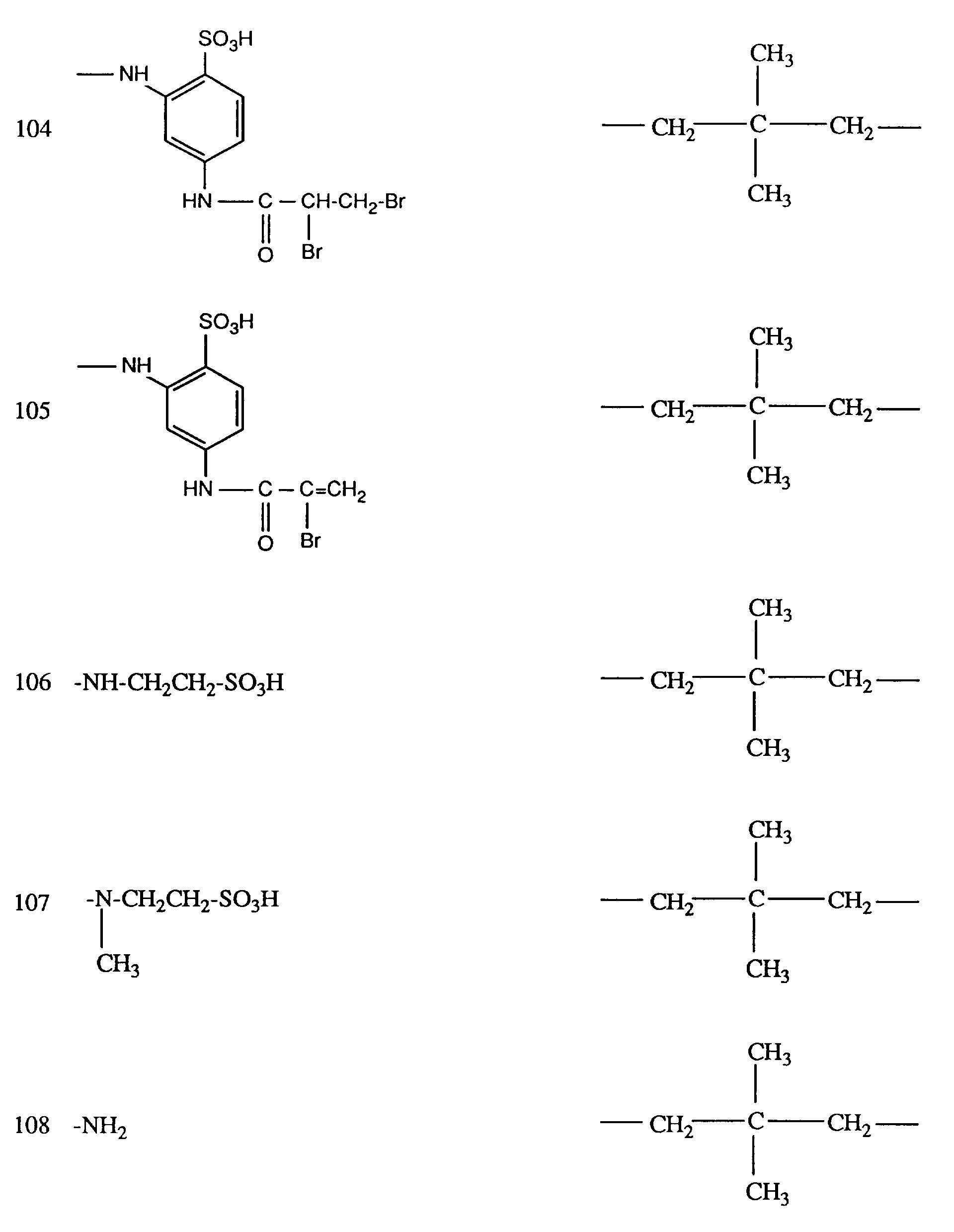

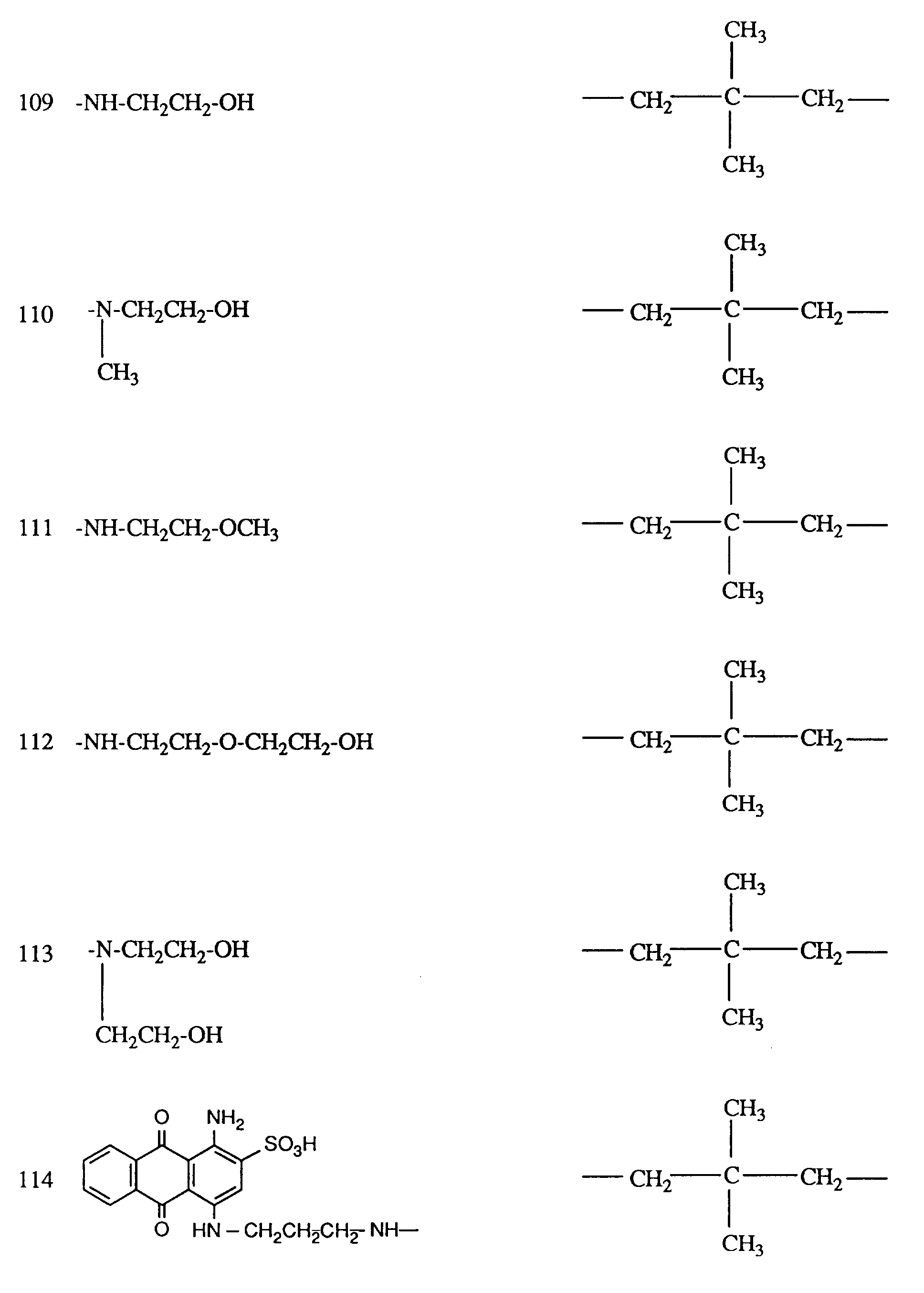

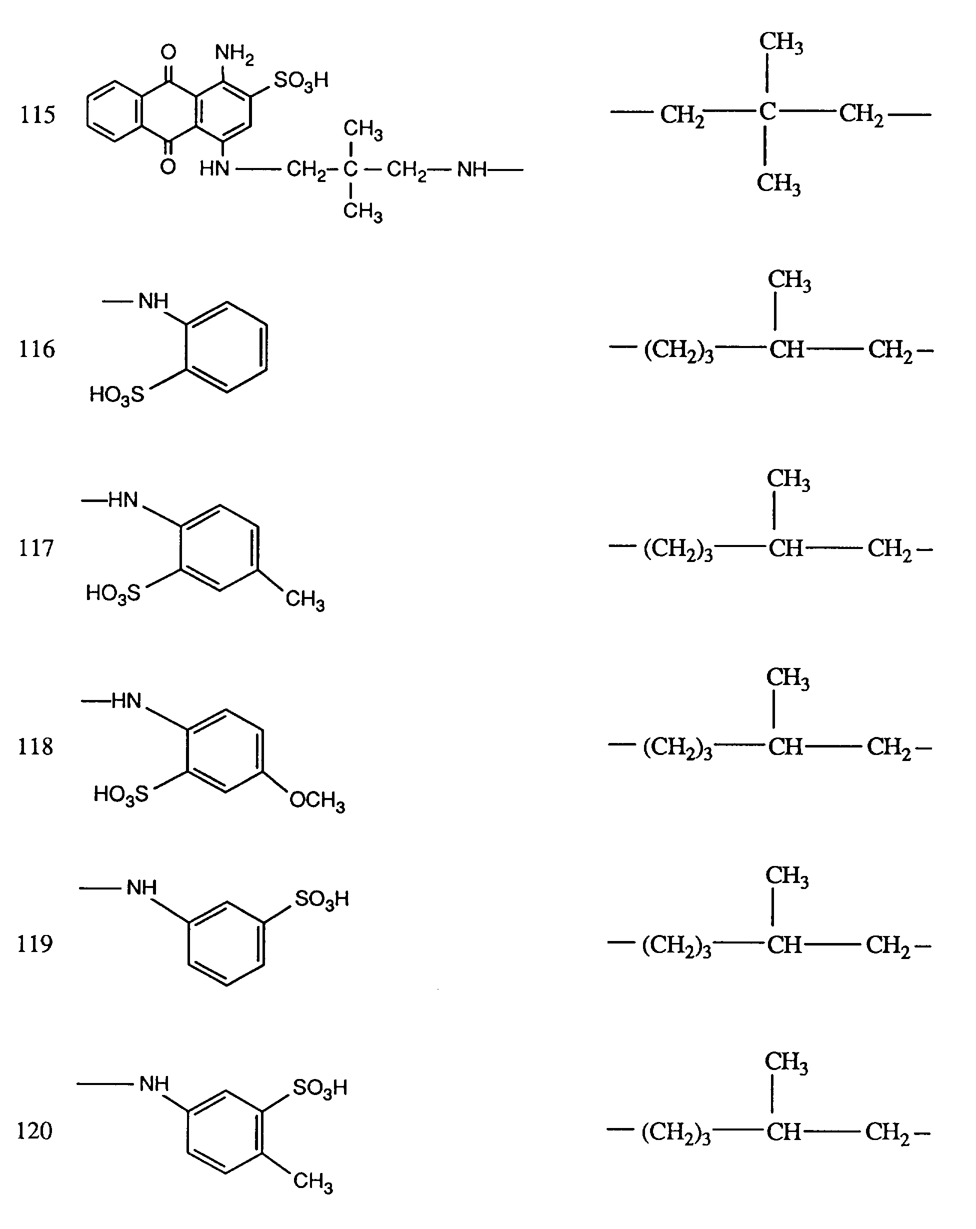

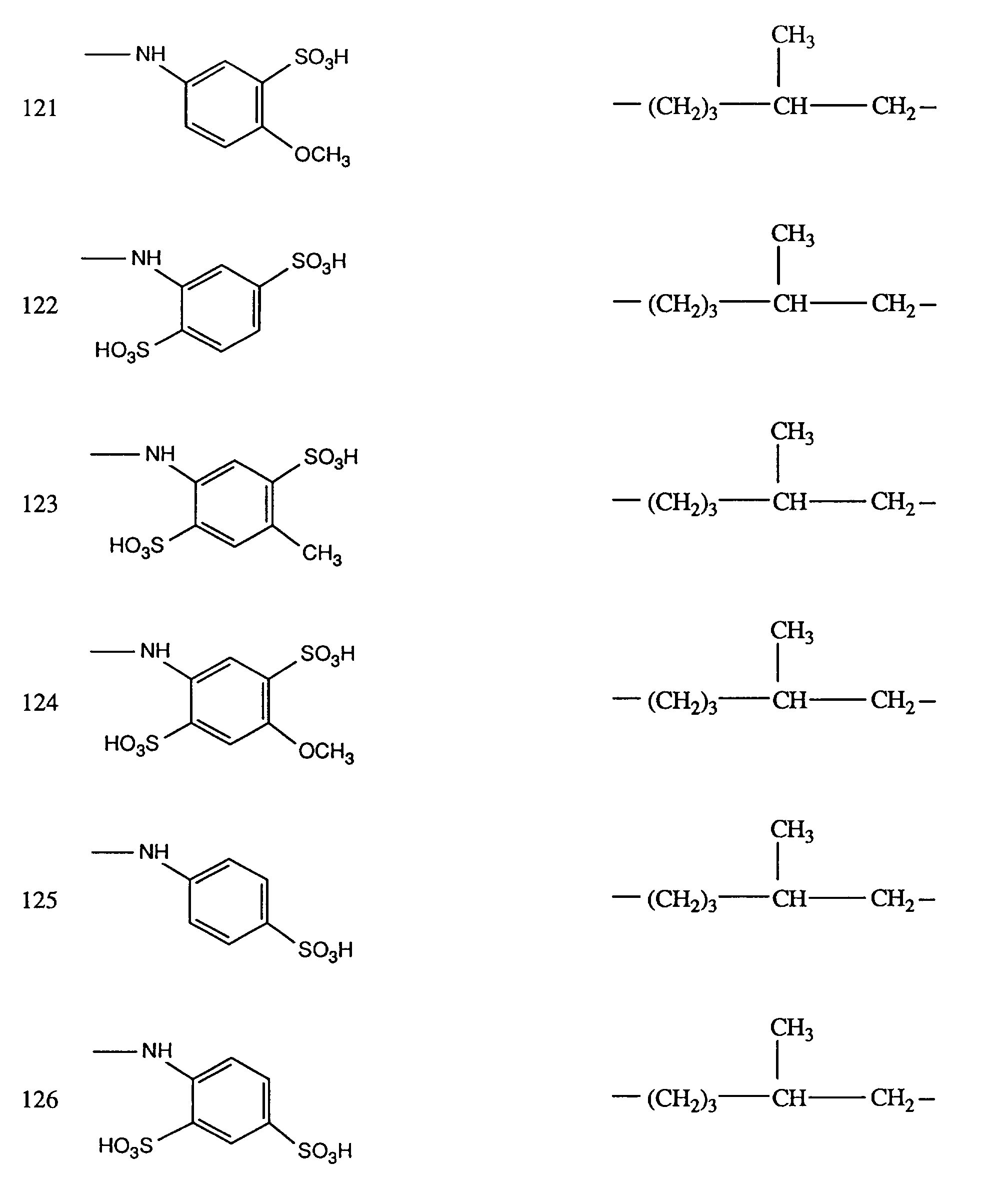

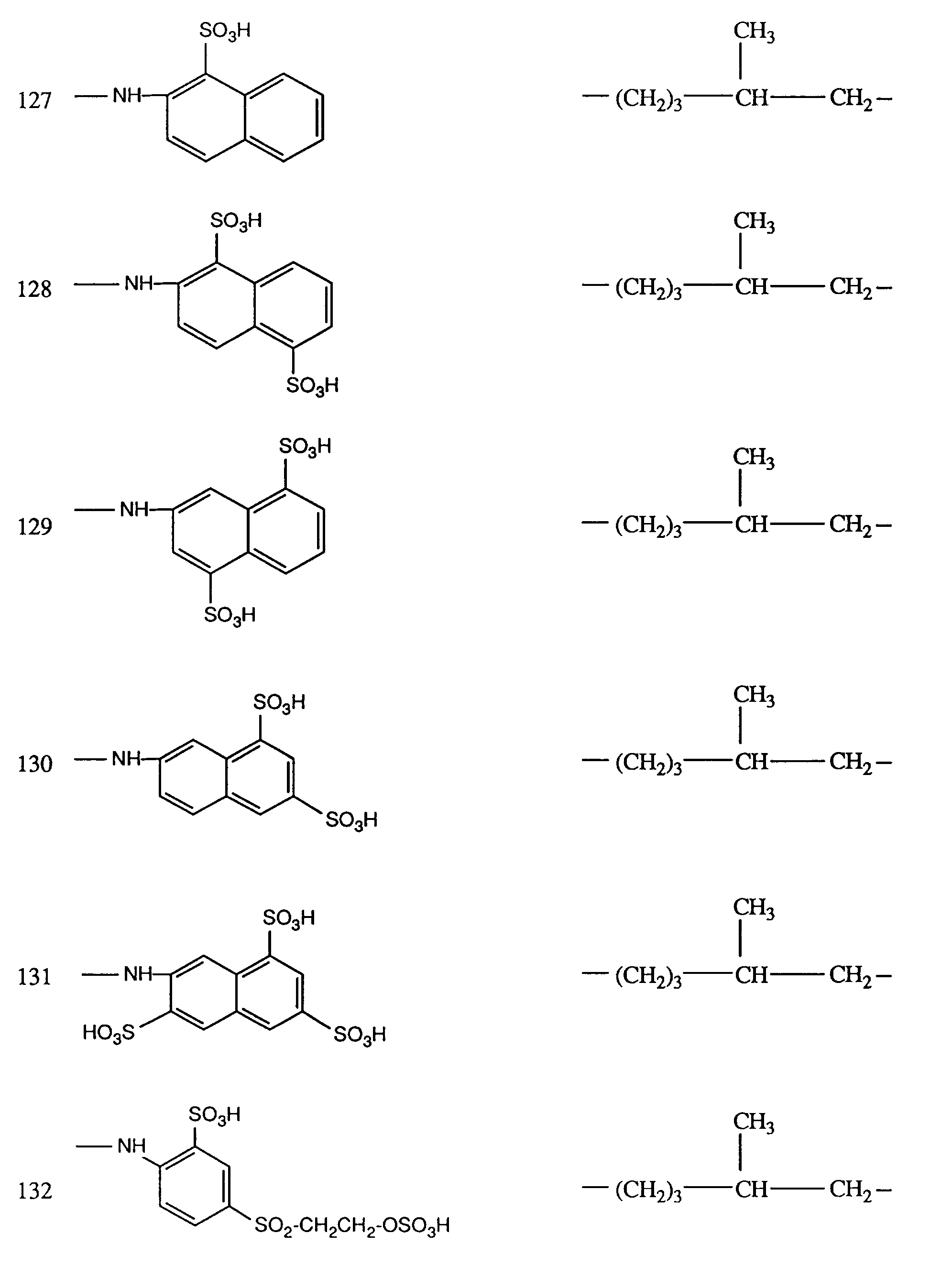

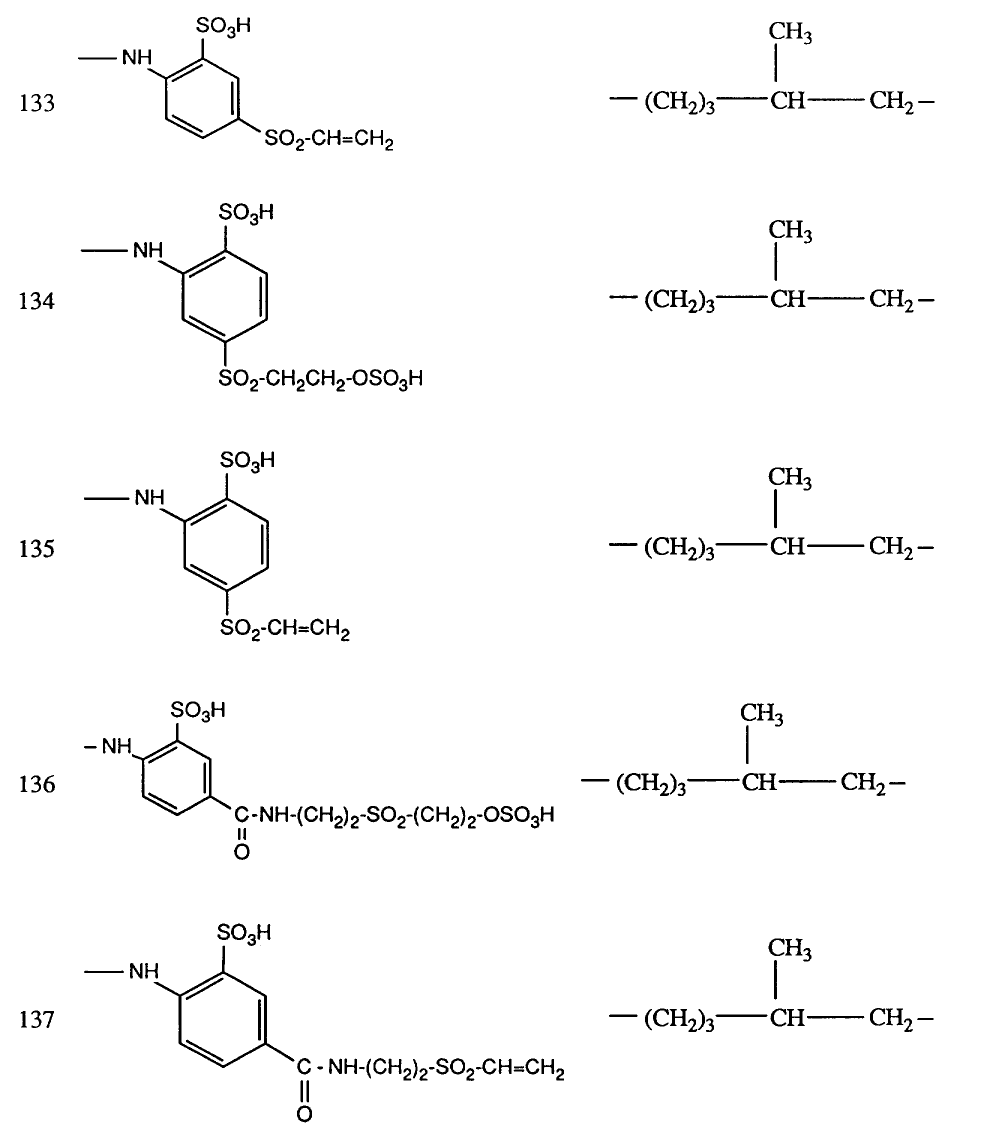

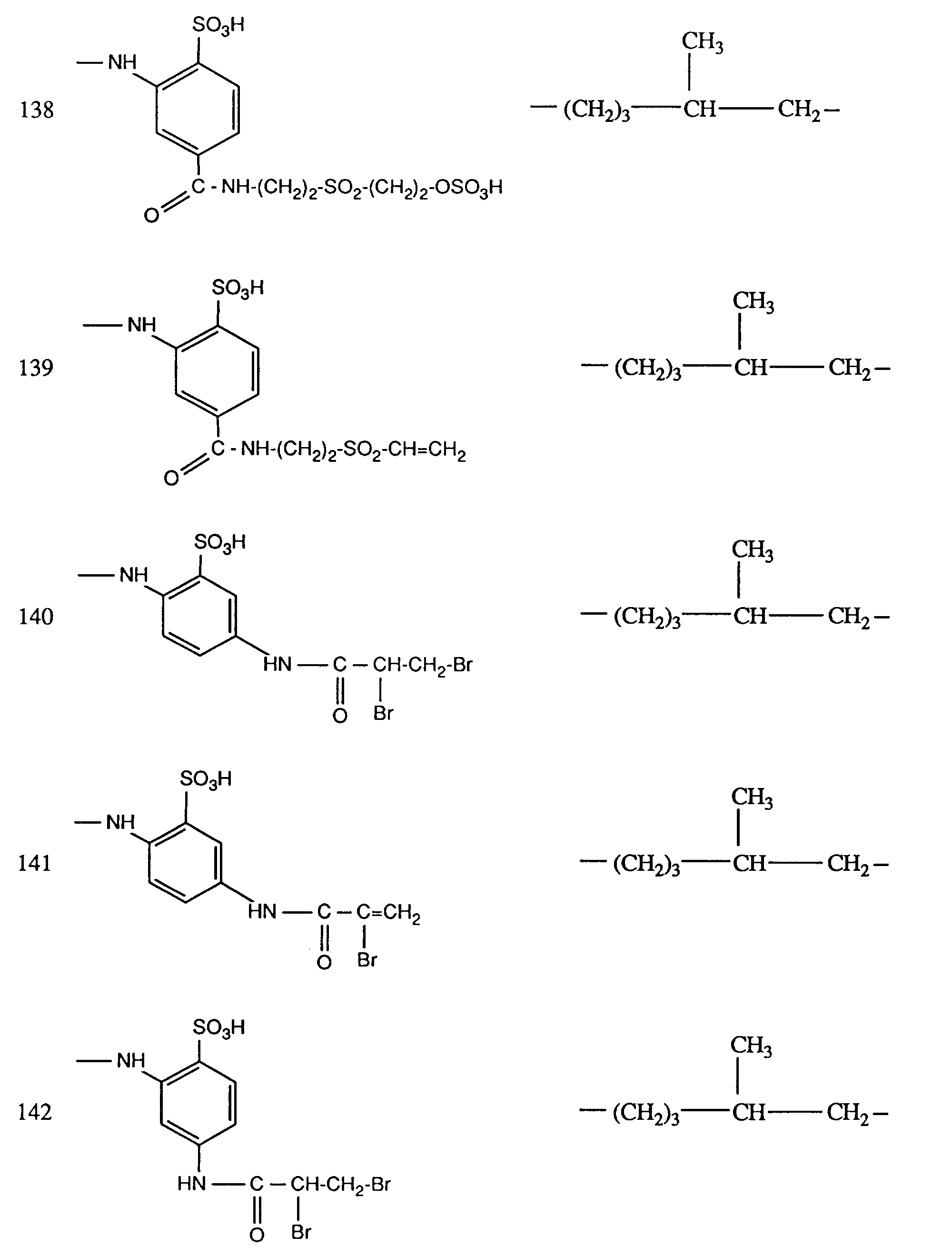

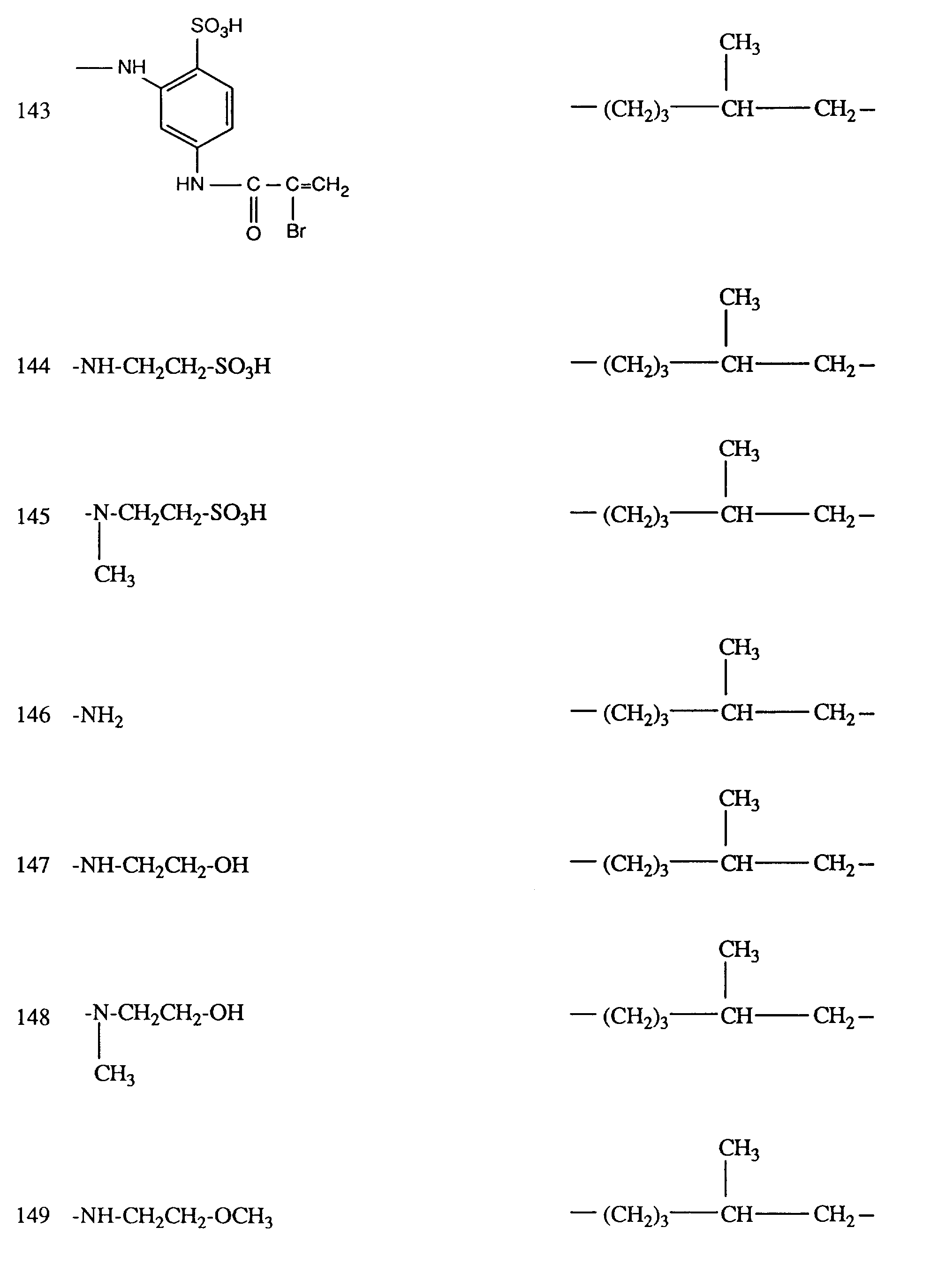

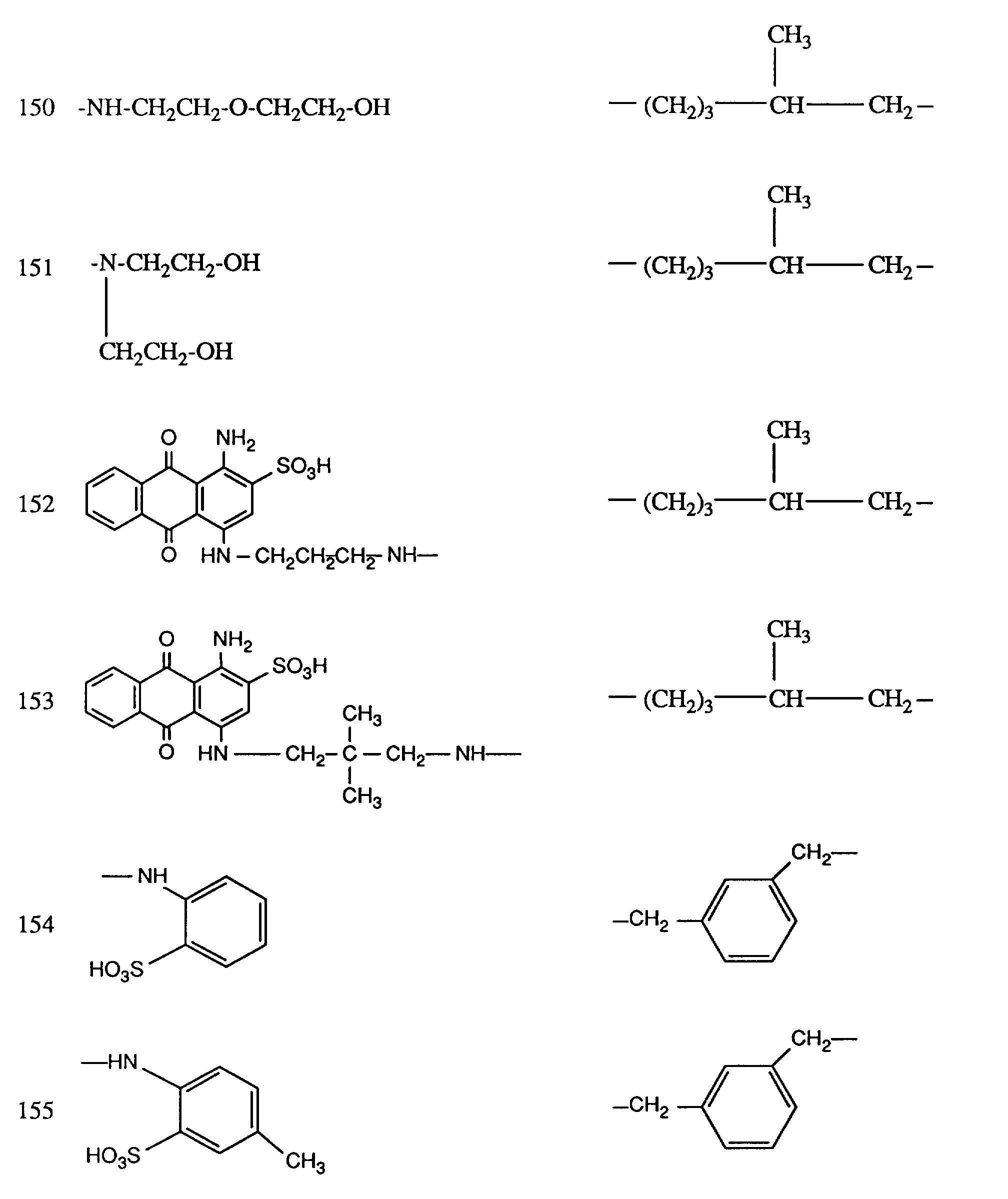

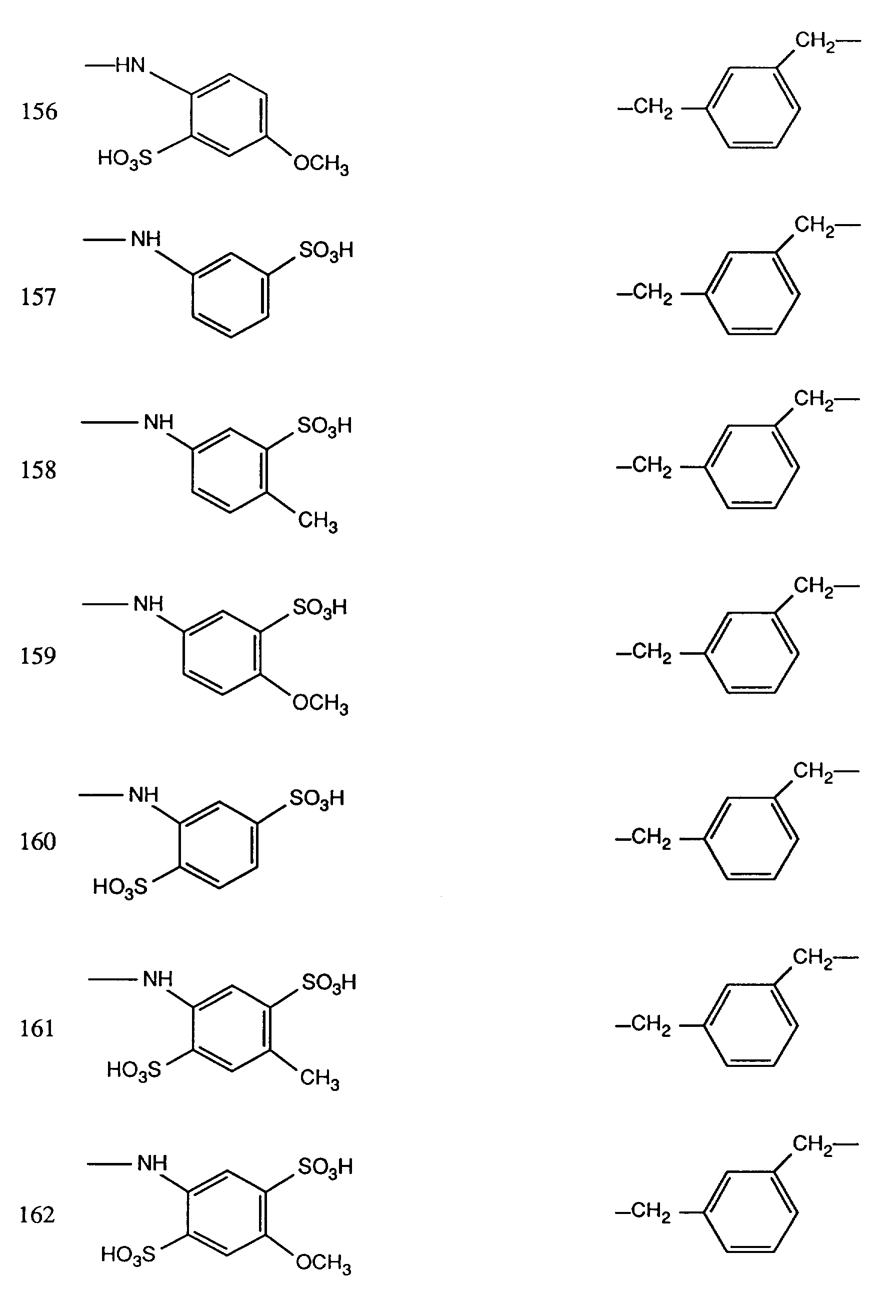

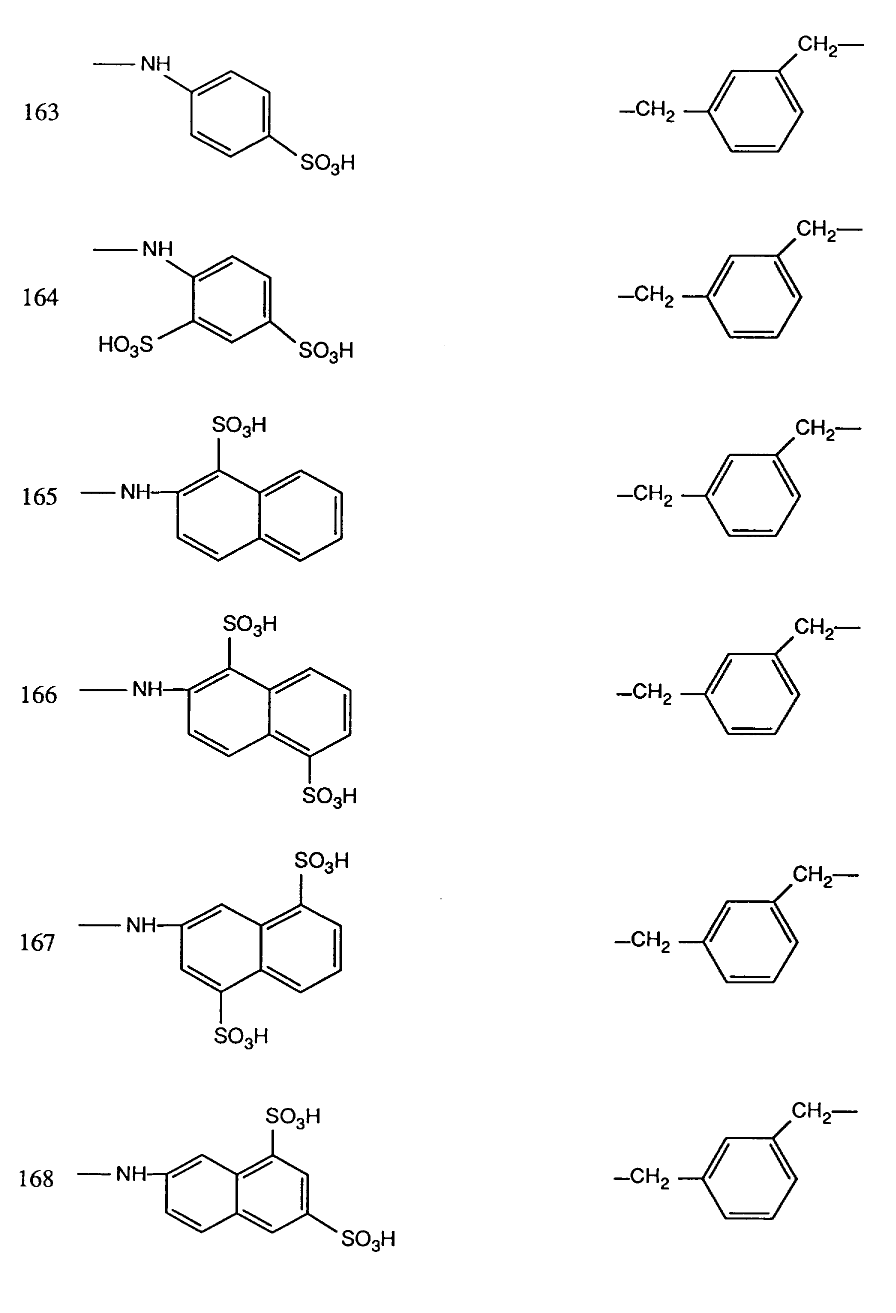

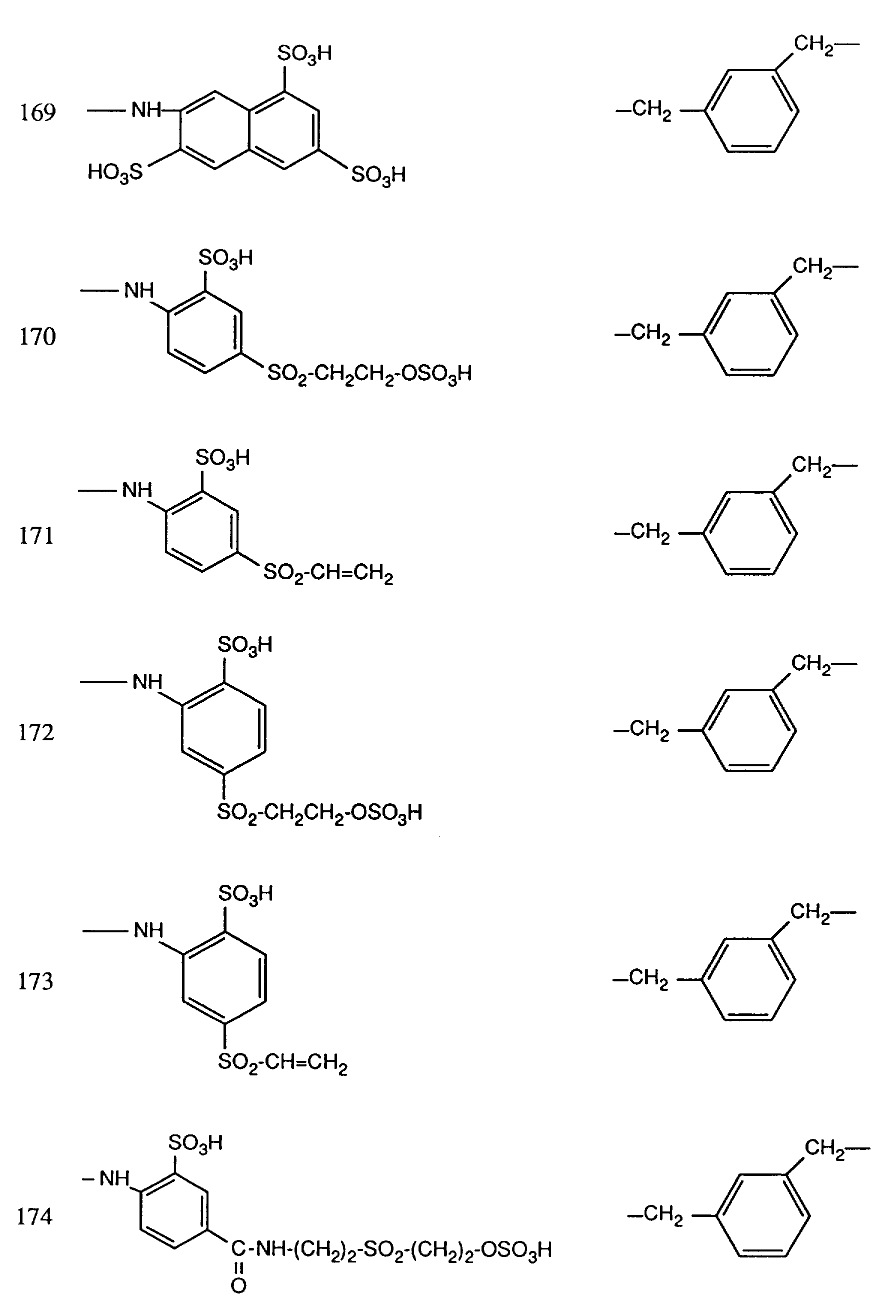

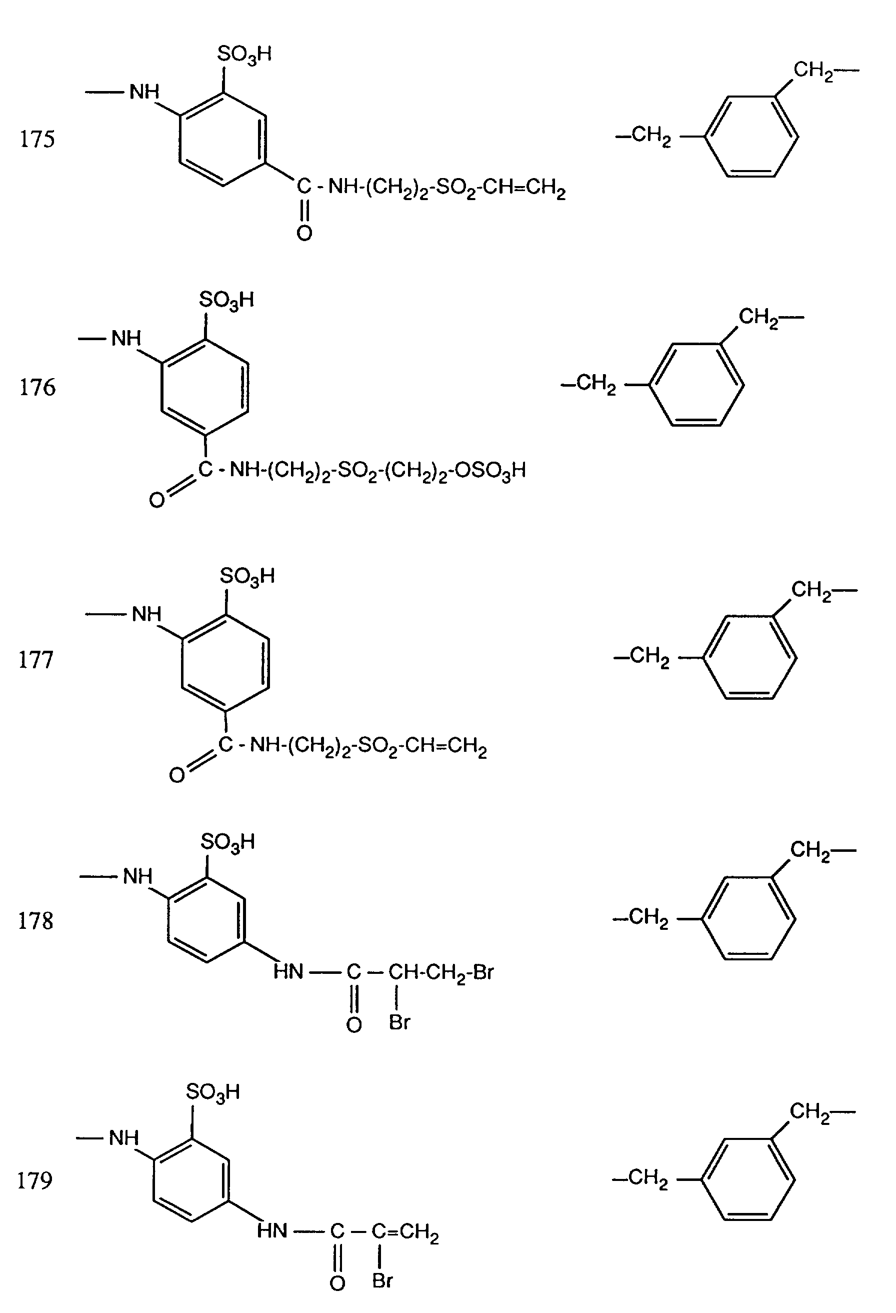

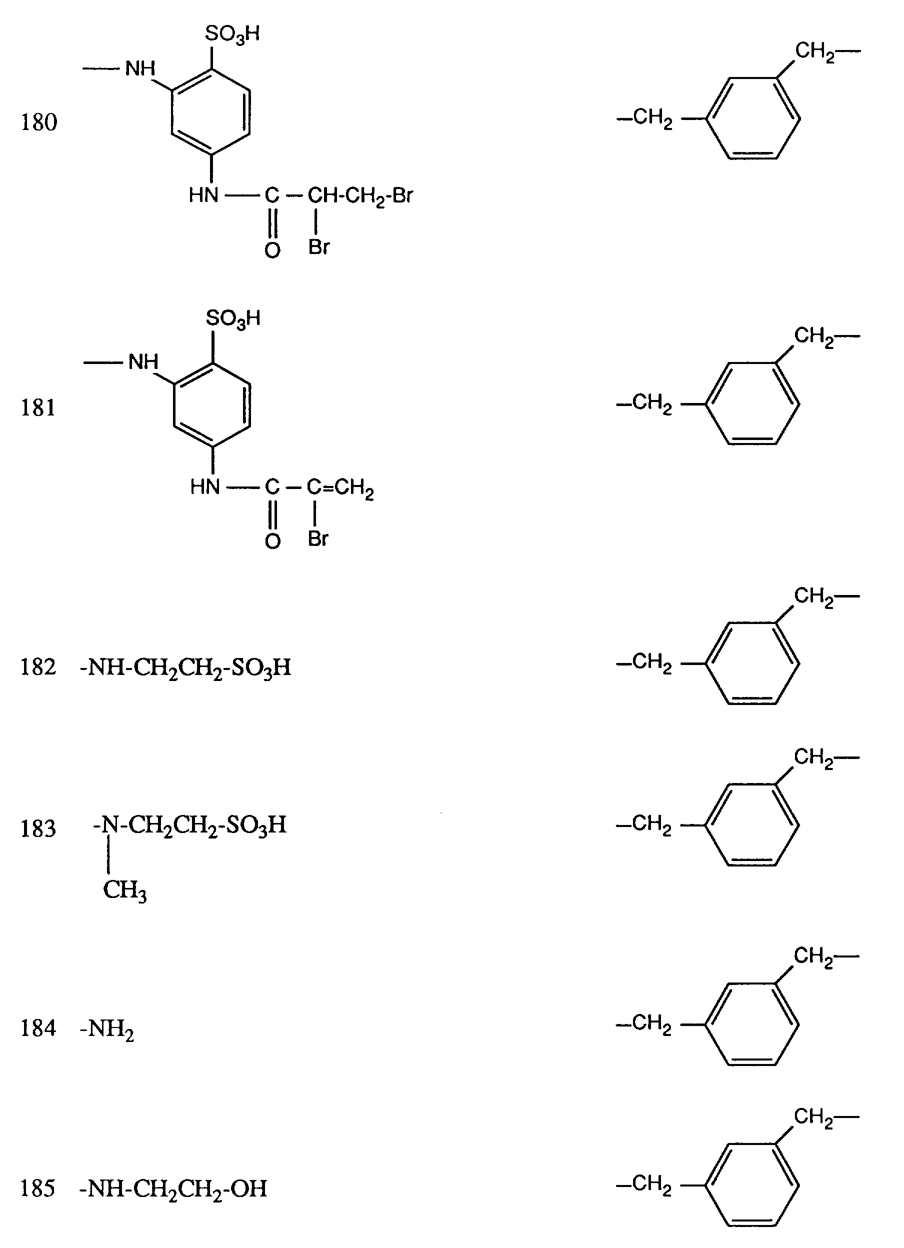

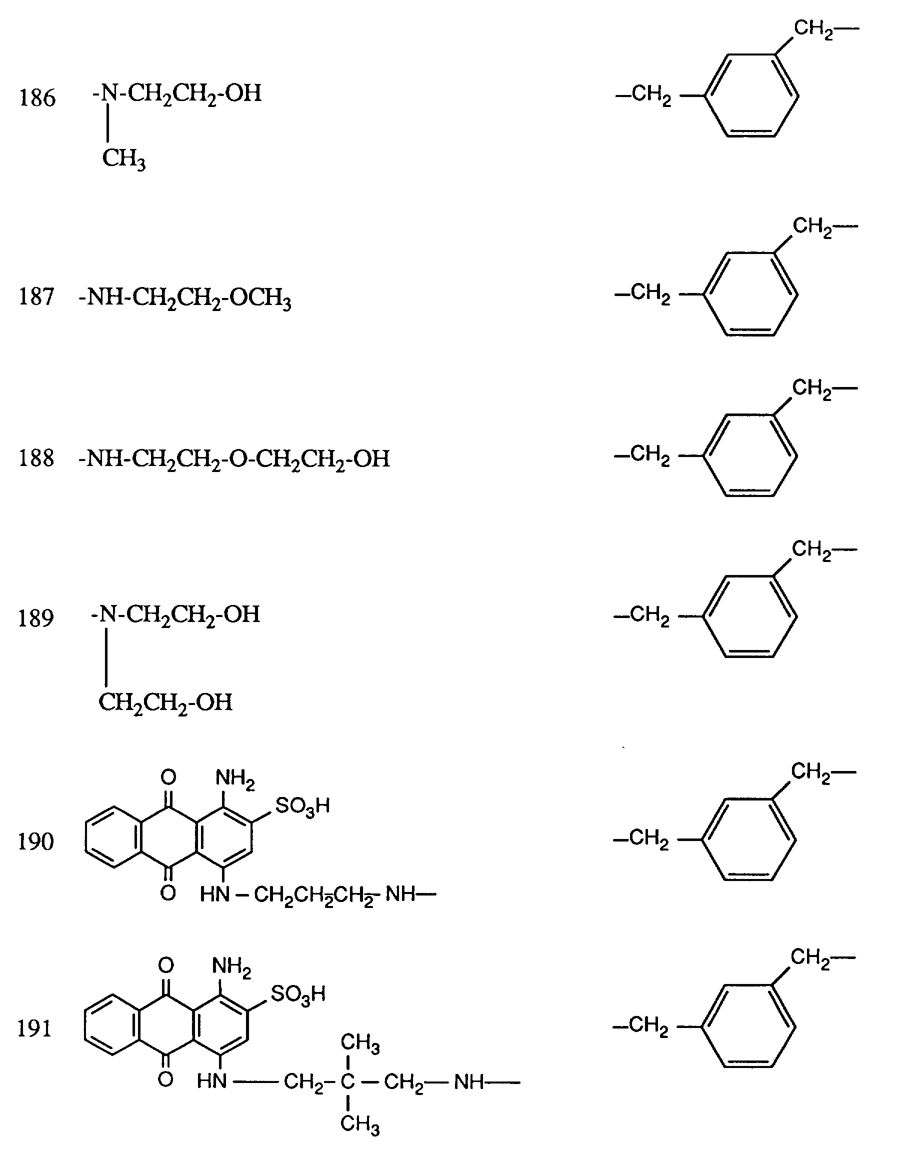

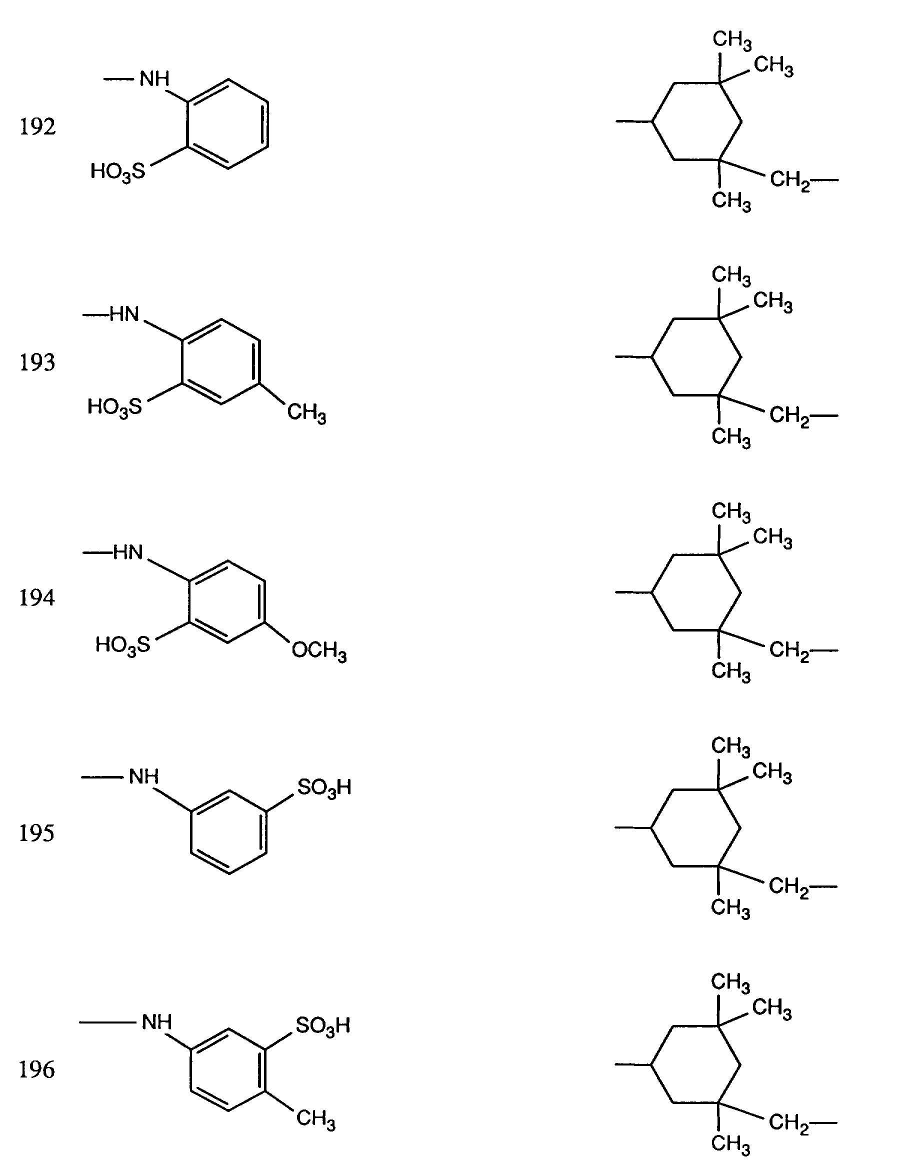

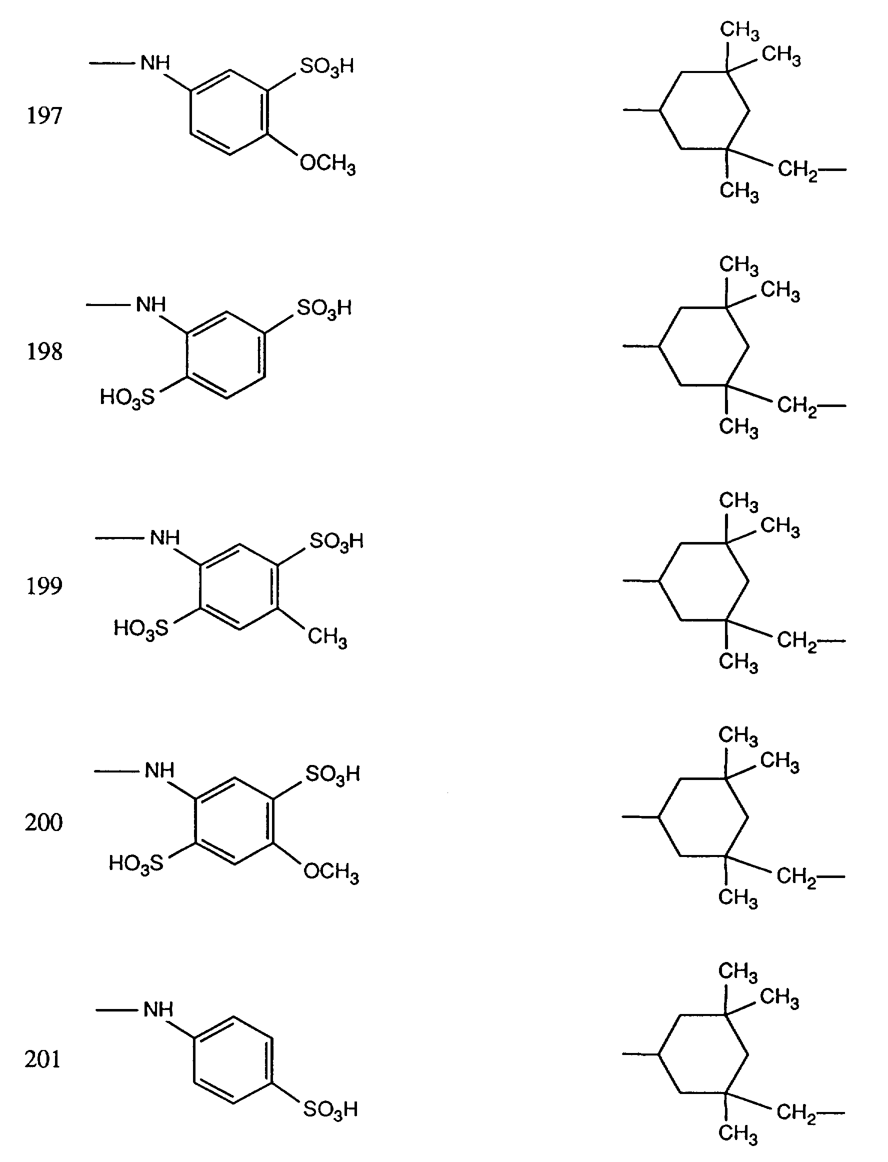

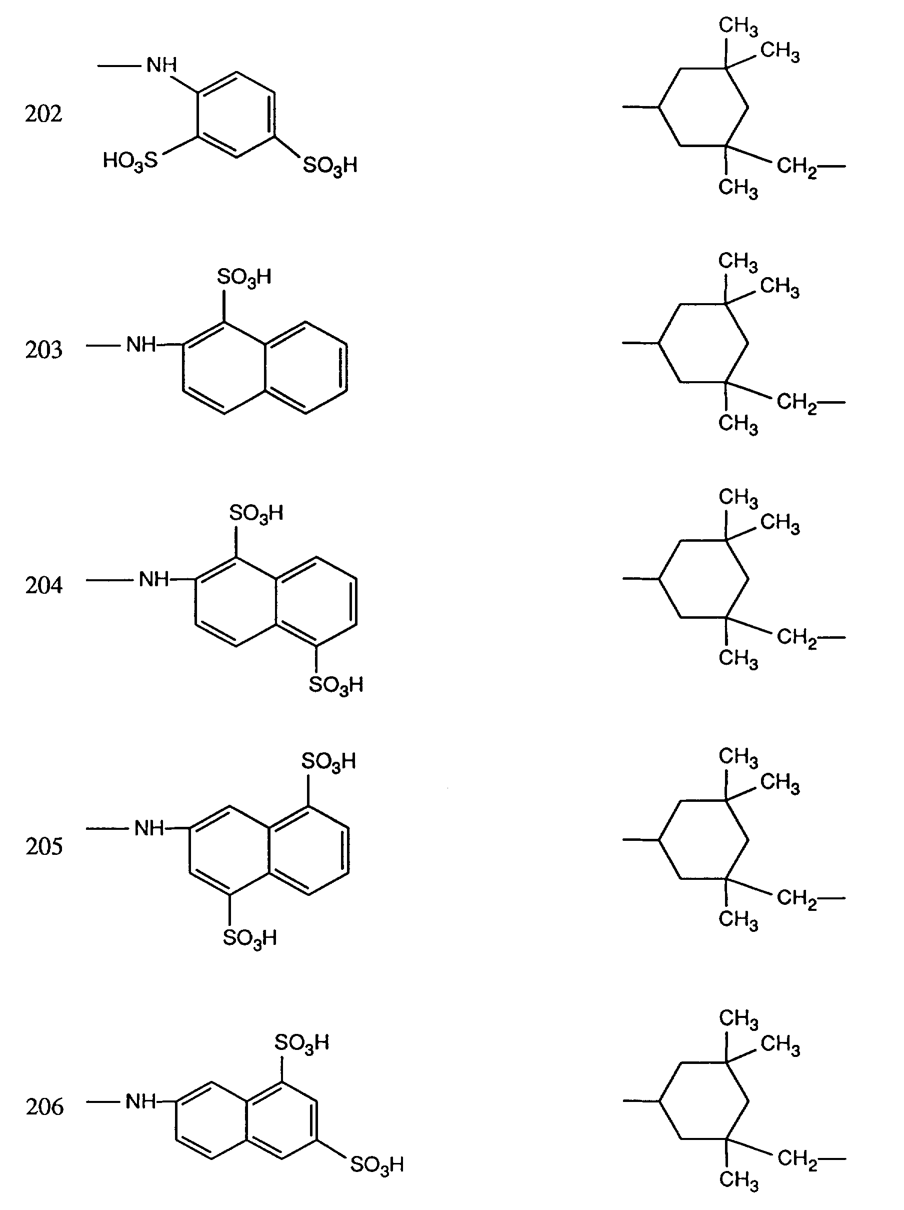

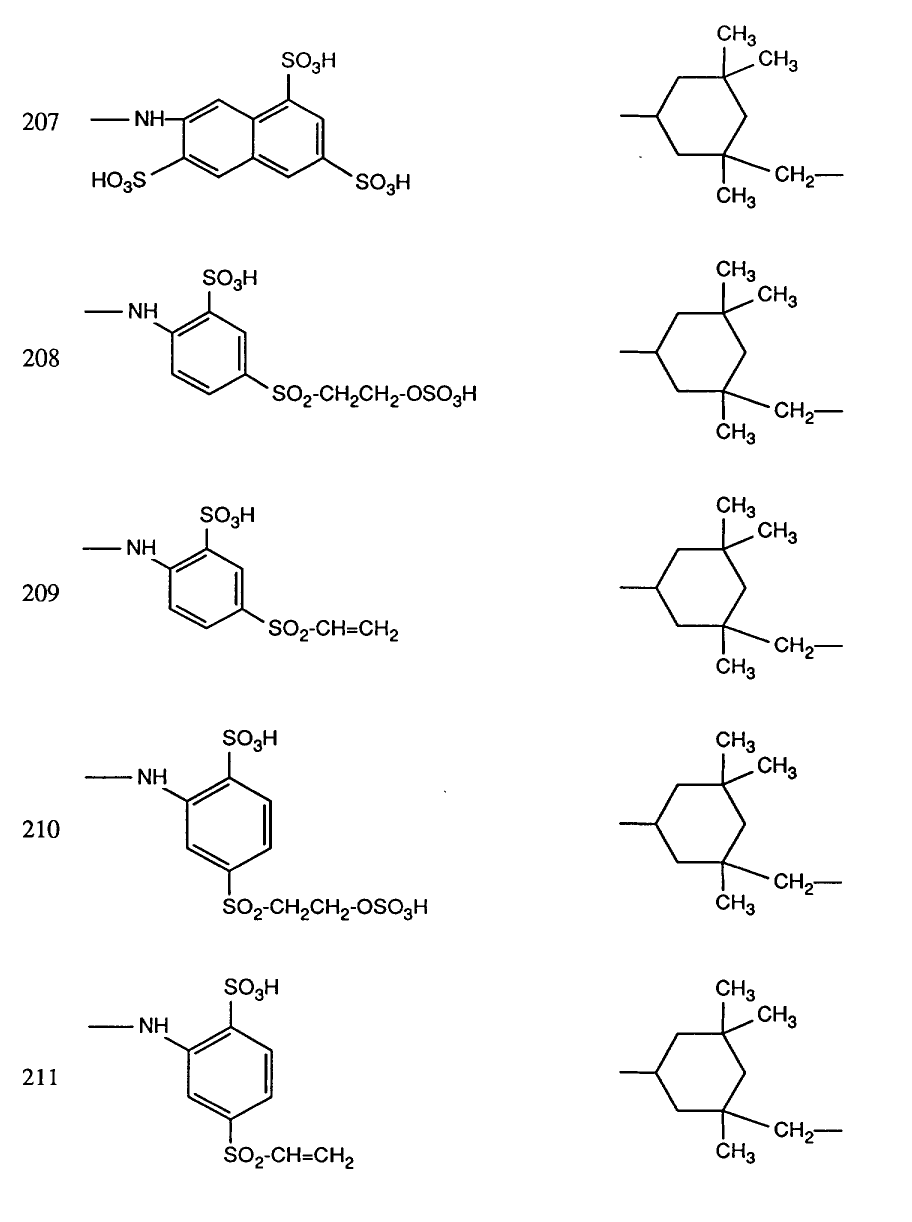

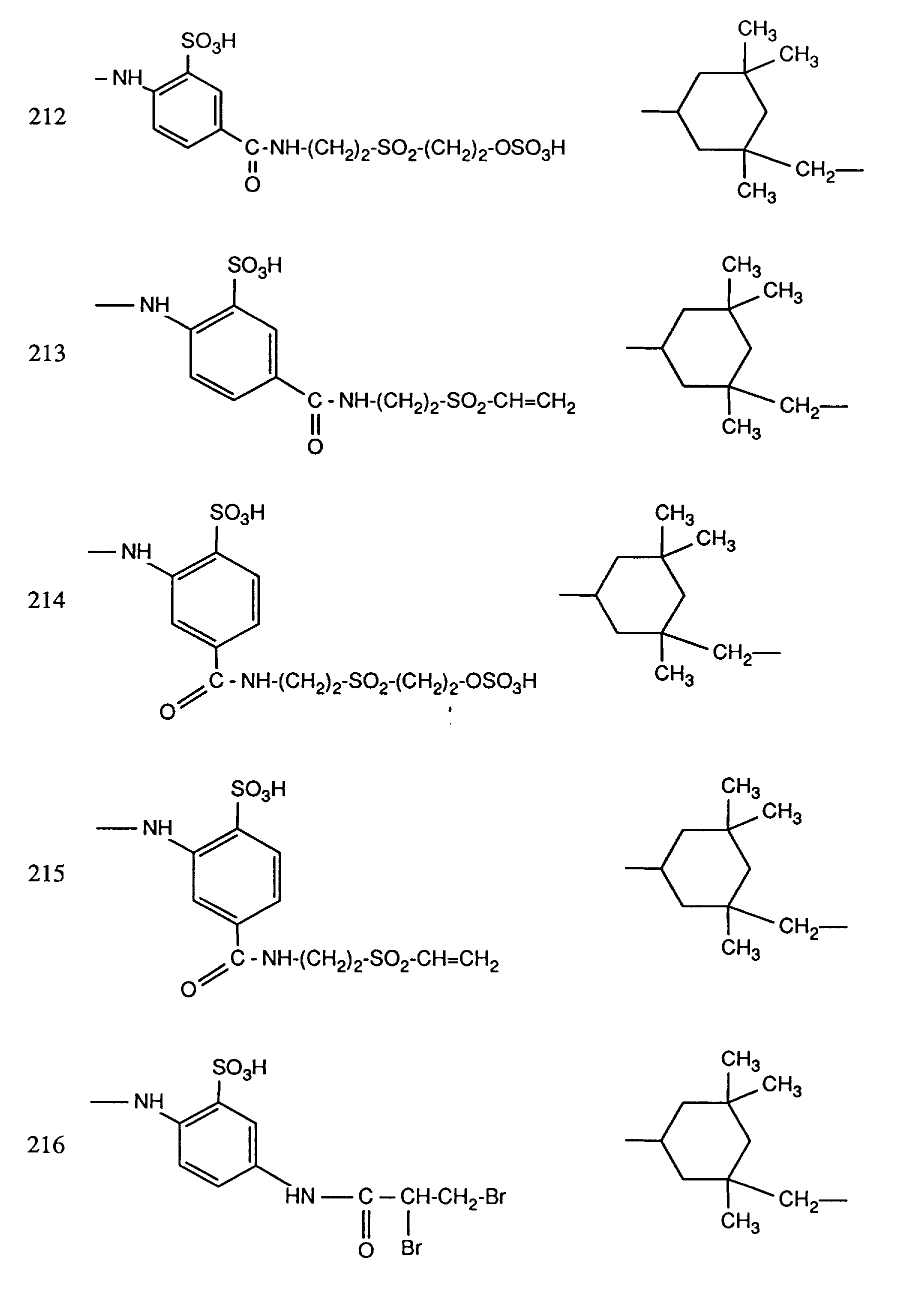

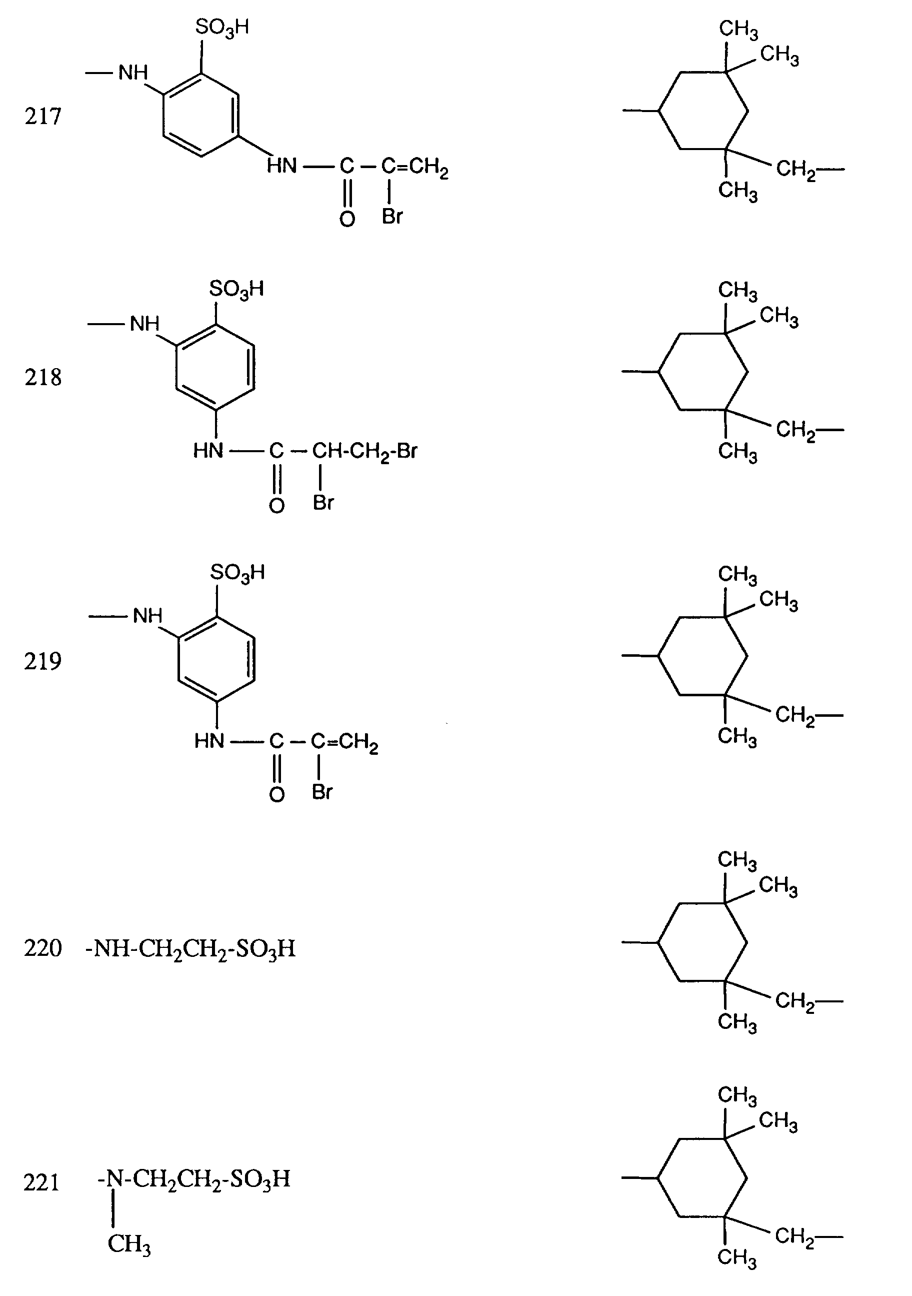

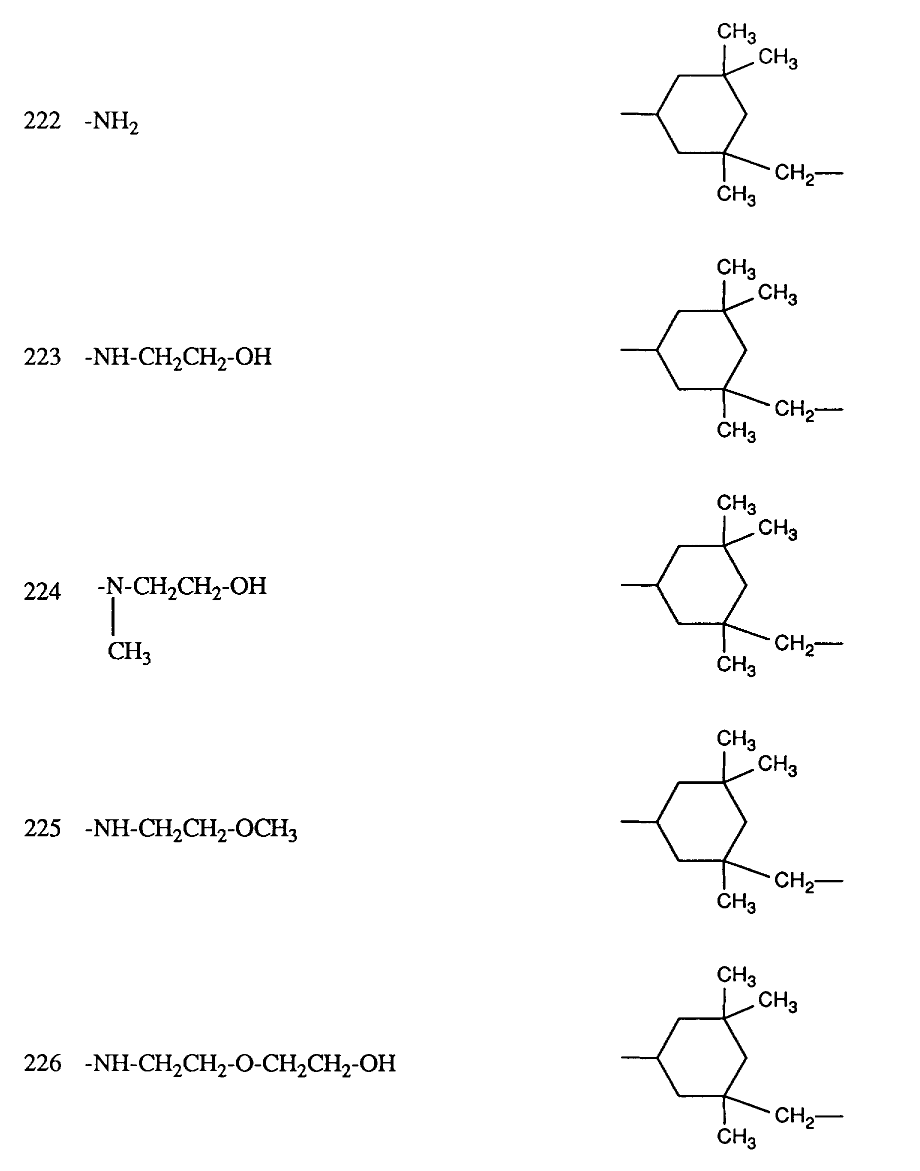

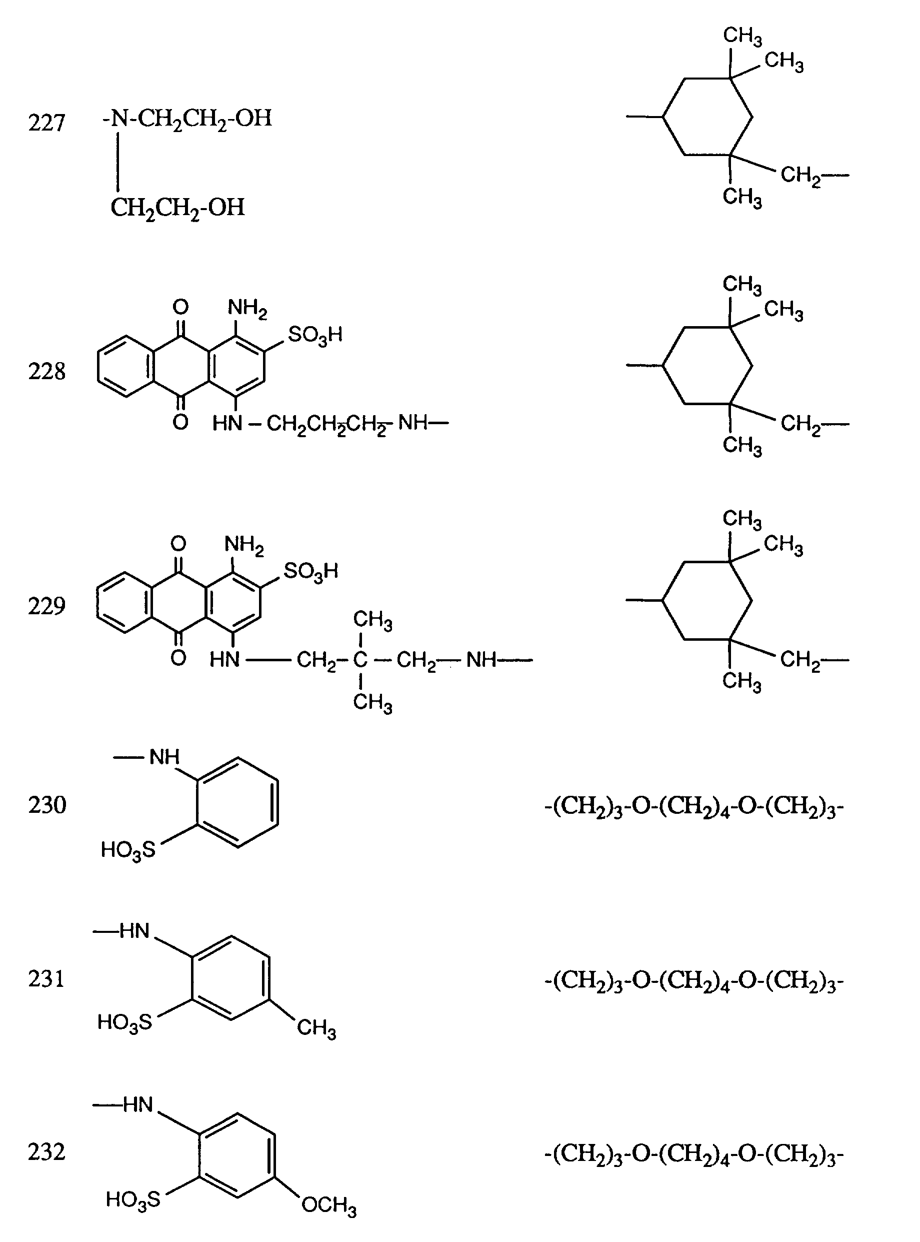

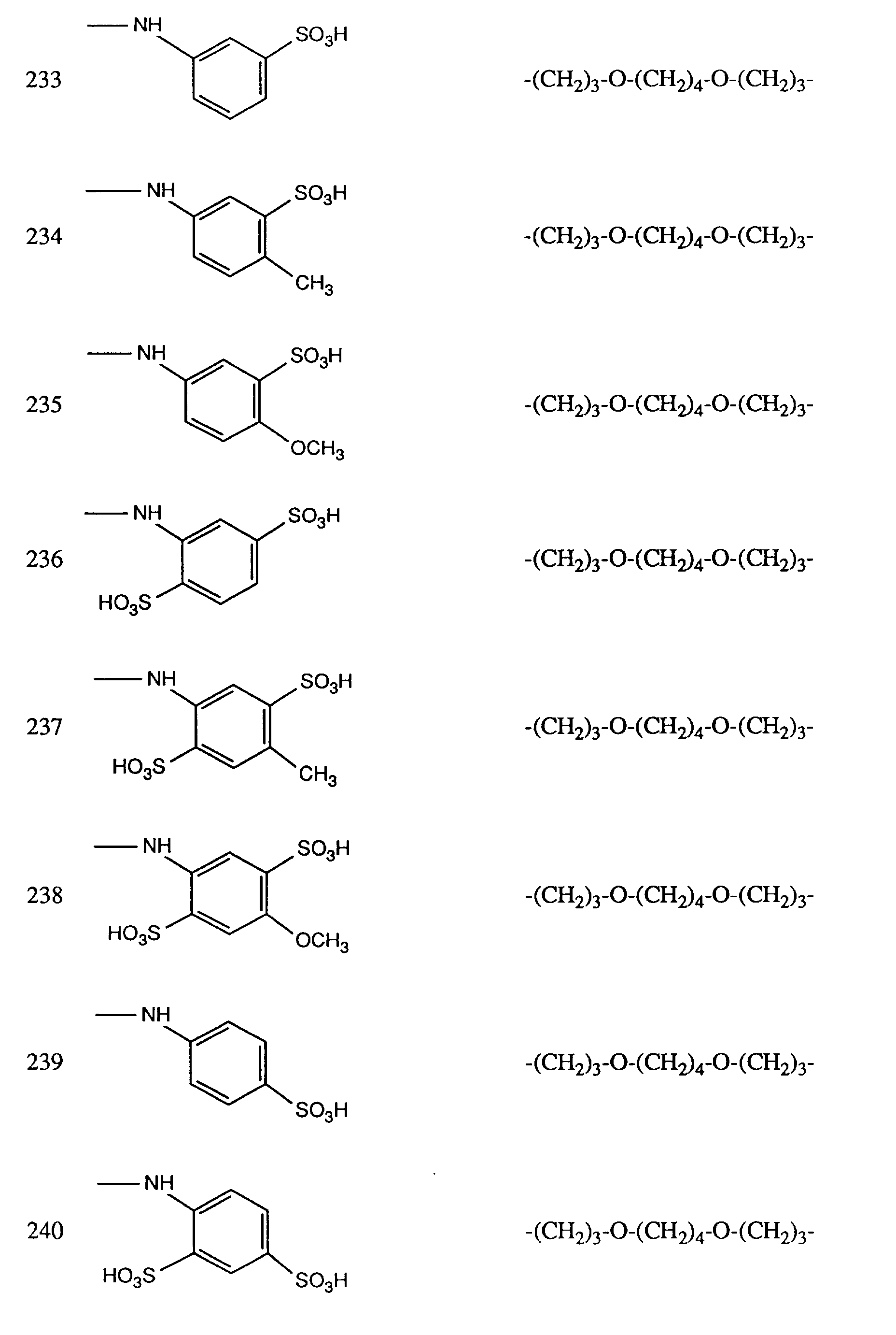

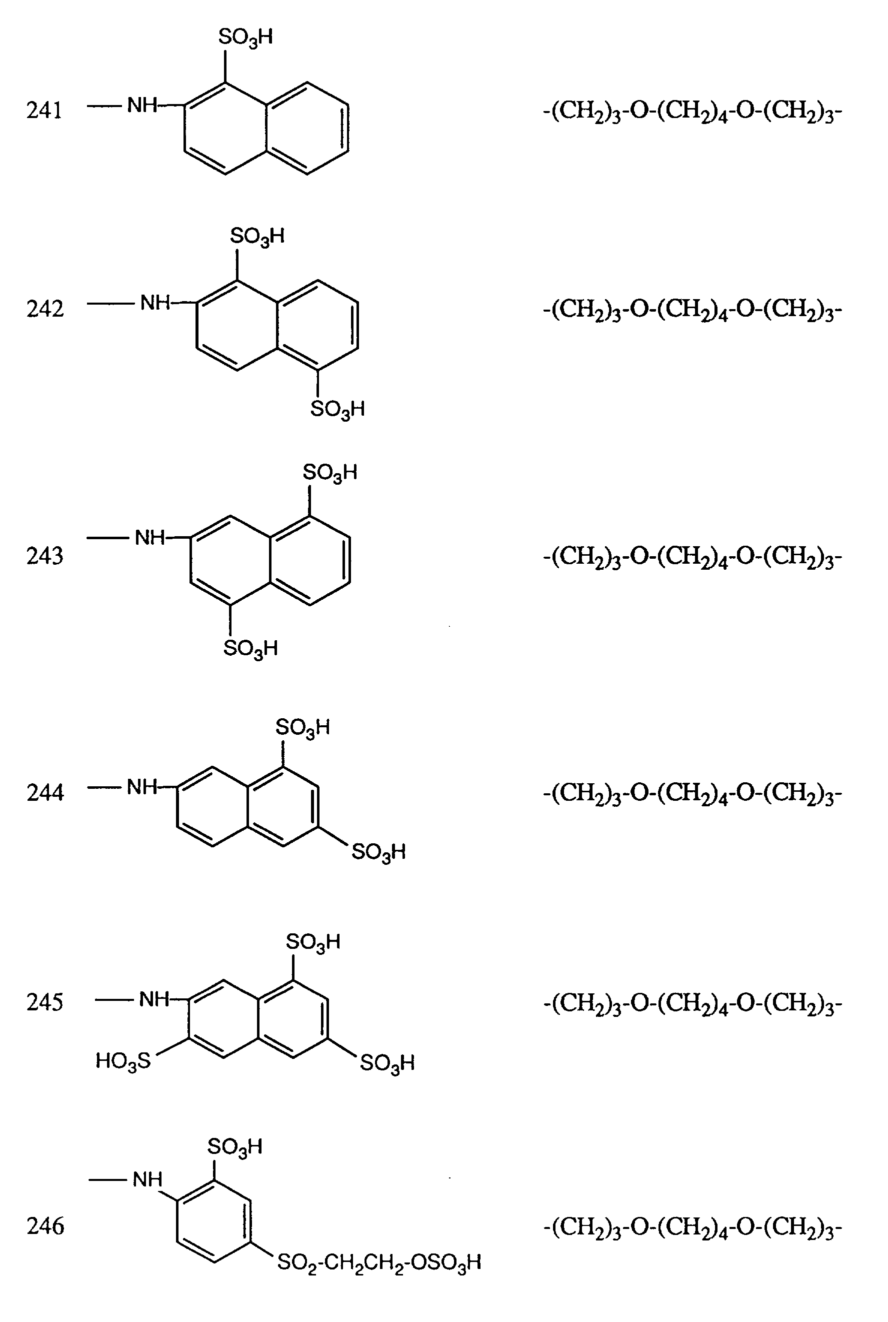

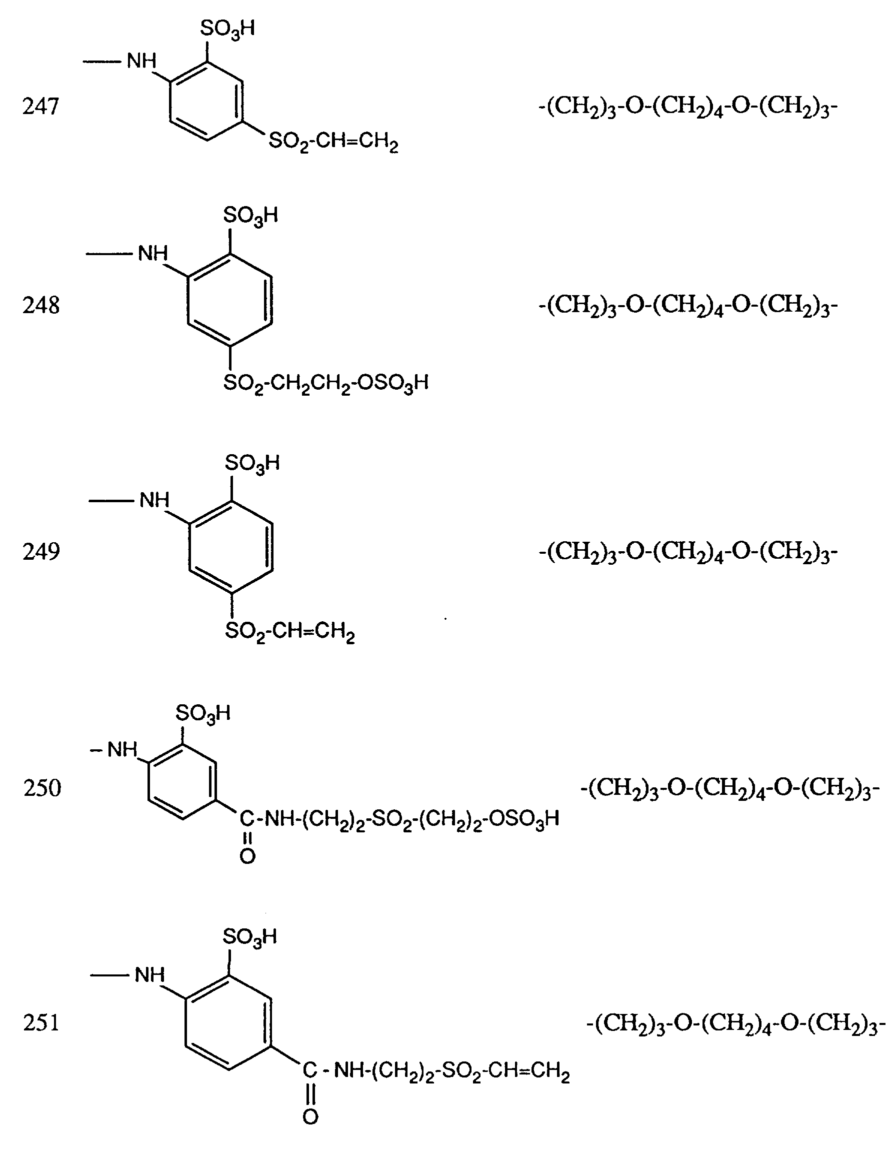

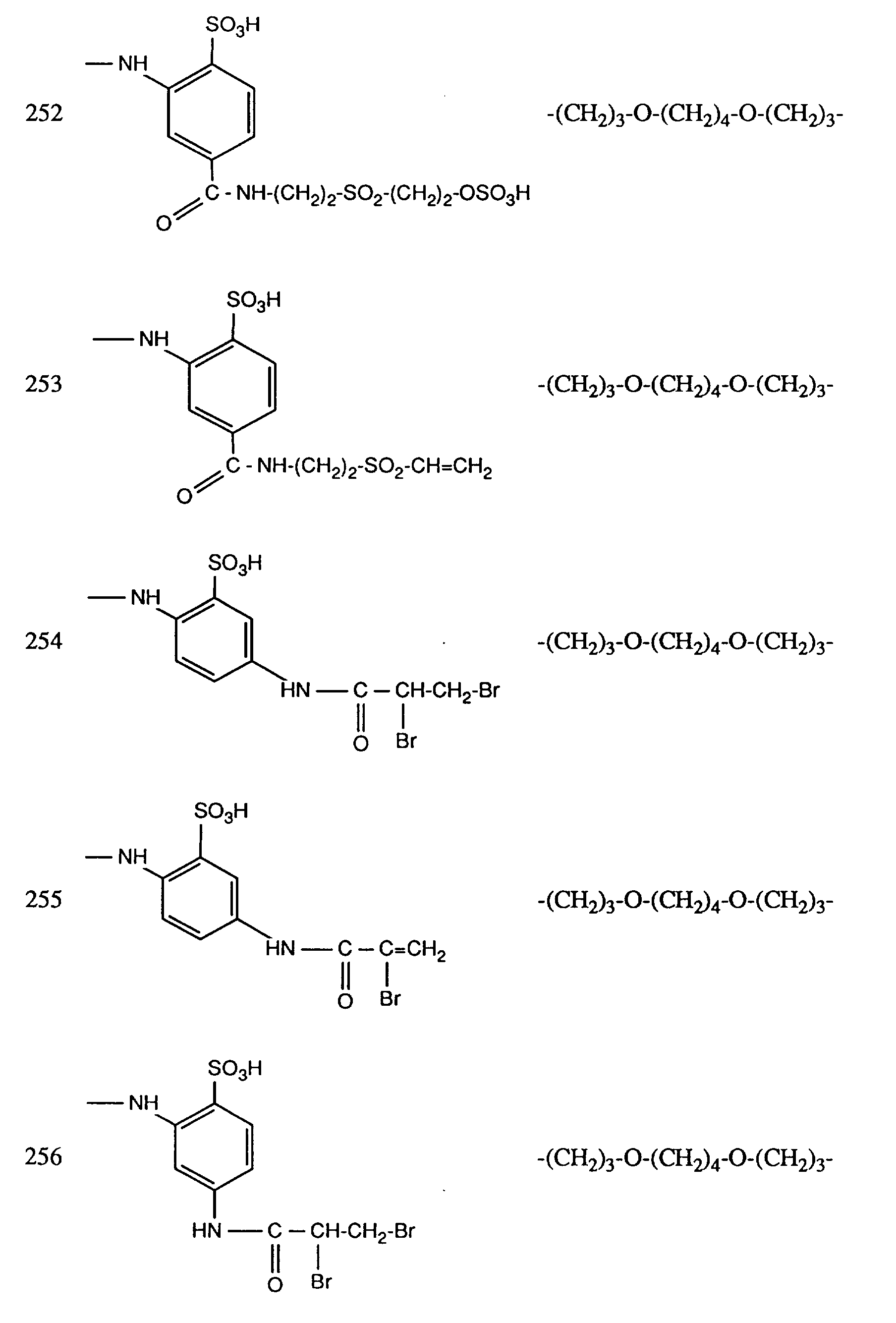

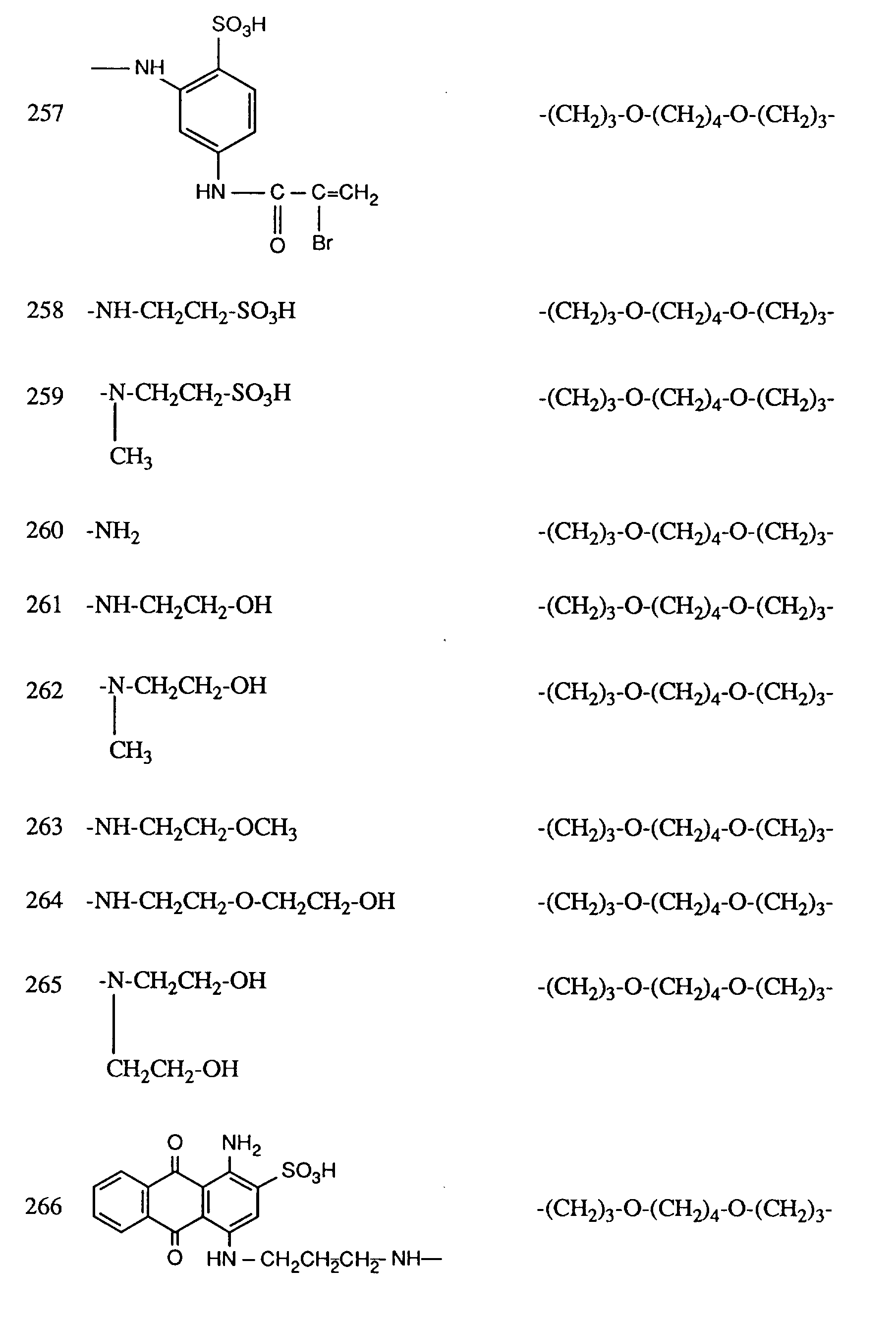

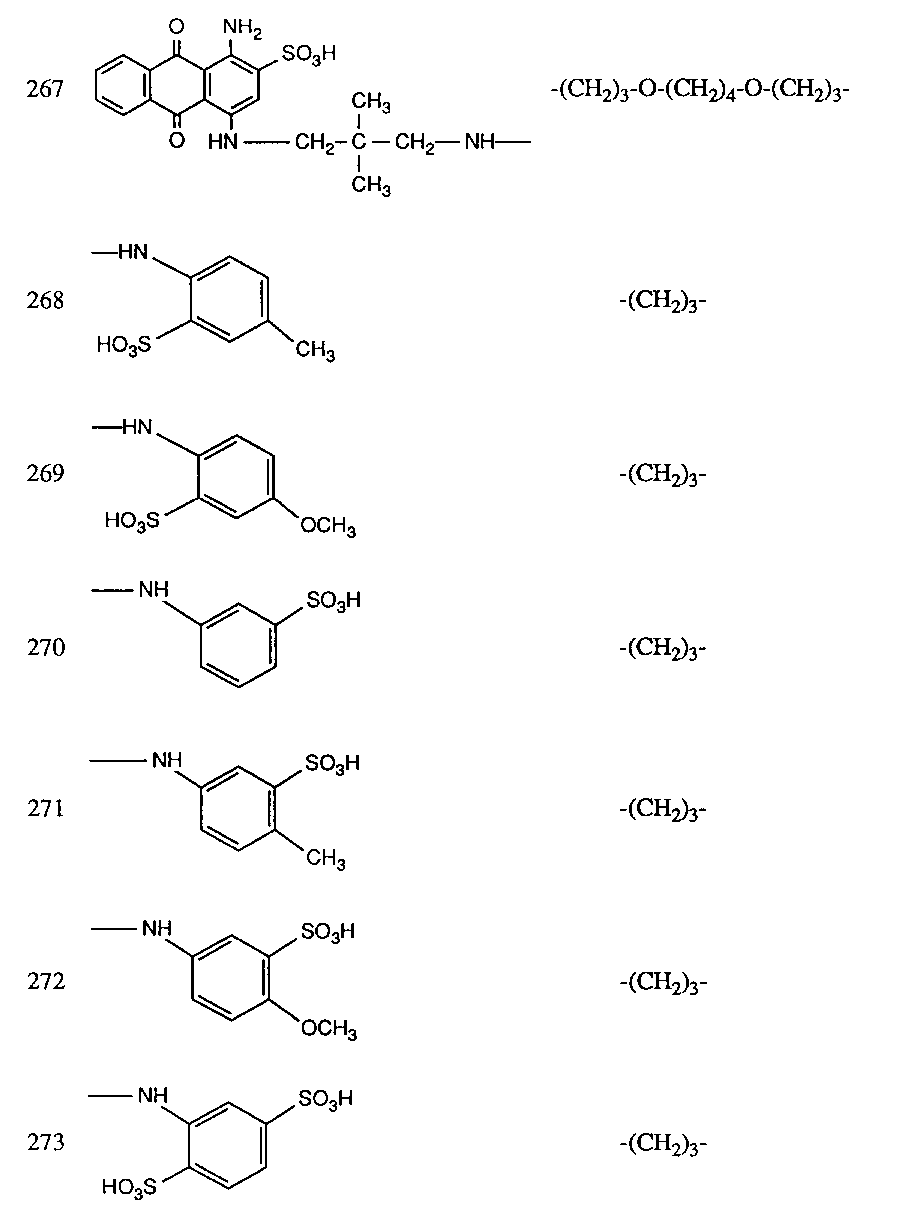

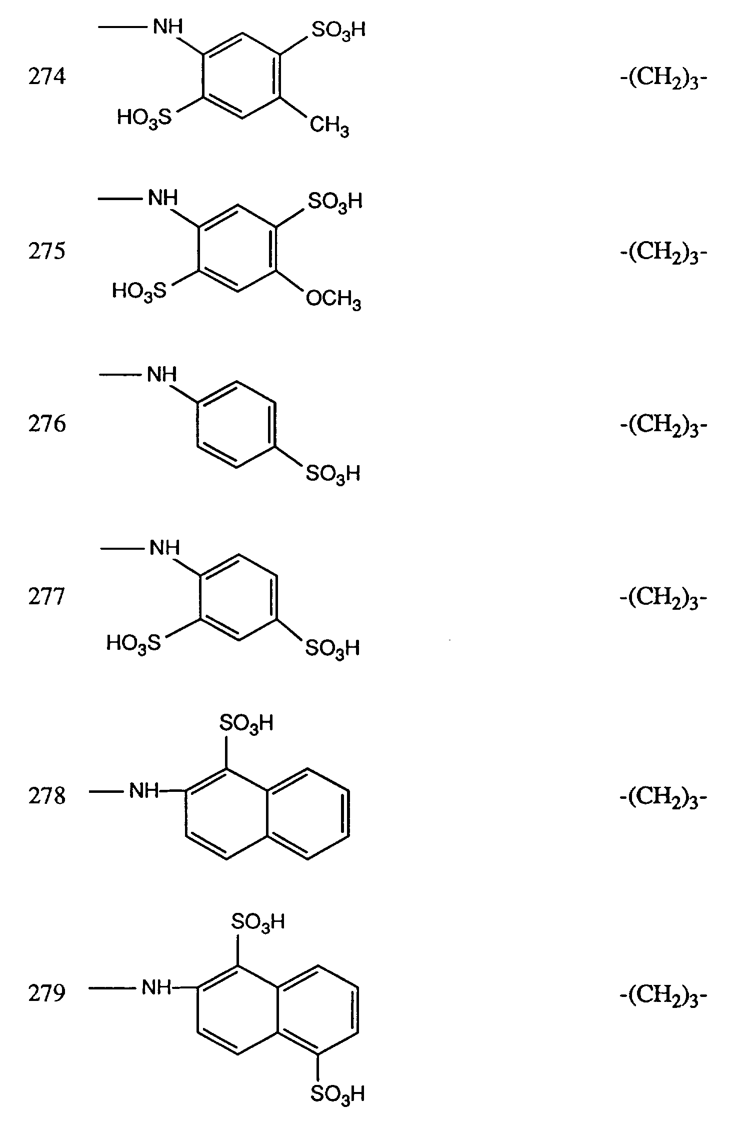

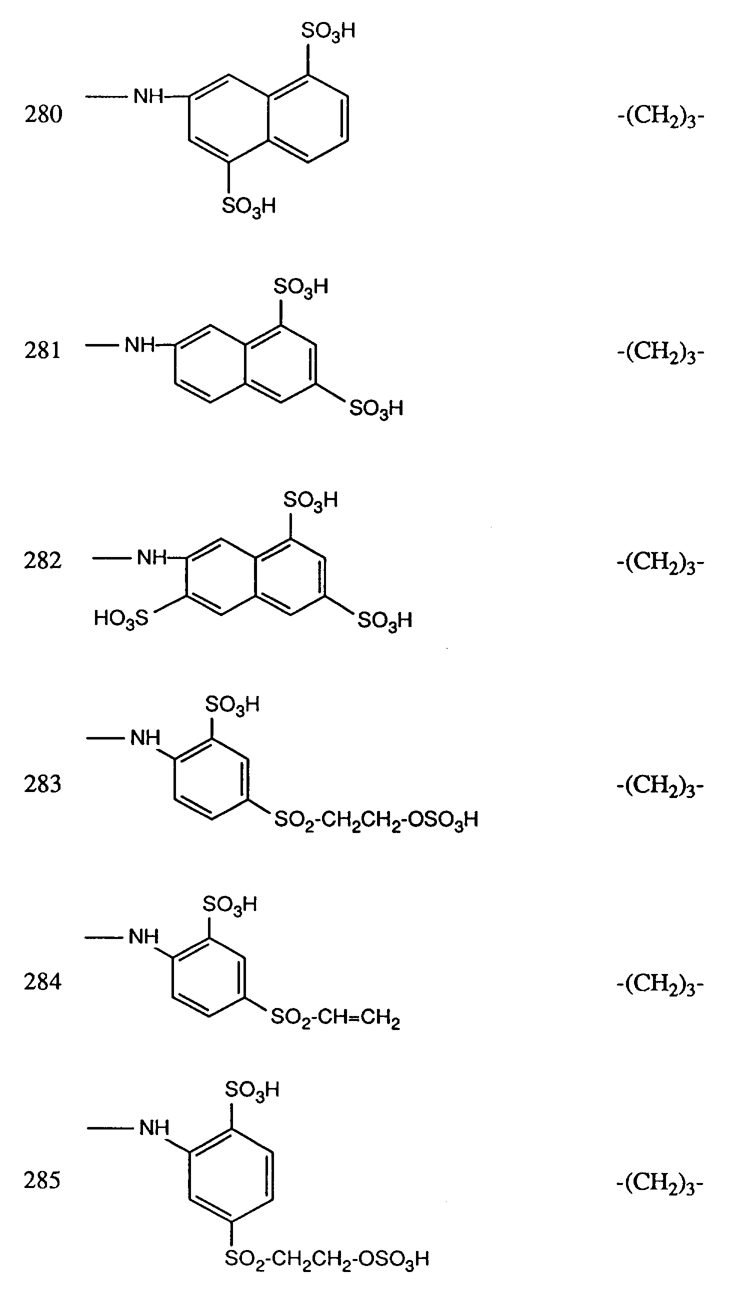

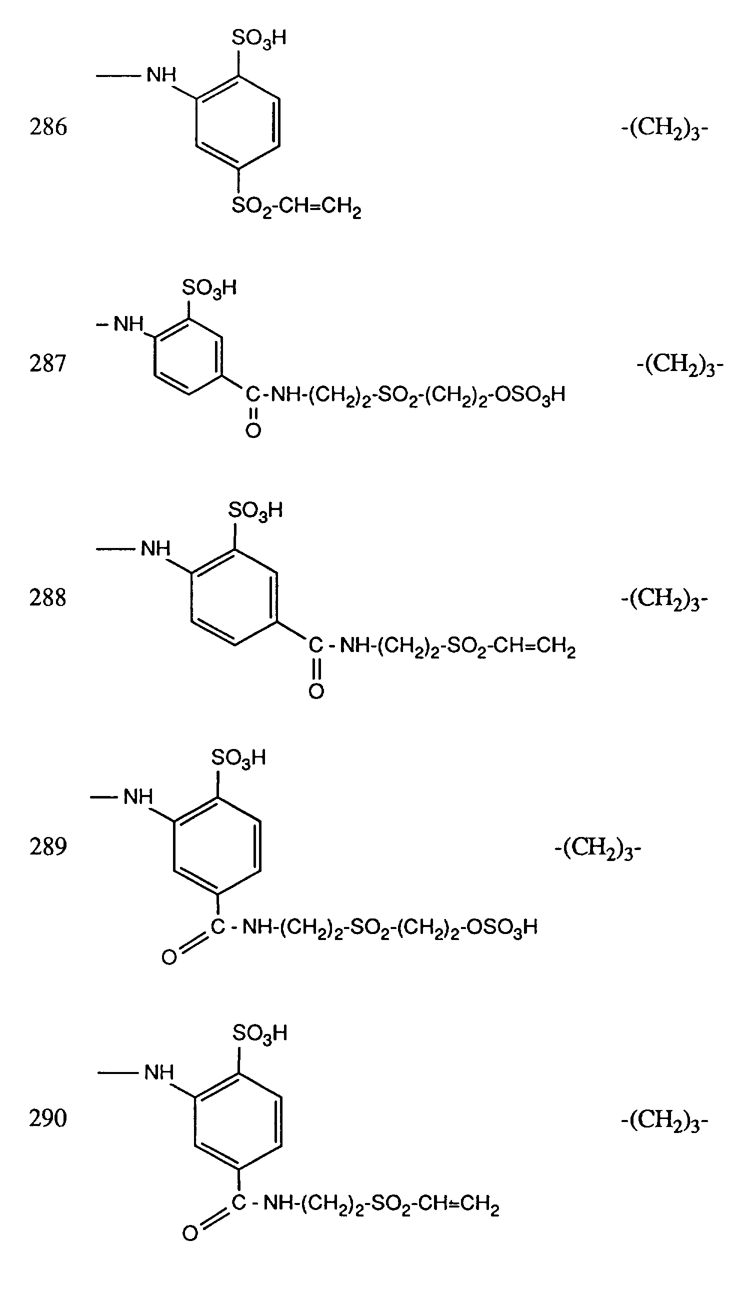

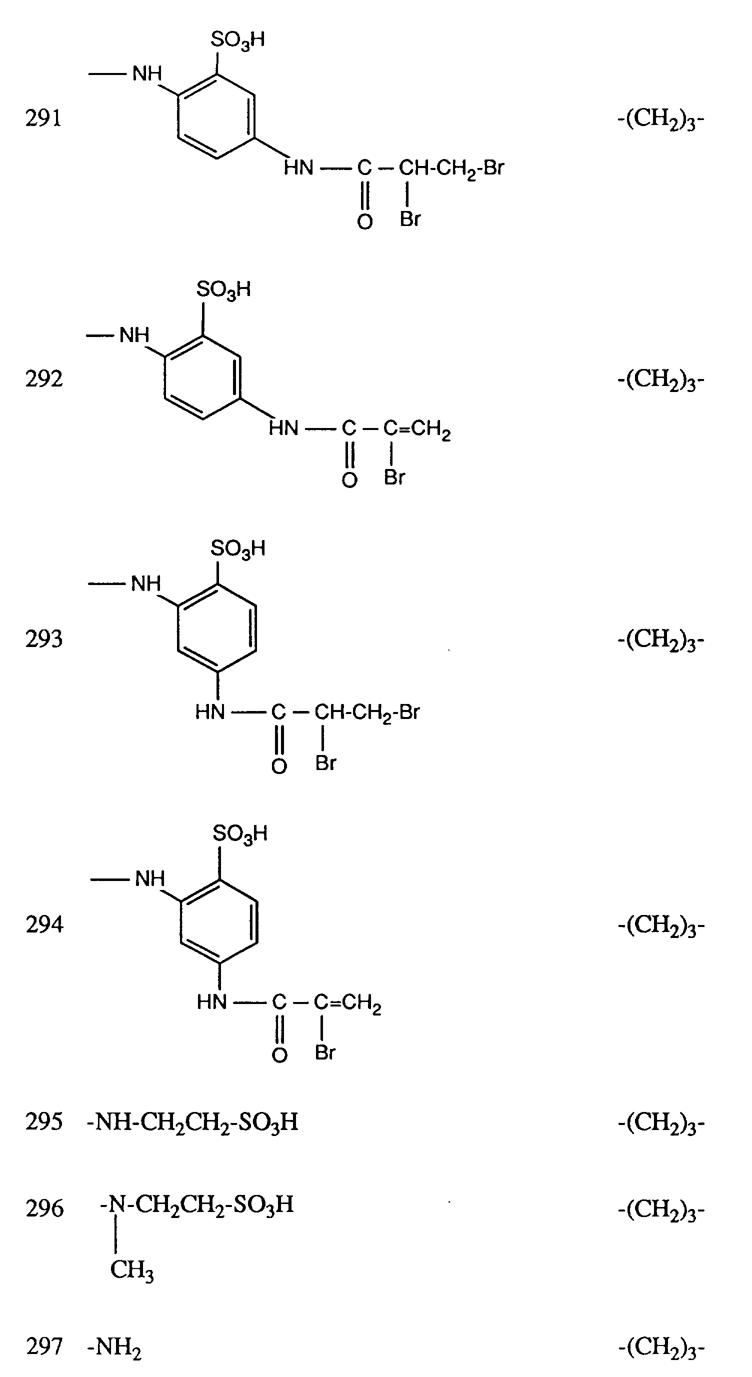

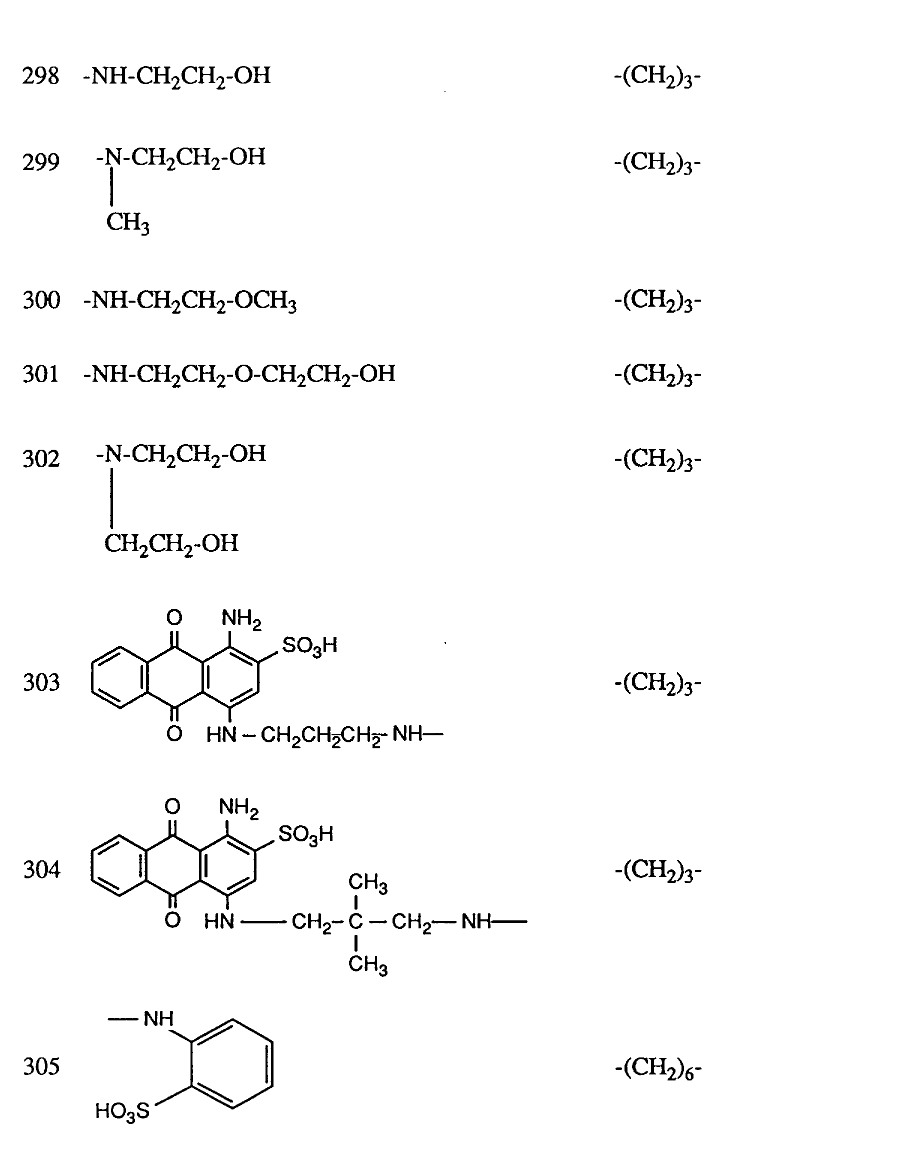

Verfährt man wie in Beispiel 1 angegeben, verwendet jedoch
anstelle von 38 Teilen 1-Amino-4-(3-aminopropyl)-anthrachinon-2-sulfonsäure eine äquimolare Menge einer Anthrachinonverbindung der Formel 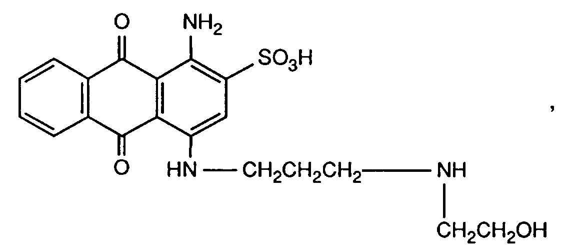 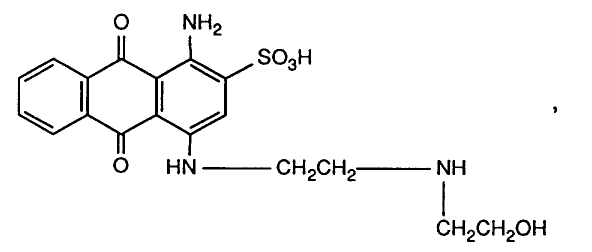 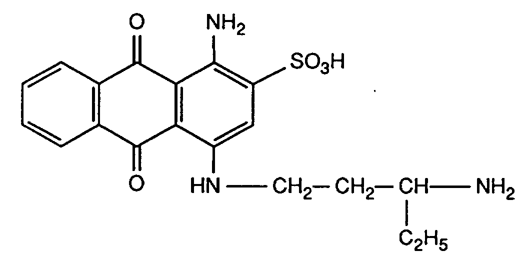 oder 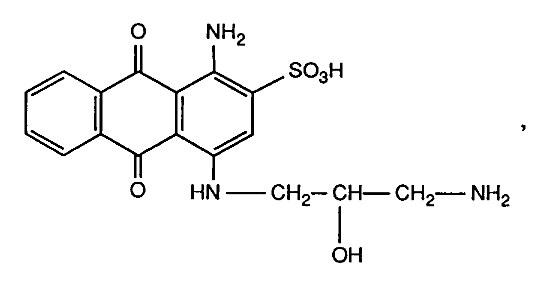 so erhält man analoge Farbstoffe, welche Baumwolle und Wolle in blauen Farbtönen färben.

Verfährt man wie in einem der Beispiele 1 bis 305 angegeben, verwendet jedoch anstelle von 19 Teilen 2,4-Diaminobenzolsulfonsäure eine äquimolare Menge
2,5-Diaminobenzolsulfonsäure,
2,4-Diaminobenzol-1,5-disulfonsäure oder
2,5-Diaminobenzol-1,4-disulfonsäure,
so erhält man analoge Farbstoffe, welche Baumwolle und Wolle in blauen Farbtönen färben.

### Beispiel 306:

Analog zu den Angaben in Beispiel 2 kann der Farbstoff der Formel 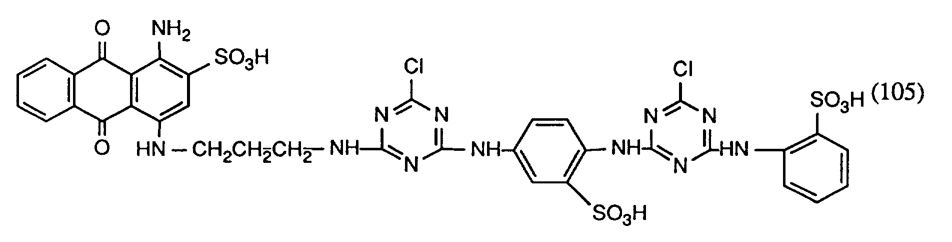 erhalten werden. Der Farbstoff der Formel (105) färbt Baumwolle und Wolle in blauen Farbtönen.

### Beispiel 307:

In eine Lösung von 17 Teilen 2-Aminobenzolsulfonsäure, mit Natronlauge neutral gelöst in 250 Teilen Wasser und gepuffert mit 5 Teilen Dinatriumhydrogenphosphat, tropft man bei einer Temperatur von 0°C 13 Teile Cyanurfluorid zu. Hierbei wird der pH durch Zugabe von Natronlauge konstant bei einem Wert von 7 gehalten. Nach beendeter Reaktion tropft man eine Lösung von 19 Teilen 2,4-Diaminobenzolsulfonsäure, mit Natronlauge neutral gelöst in 150 Teilen Wasser, zu, wobei der pH durch Zugabe von Natronlauge konstant bei einem Wert von 7 gehalten wird. Lässt sich dünnschichtchromatographisch kein Edukt mehr nachweisen, so werden weitere 13 Teile Cyanurfluorid zugetropft, wobei der pH durch Zugabe von Natronlauge bei einem Wert von 7 gehalten wird.

Zu der so erhaltenen Lösung tropft man eine weitere Lösung von 38 Teilen 1-Amino-4-(3-aminopropyl)-anthrachinon-2-sulfonsäure, gelöst mit 4 Teilen Lithiumhydroxidmonohydrat in 380 Teilen Wasser, derart zu, dass der pH einen Wert von 10 nicht überschreitet Anschliessend wird bis zum Ende der Reaktion der pH bei einem Wert von 9,5 gehalten. Nach Neutralisation wird entstandenes Kochsalz dialytisch entfernt und die Farbstofflösung im Vakuum eingedampft. Man erhält einen Farbstoff, der in Form der freien Säure der Verbindung der Formel 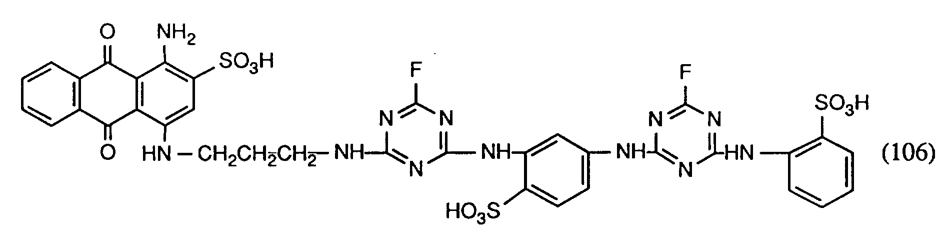 entspricht. Der Farbstoff der Formel (106) färbt Baumwolle und Wolle in blauen Farbtönen.

### Beispiel 308:

In eine Lösung von 19 Teilen 2,4-Diaminobenzolsulfonsäure, mit Natronlauge neutral gelöst in 150 Teilen Wasser und gepuffert mit 5 Teilen Dinatriumhydrogenphosphat, tropft man bei einer Temperatur von 0°C 13 Teile Cyanurfluorid zu. Hierbei wird der pH durch Zugabe von Natronlauge konstant bei einem Wert von 5 gehalten. Nach beendeter Reaktion tropft man die erhaltene Lösung zu einer Lösung von 38 Teilen 1-Amino-4-(3-aminopropyl)-anthrachinon-2-sulfonsäure, gelöst mit 4 Teilen Lithiumhydroxidmonohydrat in 380 Teilen Wasser, derart zu, dass der pH einen Wert von 9 nicht überschreitet. Anschliessend wird bis zum Ende der Reaktion der pH bei einem Wert von 8,5 gehalten (Lösung 1).

In eine Lösung von 17 Teilen 2-Aminobenzolsulfonsäure, mit Natronlauge neutral gelöst in 250 Teilen Wasser und gepuffert mit 5 Teilen Dinatriumhydrogenphosphat, tropft man bei einer Temperatur von 0°C 13 Teile Cyanurfluorid zu. Hierbei wird der pH durch Zugabe von Natronlauge konstant bei einem Wert von 7 gehalten. Anschliessend wird die wie oben angegeben erhältliche Lösung 1 derart zugetropft, dass der pH einen Wert von 7 nicht übersteigt. Dann wird durch Zugabe von Natronlauge der pH bei dem Wert von 7 gehalten. Nach beendeter Reaktion wird entstandenes Kochsalz dialytisch entfernt und die Farbstofflösung im Vakuum eingedampft. Man erhält einen Farbstoff, der in Form der freien Säure der Verbindung der Formel 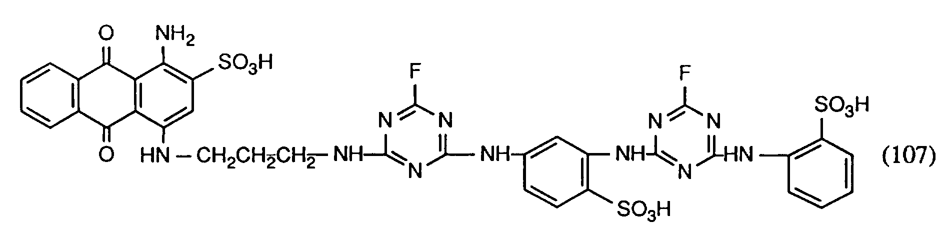 entspricht. Der Farbstoff der Formel (107) färbt Baumwolle und Wolle in blauen Farbtönen.

Verfährt man wie in Beispiel 307 angegeben, oder verfährt man wie in Beispiel 308 angegeben, verwendet jedoch anstelle von 17 Teilen 2-Aminobenzolsulfonsäure eine äquimolare Menge eines Amins der Formel H-V₁, und
anstelle von 38 Teilen 1-Amino-4-(3-aminopropyl)-anthrachinon-2-sulfonsäure eine äquimolare Menge einer Anthrachinonverbindung der Formel (103), wobei B₁ und V₁ jeweils die in den Beispielen 3 bis 305 der Tabelle 1 angegebenen Bedeutungen haben, so erhält man Farbstoffe der allgemeinen Formel 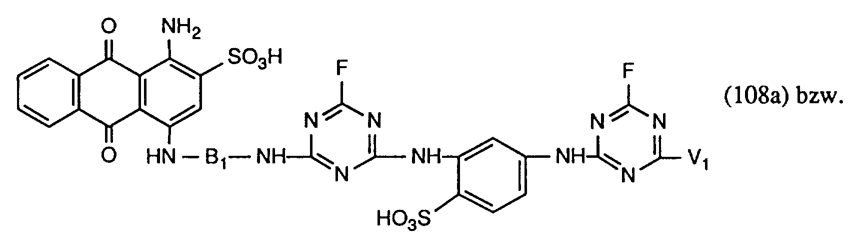 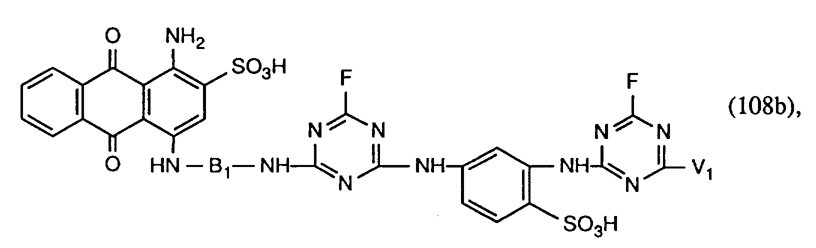 worin B₁ und V₁ jeweils die in den Beispielen 3 bis 305 der Tabelle 1 angegebenen Bedeutungen haben, und welche Baumwolle und Wolle in blauen Farbtönen färben.

Analoge Farbstoffe werden erhalten, wenn man anstelle von 19 Teilen
2,4-Diaminobenzolsulfonsäure eine äquimolare Menge
2,5-Diaminobenzolsulfonsäure,
2,4-Diaminobenzol-1,5-disulfonsäure oder
2,5-Diaminobenzol-1,4-disulfonsäure,
verwendet.

### Beispiel 309:

Analog zu den Angaben in Beispiel 308 kann der Farbstoff der Formel 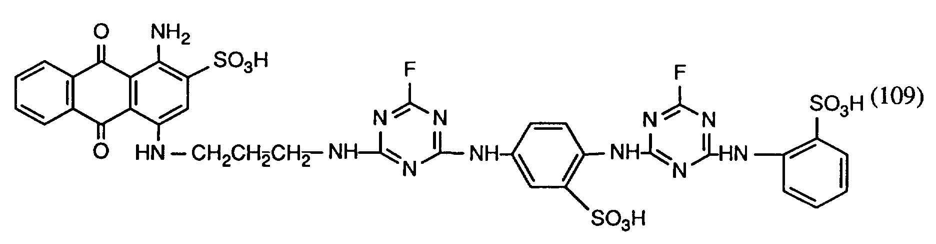 erhalten werden. Der Farbstoff der Formel (109) färbt Baumwolle und Wolle in blauen Farbtönen.

### Beispiel 310:

In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 32 Teilen einer Verbindung der Formel 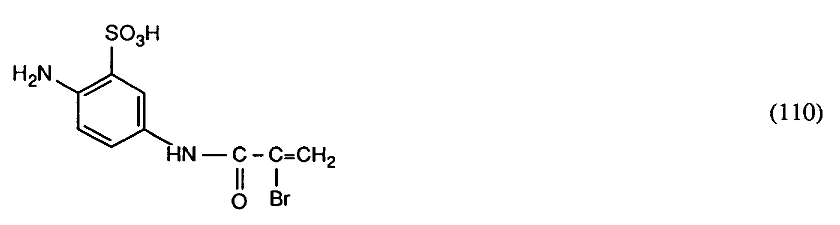 in 320 Teilen Wasser. Hierbei wird der pH durch Zugabe von Natronlauge konstant bei einem Wert von 4,5 gehalten. Nach beendeter Reaktion tropft man eine Lösung von 38 Teilen 1-Amino-4-(3-aminopropyl)-anthrachinon-2-sulfonsäure, gelöst mit 4 Teilen Lithiumhydroxidmonohydrat in 380 Teilen Wasser, derart zu, dass der pH einen Wert von 10 nicht überschreitet Anschliessend wird bis zum Ende der Reaktion der pH bei einem Wert von 9,5 gehalten. Durch Zugabe von Natriumchlorid wird der Farbstoff abgeschieden, abfiltriert, mit wässriger Natriumchloridlösung gewaschen und getrocknet. Man erhält einen Farbstoff, der in Form der freien Säure der Verbindung der Formel 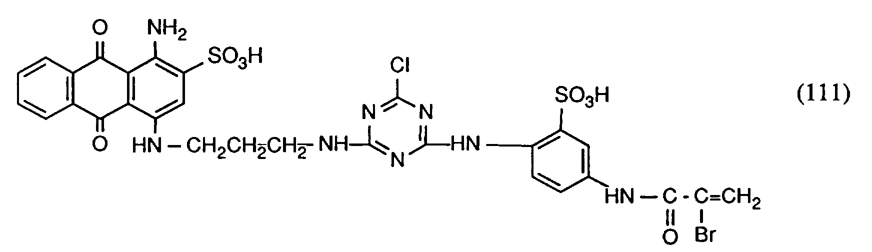 entspricht. Der Farbstoff der Formel (111) färbt Baumwolle und Wolle in blauen Farbtönen.

### Beispiele 311 bis 344:

Verfährt man wie in Beispiel 310 angegeben, verwendet jedoch anstelle von 32 Teilen einer Verbindung der Formel (110) eine äquimolare Menge eines Amins der Formel H-V₁, und
anstelle von 38 Teilen 1-Amino-4-(3-aminopropyl)-anthrachinon-2-sulfonsäure eine äquimolare Menge einer Anthrachinonverbindung der Formel 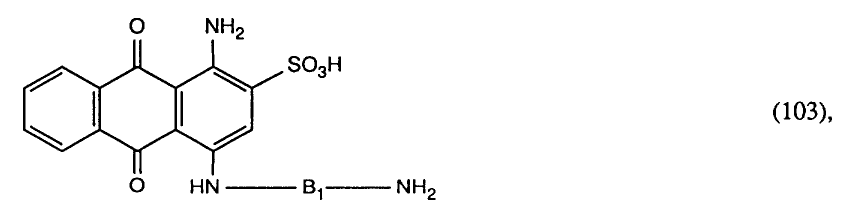 so erhält man die in der folgenden Tabelle 2 angegebenen Farbstoffe der allgemeinen Formel 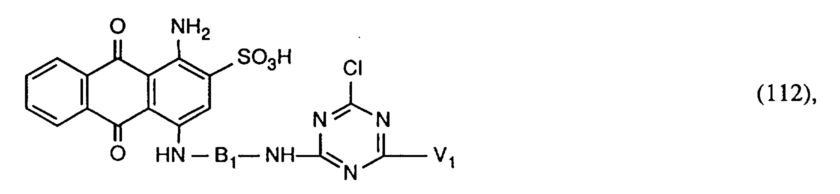 wobei B₁ und V₁ jeweils die in der folgenden Tabelle 2 angegebenen Bedeutungen haben.

Die in Tabelle 2 angegebenen Farbstoffe färben Baumwolle und Wolle in blauen Farbtönen.

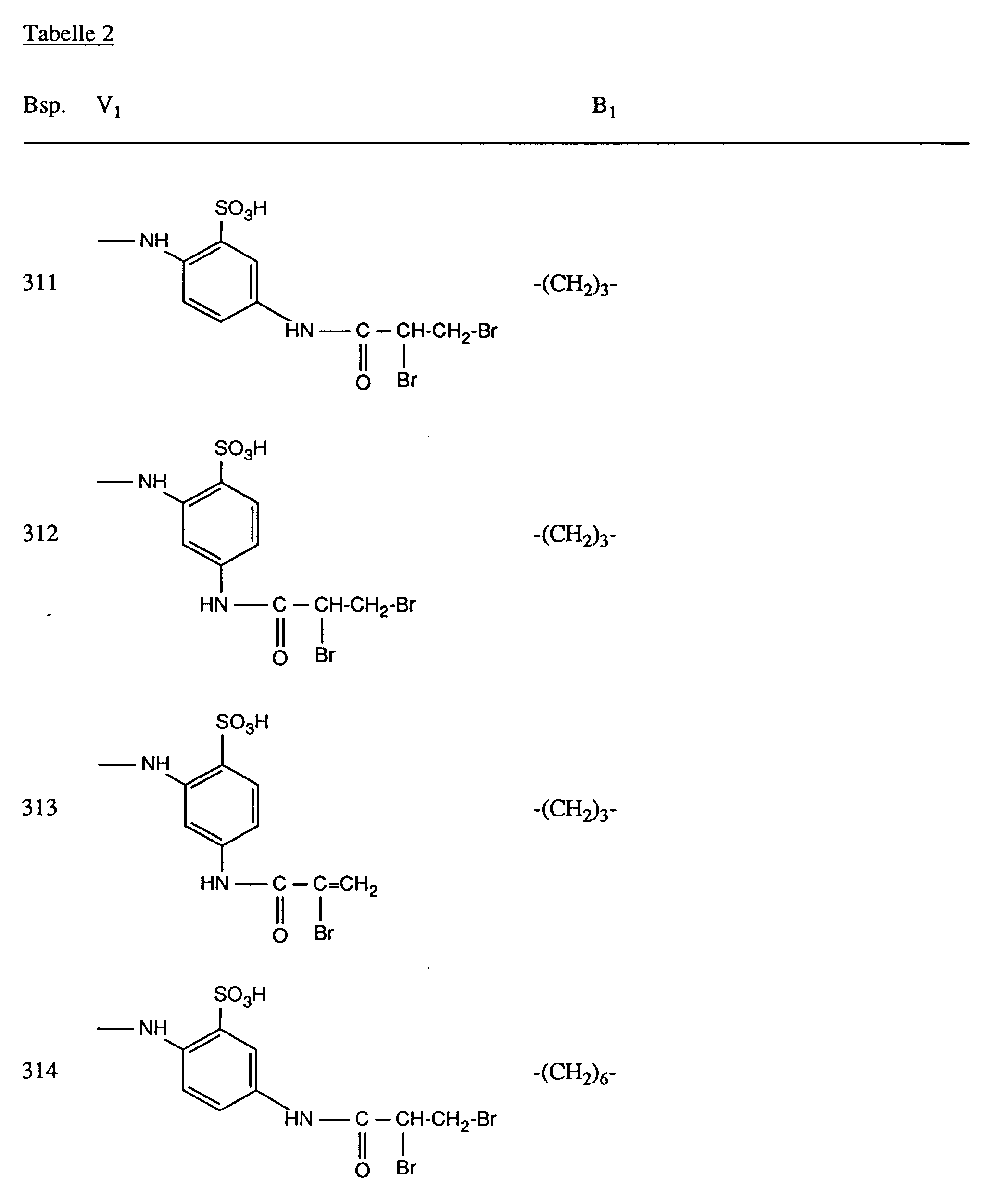

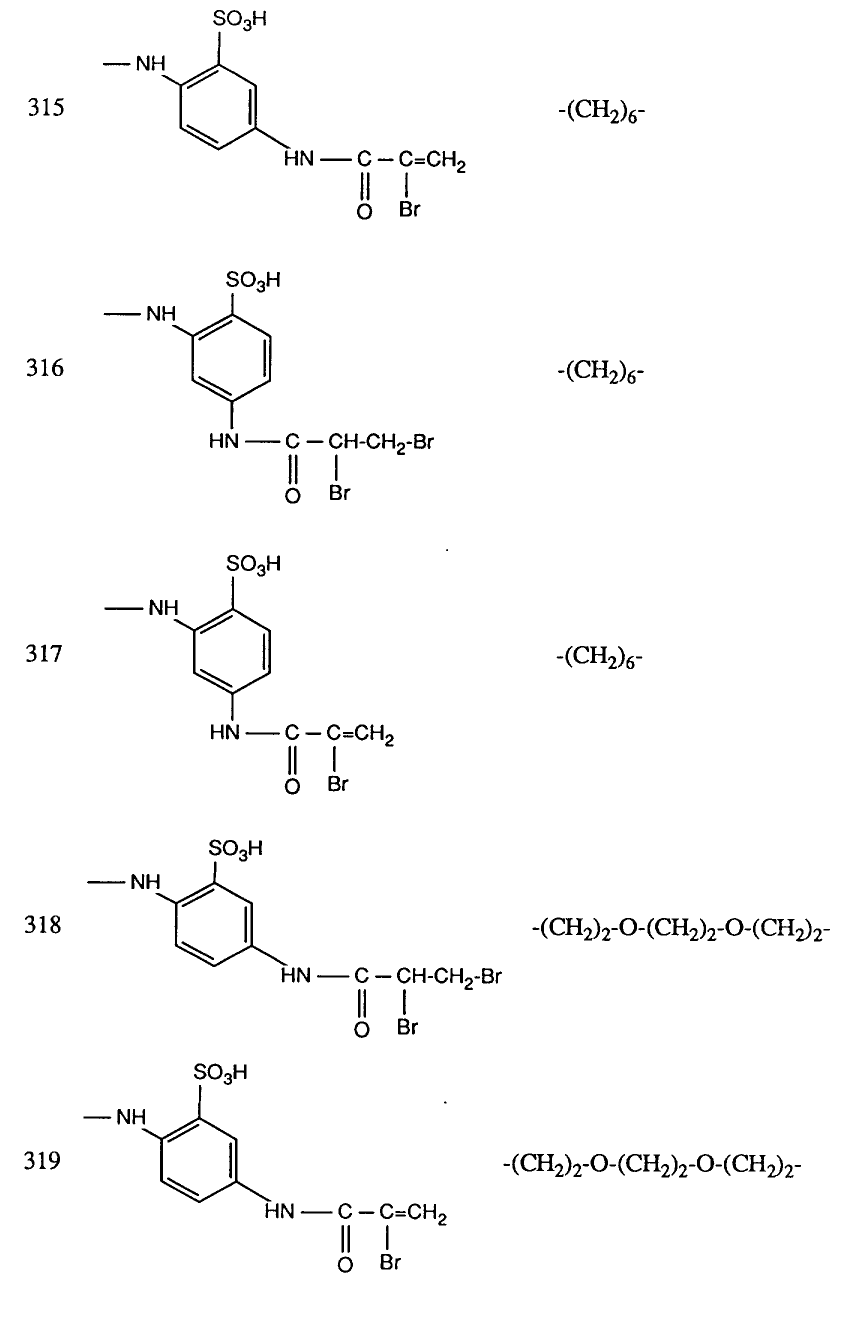

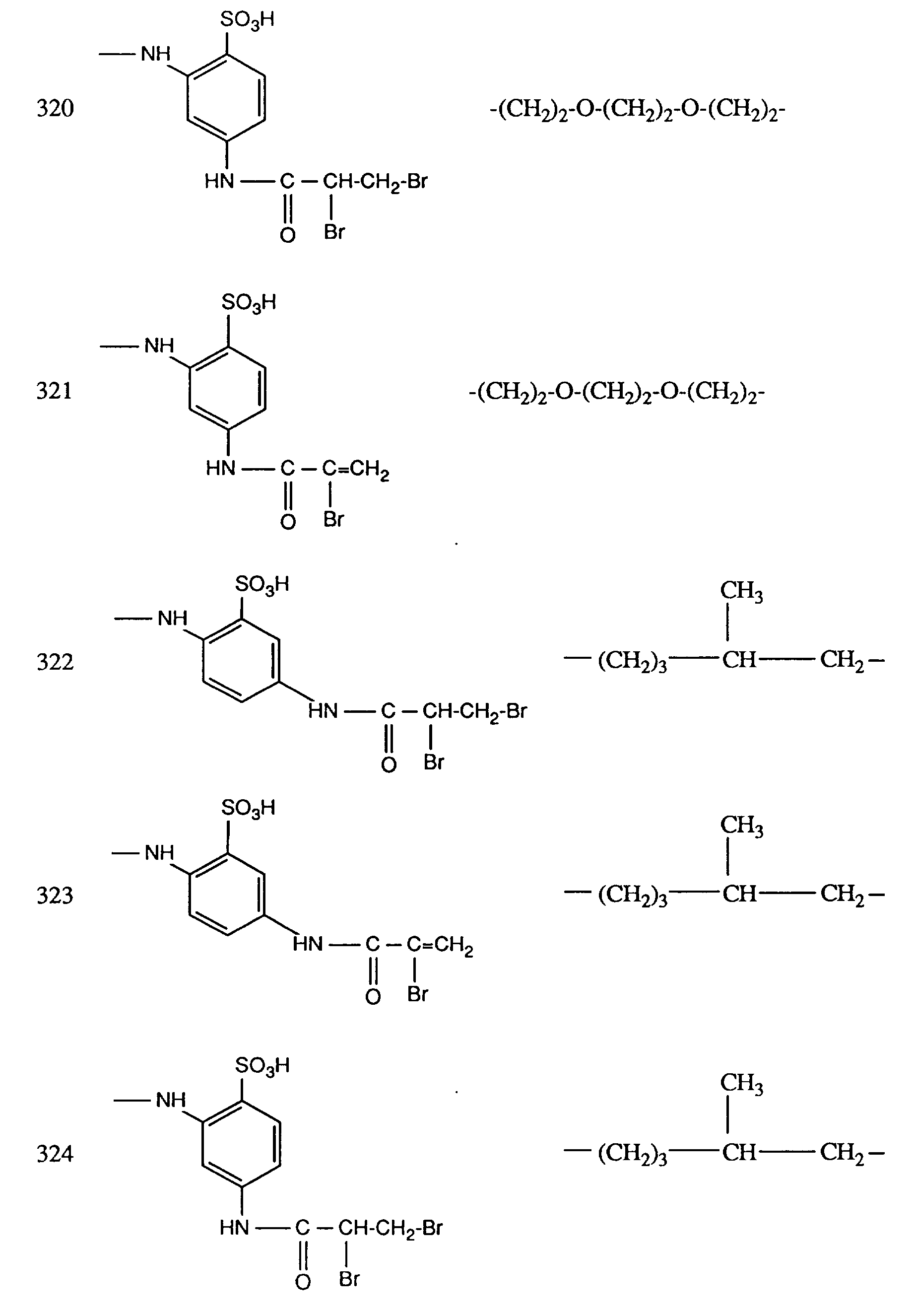

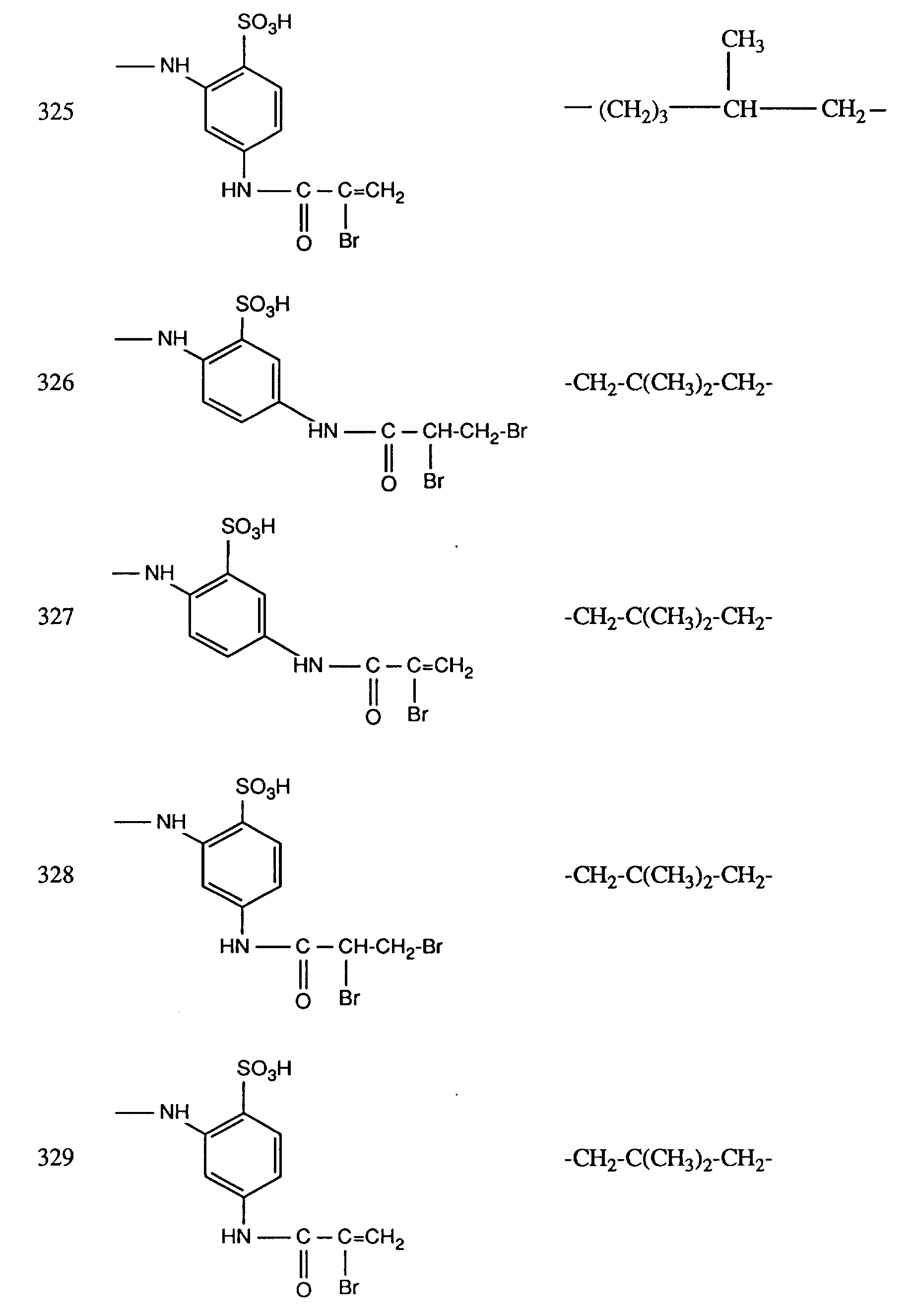

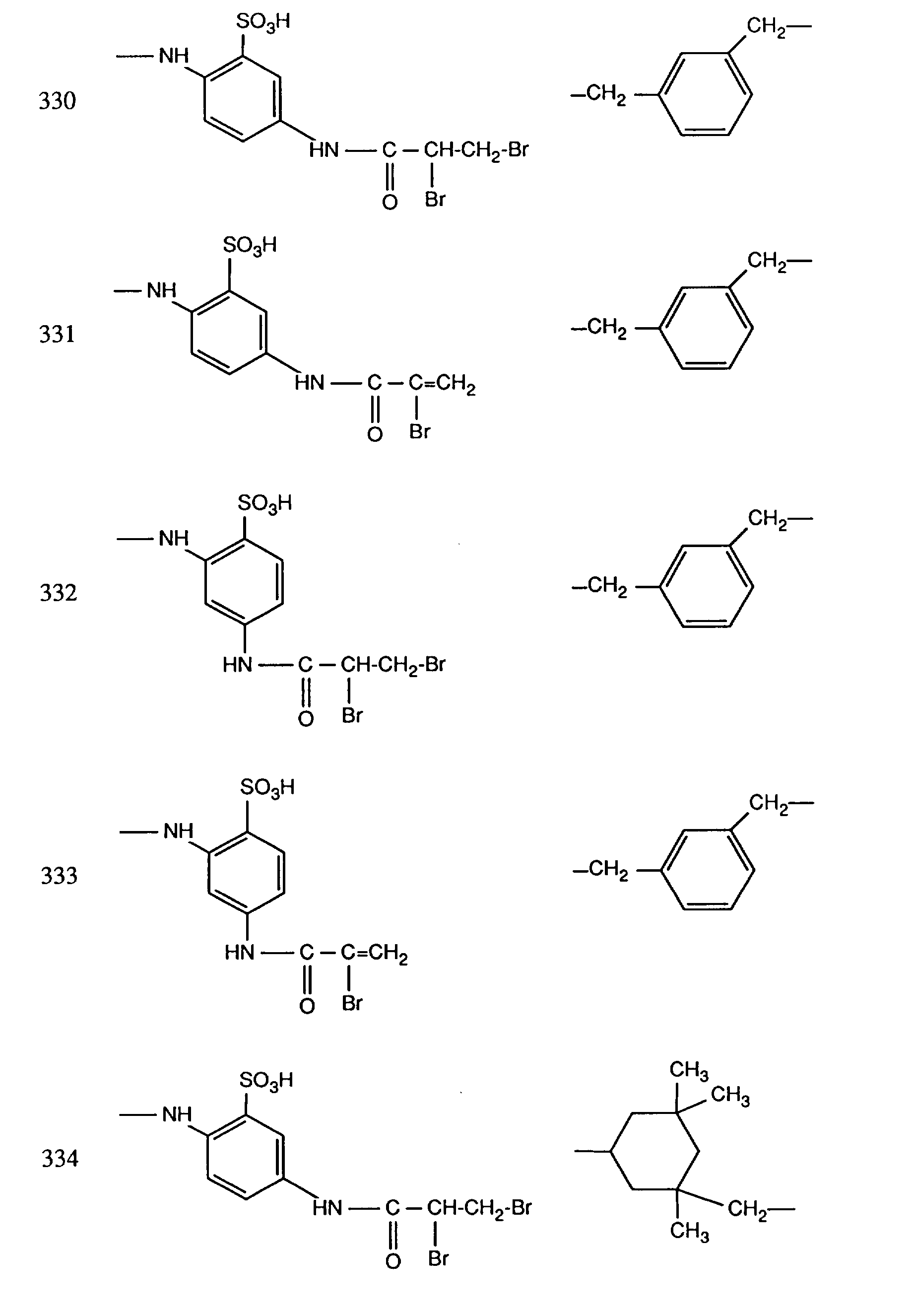

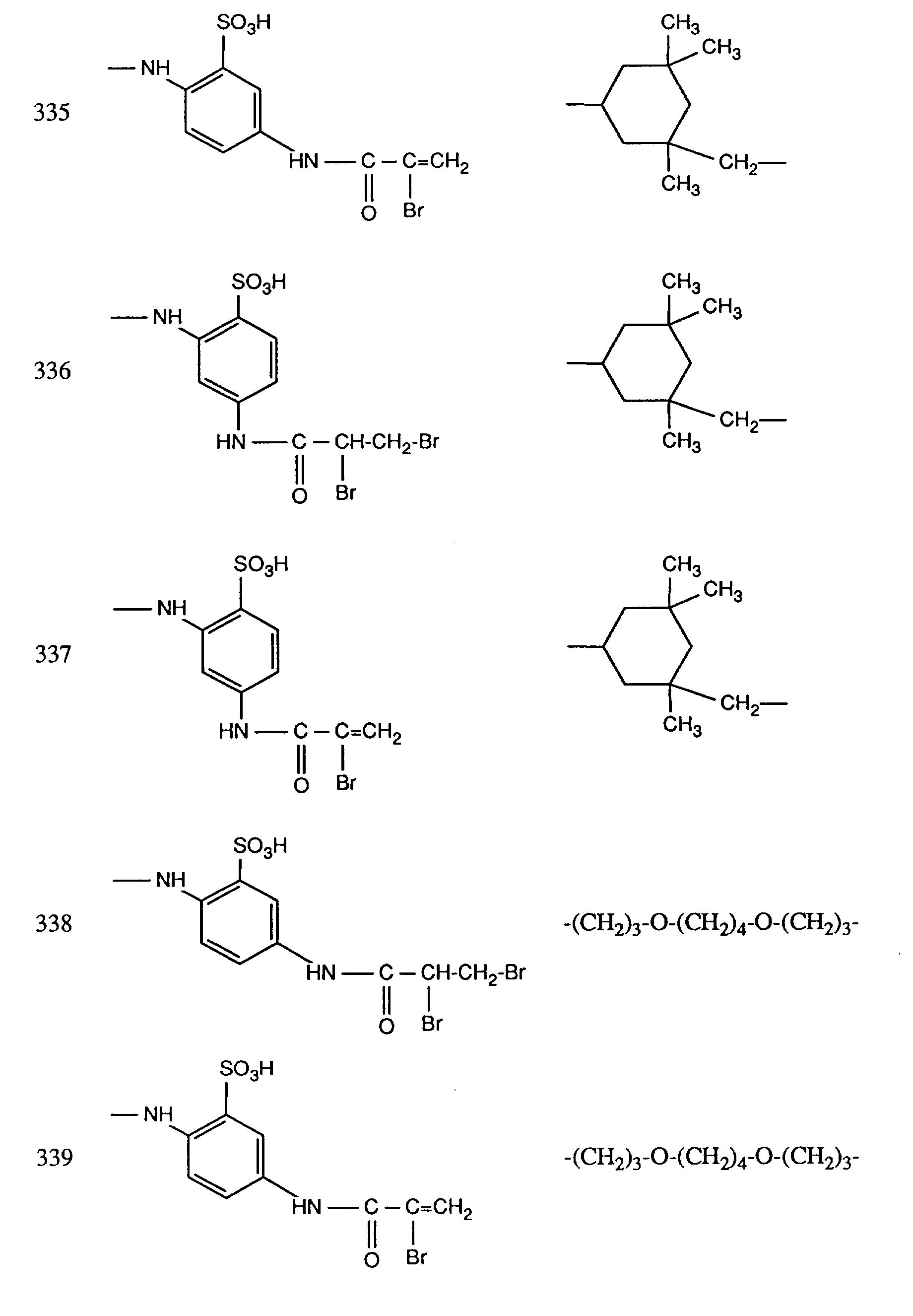

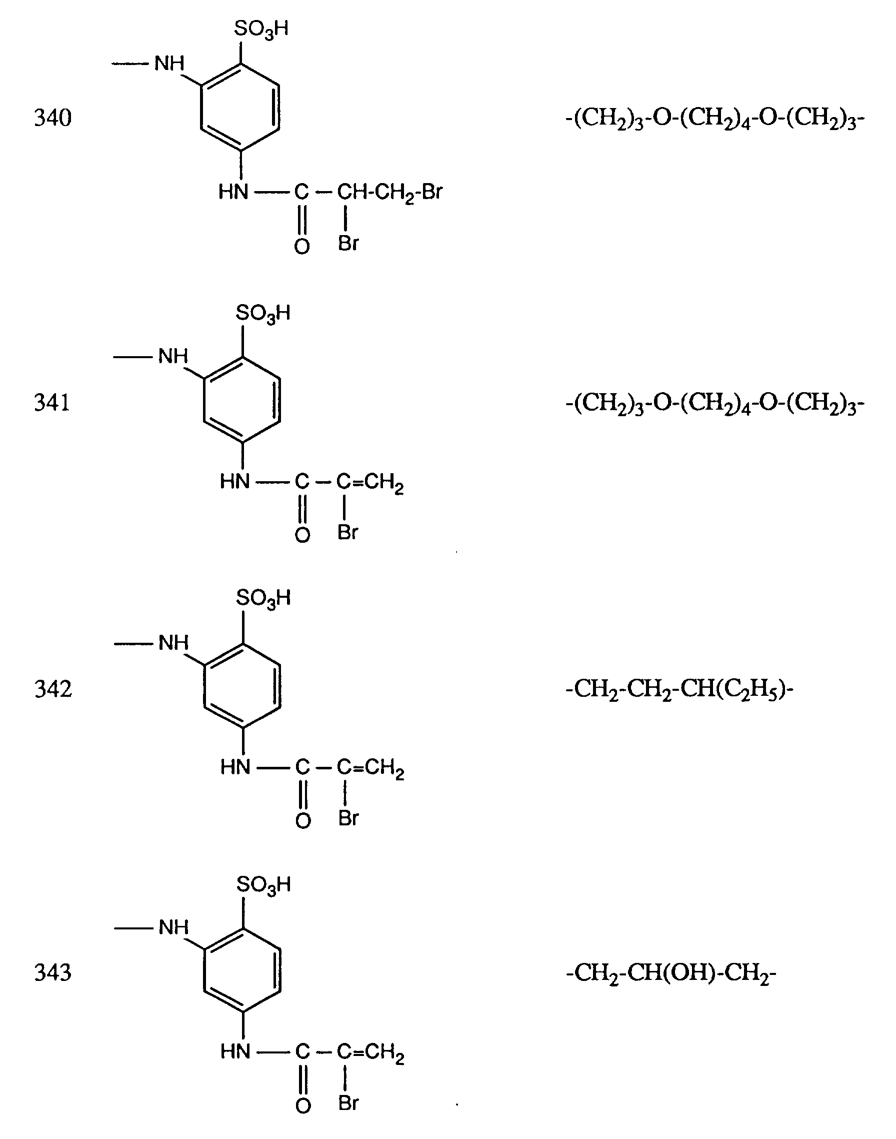

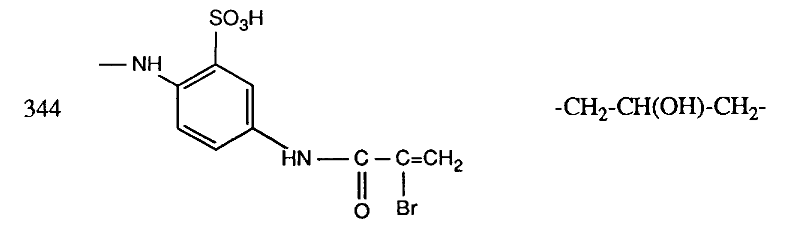

Verfährt man wie in Beispiel 310 angegeben, verwendet jedoch anstelle von 38 Teilen 1-Amino-4-(3-aminopropyl)-anthrachinon-2-sulfonsäure eine äquimolare Menge einer Anthrachinonverbindung der Formel 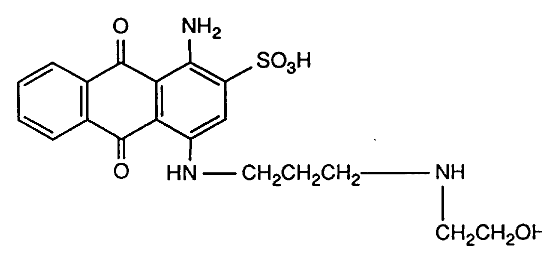 oder 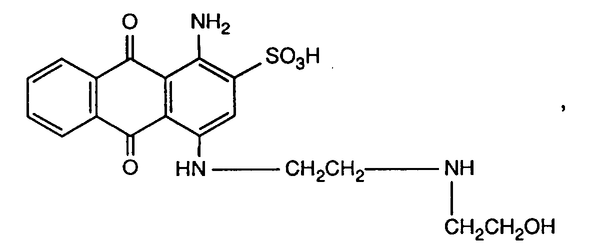 so erhält man analoge Farbstoffe, welche Baumwolle und Wolle in blauen Farbtönen färben.

### Beispiel 345:

In eine Lösung von 32 Teilen einer Verbindung der Formel 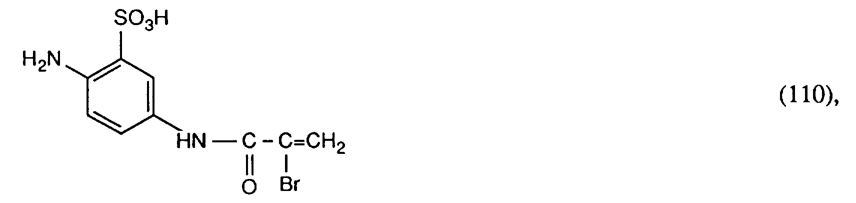 mit Natronlauge neutral gelöst in 320 Teilen Wasser und gepuffert mit 5 Teilen Dinatriumhydrogenphosphat, tropft man bei einer Temperatur von 0°C 13 Teile Cyanurfluorid zu. Hierbei wird der pH durch Zugabe von Natronlauge konstant bei einem Wert von 7 gehalten. Nach beendeter Reaktion tropft man eine Lösung von 38 Teilen 1-Amino-4-(3-aminopropyl)-anthrachinon-2-sulfonsäure, gelöst mit 4 Teilen Lithiumhydroxidmonohydrat in 380 Teilen Wasser, derart zu, dass der pH einen Wert von 10 nicht überschreitet. Anschliessend wird bis zum Ende der Reaktion der pH bei einem Wert von 9,5 gehalten. Durch Zugabe von Natriumchlorid wird der Farbstoff abgeschieden, abfiltriert, mit wässriger Natriumchloridlösung gewaschen und getrocknet. Man erhält einen Farbstoff, der in Form der freien Säure der Verbindung der Formel 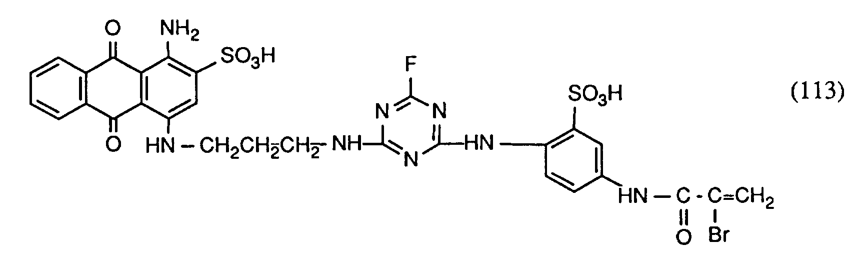 entspricht. Der Farbstoff der Formel (113) färbt Baumwolle und Wolle in blauen Farbtönen.

Verfährt man wie in Beispiel 345 angegeben, verwendet jedoch anstelle von 32 Teilen einer Verbindung der Formel (110) eine äquimolare Menge eines Amins der Formel H-V₁, und
anstelle von 38 Teilen 1-Amino-4-(3-aminopropyl)-anthrachinon-2-sulfonsäure eine äquimolare Menge einer Anthrachinonverbindung der Formel (103), wobei B₁ und V₁ jeweils die in den Beispielen 311 bis 344 der Tabelle 2 angegebenen Bedeutungen haben, so erhält man Farbstoffe der allgemeinen Formel 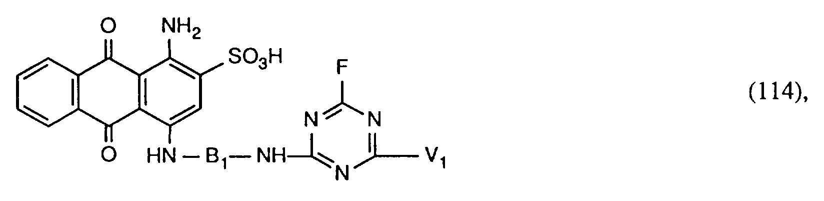 worin B₁ und V₁ jeweils die in den Beispielen 311 bis 344 der Tabelle 2 angegebenen Bedeutungen haben, und welche Baumwolle und Wolle in blauen Farbtönen färben.

In den Beispielen, worin ein eine β-Sulfatoäthylsulfonyl- oder α,β-Dibrompropionylaminogruppe enthaltendes Produkt mit einer Anthrachinonverbindung umgesetzt wird, erfolgt diese Umsetzung in verdünnterem Medium bei einem pH-Wert von ca. 8,5.

### Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Anthrachinonfarbstoffe der Formel 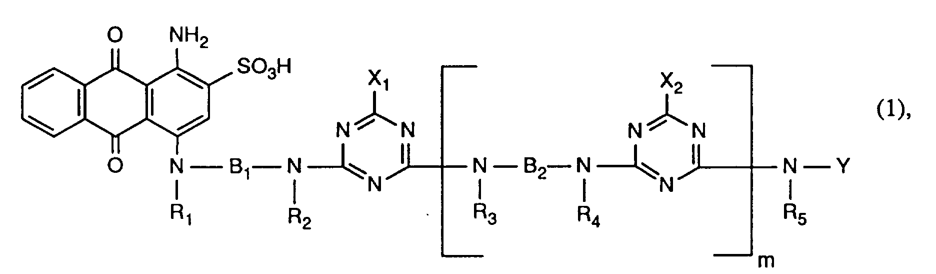
worin
R₁, R₂, R₃, R₄ und R₅ unabhängig voneinander Wasserstoff oder gegebenenfalls substituiertes C₁-C₁₂-Alkyl bedeuten,
X₁ und X₂ unabhängig voneinander Chlor oder Fluor sind,
B₁ ein gegebenenfalls durch Hydroxyl, Sulfo oder Sulfato substituierter und gegebenenfalls durch Sauerstoff unterbrochener C₂-C₁₂-Alkylenrest; oder
ein gegebenenfalls im Cyclohexylenring durch C₁-C₄-Alkyl substituierter Cyclohexylenrest, C₁-C₄-Alkylen-cyclohexylenrest, Cyclohexylen-C₁-C₄-alkylenrest, C₁-C₄-Alkylen-cyclohexylen-C₁-C₄-alkylenrest oder Cyclohexylen-methylen-cyclohexylenrest ist; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylenrest, Phenylen-C₁-C₄-alkylenrest oder C₁-C₄-Alkylen-phenylen-C₁-C₄-alkylenrest ist,
B₂ ein aromatisches Brückenglied ist,
Y Wasserstoff, gegebenenfalls substituiertes C₁-C₁₂-Alkyl oder ein Rest der Benzol- oder Naphthalinreihe ist, und
m die Zahl 0 oder 1 ist,
mit der Massgabe, dass, falls m die Zahl 0 ist, der Rest Y eine faserreaktive Gruppe der Formel 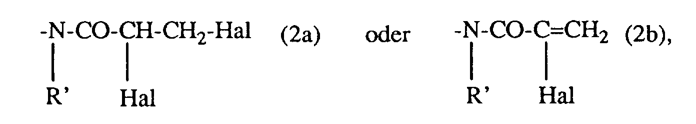 worin Hal Halogen und R' Wasserstoff oder C₁-C₄-Alkyl bedeutet, enthält.

2. Anthrachinonfarbstoffe gemäss Anspruch 1, worin
R₁, R₂, R₃ und R₄ Wasserstoff oder C₁-C₄-Alkyl sind und
R₅ Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl ist.

3. Anthrachinonfarbstoffe gemäss einem der Ansprüche 1 und 2, worin
B₁ gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest, Cyclohexylen-methylenrest oder Cyclohexylen-methylen-cyclohexylenrest ist; oder
ein gegebenenfalls im Phenylenring durch C₁-C₄-Alkyl, C₁-C₄-Alkoxy, Halogen oder Sulfo substituierter Methylen-phenylen-methylenrest ist.

4. Anthrachinonfarbstoffe gemäss einem der Ansprüche 1 bis 3, worin
B₁ gegebenenfalls durch Sauerstoff unterbrochenes C₂-C₁₂-Alkylen; oder ein gegebenenfalls im Cyclohexylenring durch C₁-C₄-Alkyl substituierter Methylen-cyclohexylenrest oder Cyclohexylen-methylenrest ist; oder ein Methylen-phenylen-methylenrest ist.

5. Anthrachinonfarbstoffe gemäss einem der Ansprüche 1 bis 4, worin
B₁ C₂-C₆-Alkylen ist.

6. Anthrachinonfarbstoffe gemäss einem der Ansprüche 1 bis 5, worin
B₂ gegebenenfalls durch C₁-C₄-Alkyl, C₁-C₄-Alkoxy, C₂-C₄-Alkanoylamino, Halogen, Carboxy oder Sulfo substituiertes Phenylen oder Naphthylen ist.

7. Anthrachinonfarbstoffe gemäss einem der Ansprüche 1 bis 6, worin
B₂ gegebenenfalls durch C₁-C₄-Alkyl, C₁-C₄-Alkoxy, Halogen oder Sulfo substituiertes Phenylen ist.

8. Anthrachinonfarbstoffe gemäss einem der Ansprüche 1 bis 7, worin
m die Zahl 1 ist und
Y Wasserstoff, gegebenenfalls durch Hydroxyl, Sulfo oder Sulfato substituiertes und mit Ausnahme von Methyl gegebenenfalls durch Sauerstoff unterbrochenes C₁-C₁₂-Alkyl; oder
Phenyl oder Naphthyl ist, wobei die Phenyl- und Naphthylreste durch C₁-C₄-Alkyl, C₁-C₄-Alkoxy, C₂-C₄-Alkanoylamino, Halogen, Carboxy oder Sulfo oder eine der faserreaktiven Gruppen der Formeln 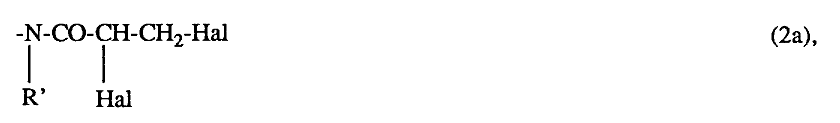 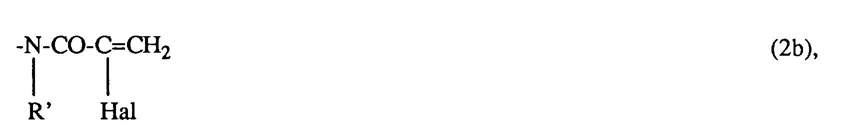
-SO₂-Z (2c), 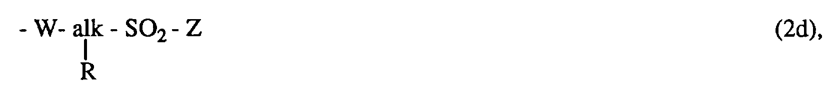
-W-alk-E-alk'-SO₂-Z (2e), 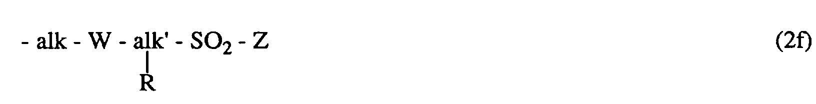
oder 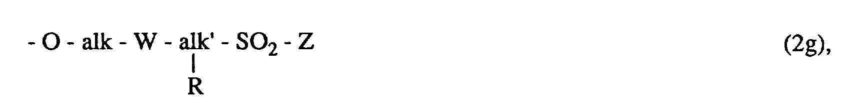
worin W eine Gruppe der Formel -SO₂-NR₆-, -CONR₆- oder -NR₆CO- ist,
R₆ Wasserstoff, unsubstituiertes oder durch Hydroxy, Sulfo, Sulfato, Carboxy oder Cyano substituiertes C₁-C₄-Alkyl,
R Wasserstoff, Hydroxy, Sulfo, Sulfato, Carboxy, Cyano, Halogen, C₁-C₄-Alkoxycarbonyl, C₁-C₄-Alkanoyloxy oder Carbamoyl ist,
R' Wasserstoff oder C₁-C₄-Alkyl bedeutet,
Z eine Gruppe der Formel -CH=CH₂ oder -CH₂-CH₂-U₁ und U₁ eine Abgangsgruppe ist,
Hal Halogen bedeutet,
E der Rest -O- oder -NR₇- und R₇ Wasserstoff oder C₁-C₄-Alkyl ist, und
alk und alk' unabhängig voneinander C₁-C₆-Alkylen bedeuten,
substituiert sein können; oder
ein Anthrachinonrest der Formel 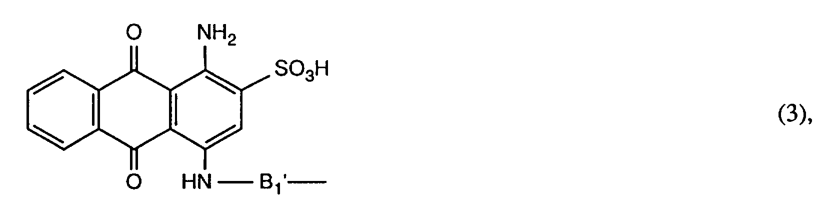 worin B₁' die in Anspruch 1 für B₁ angegebenen Bedeutungen hat; ist.

9. Anthrachinonfarbstoffe gemäss Anspruch 8, worin
R₁, R₂, R₃ und R₄ Wasserstoff oder C₁-C₄-Alkyl sind,
R₅ Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl ist,
B₁ gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest, Cyclohexylen-methylenrest oder Cyclohexylen-methylen-cyclohexylenrest ist; oder
ein gegebenenfalls im Phenylenring durch C₁-C₄-Alkyl, C₁-C₄-Alkoxy, Halogen oder Sulfo substituierter Methylen-phenylen-methylenrest ist,
B₂ gegebenenfalls durch C₁-C₄-Alkyl, C₁-C₄-Alkoxy, Halogen oder Sulfo substituiertes Phenylen ist, und
Y Wasserstoff, gegebenenfalls durch Hydroxyl, Sulfo oder Sulfato substituiertes und mit Ausnahme von Methyl gegebenenfalls durch Sauerstoff unterbrochenes C₁-C₈-Alkyl; oder
ein Anthrachinonrest der Formel (3), worin B₁' die oben für B₁ angegebenen Bedeutungen hat; oder
durch Sulfo substituiertes Naphthyl; oder
Phenyl ist, welches durch C₁-C₄-Alkyl, C₁-C₄-Alkoxy, Halogen oder Sulfo oder einen faserreaktiven Rest der Formeln (2a), (2b), (2c) oder (2d) substituiert sein kann, wobei W eine Gruppe der Formel -CO-NH-, R Wasserstoff und U₁ Sulfato oder Chlor ist.

10. Anthrachinonfarbstoffe gemäss Anspruch 9, worin
B₁ C₂-C₆-Alkylen und B₂ durch Sulfo substituiertes Phenylen ist.

11. Anthrachinonfarbstoffe gemäss einem der Ansprüche 1 bis 7, worin
m die Zahl 0 ist und
Y gegebenenfalls durch C₁-C₄-Alkyl, C₁-C₄-Alkoxy, C₂-C₄-Alkanoylamino, Halogen, Carboxy oder Sulfo substituiertes Phenyl oder Naphthyl ist, wobei die Phenyl- und Naphthylreste mindestens eine der faserreaktiven Gruppen der Formeln 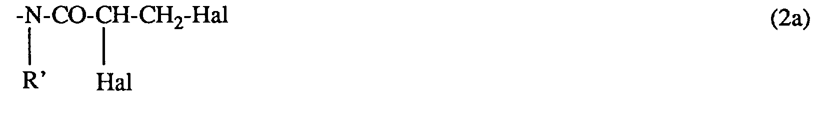 und 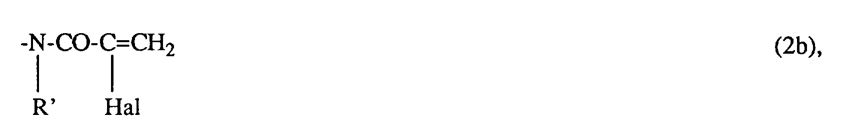 worin Hal Halogen und R' Wasserstoff oder C₁-C₄-Alkyl bedeutet, enthalten.

12. Anthrachinonfarbstoffe gemäss Anspruch 11, worin
R₁, R₂, R₃ und R₄ Wasserstoff oder C₁-C₄-Alkyl sind,
R₅ Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl ist,
B₁ gegebenenfalls durch Sauerstoff unterbrochenes C₂-C₁₂-Alkylen; oder
ein gegebenenfalls im Cyclohexylenring durch C₁-C₄-Alkyl substituierter Methylen-cyclohexylenrest, Cyclohexylen-methylenrest oder Cyclohexylen-methylen-cyclohexylenrest ist; oder
ein gegebenenfalls im Phenylenring durch C₁-C₄-Alkyl, C₁-C₄-Alkoxy, Halogen oder Sulfo substituierter Methylen-phenylen-methylenrest ist,
B₂ gegebenenfalls durch C₁-C₄-Alkyl, C₁-C₄-Alkoxy, Halogen oder Sulfo substituiertes Phenylen ist, und
Y gegebenenfalls durch C₁-C₄-Alkyl, C₁-C₄-Alkoxy, Halogen oder Sulfo substituiertes Phenyl ist, wobei der Phenylrest mindestens eine der faserreaktiven Gruppen der Formeln (2a) und (2b) enthält.

13. Anthrachinonfarbstoffe gemäss Anspruch 12, worin
B₁ C₂-C₆-Alkylen und B₂ durch Sulfo substituiertes Phenylen ist.

14. Verfahren zur Herstellung von Anthrachinonfarbstoffen gemäss Anspruch 1, dadurch gekennzeichnet, dass man Verbindungen der Formeln 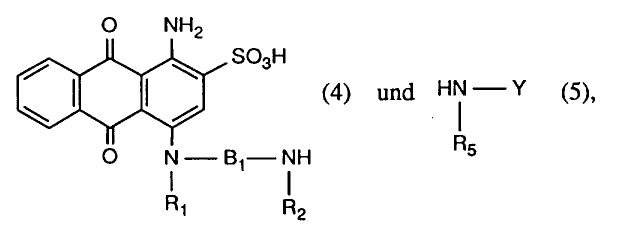 Cyanurfluorid oder Cyanurchlorid und gegebenenfalls eine Verbindung der Formel 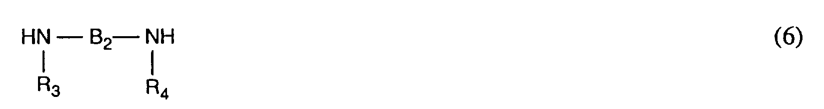 miteinander umsetzt und gegebenenfalls eine Umwandlungsreaktion anschliesst, wobei R₁, R₂, R₃, R₄, R₅, B₁, B₂ und Y die in Anspruch 1 angegebenen Bedeutungen haben.

15. Verwendung der Anthrachinonfarbstoffe gemäss einem der Ansprüche 1 bis 13 bzw. der gemäss Anspruch 14 erhaltenen Anthrachinonfarbstoffe zum Färben oder Bedrucken von hydroxylgruppenhaltigen oder stickstoffhaltigen Fasermaterialien.

16. Verwendung gemäss Anspruch 15 zum Färben oder Bedrucken von cellulosehaltigen Fasermaterialien oder natürlichen oder synthetischen Polyamidfasermaterialien.
